(19) Europäisches Patentamt
European Patent Office
Office européen des brevets

(11) EP 3 167 334 B1

(12) # EUROPÄISCHE PATENTSCHRIFT

(45) Veröffentlichungstag und Bekanntmachung des Hinweises auf die Patenterteilung:
**10.10.2018 Patentblatt 2018/41**

(21) Anmeldenummer: **15734209.8**

(22) Anmeldetag: **09.07.2015**

(51) Int Cl.:
***G02C 7/02*** *(2006.01)*

(86) Internationale Anmeldenummer:
**PCT/EP2015/065674**

(87) Internationale Veröffentlichungsnummer:
**WO 2016/005486 (14.01.2016 Gazette 2016/02)**

(54) **SATZ VON BRILLENGLASHALBFABRIKATEN UND VERFAHREN ZU DESSEN AUSLEGUNG, VERFAHREN UND VORRICHTUNG ZUR HERSTELLUNG VON BRILLENGLÄSERN SOWIE VERWENDUNG EINES SATZES VON HALBFABRIKATEN**

SET OF EYEGLASS-LENS SEMIFINISHED PRODUCTS AND METHOD FOR THE DESIGN OF SAID SET, METHOD AND DEVICE FOR PRODUCING EYEGLASS LENSES, AND USE OF A SET OF SEMIFINISHED PRODUCTS

ENSEMBLE DE VERRES DE LUNETTES SEMI-FINIS ET PROCÉDÉ DE CONCEPTION DE CELUI-CI, PROCÉDÉ ET DISPOSITIF DE FABRICATION DE VERRES DE LUNETTES ET UTILISATION D'UN ENSEMBLE DE VERRES SEMI-FINIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2014 DE 102014213393**

(43) Veröffentlichungstag der Anmeldung:
**17.05.2017 Patentblatt 2017/20**

(73) Patentinhaber: **Carl Zeiss Vision International GmbH**
**73430 Aalen (DE)**

(72) Erfinder:
- **MICHELS, Georg**
  **73430 Aalen (DE)**
- **KRATZER, Timo**
  **73434 Aalen (DE)**
- **NOWAK, Gerd**
  **73450 Neresheim (DE)**

(74) Vertreter: **Carl Zeiss AG - Patentabteilung**
**Carl-Zeiss-Strasse 22**
**73447 Oberkochen (DE)**

(56) Entgegenhaltungen:
**EP-A1- 2 028 527 DE-A1- 19 701 312**

- **Shamir: "Shamir Quick Reference Guide", , 6. Dezember 2013 (2013-12-06), Seiten 1-5, XP002744599, Gefunden im Internet: URL:http://www.shamiroptic.de/images/shamir.pdf [gefunden am 2015-09-16]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 167 334 B1

## Beschreibung

Die vorliegende Erfindung betrifft einen Satz von Halbfabrikaten zur Herstellung von Brillengläsern nach dem Oberbegriff des Patentanspruchs 1 und ein Verfahren zur Herstellung von Brillengläsern nach dem Oberbegriff des Patentanspruchs 7. Die Erfindung betrifft weiter eine Verwendung eines Satzes von Halbfabrikaten in einem Verfahren zur Herstellung von Brillengläsern nach dem Oberbegriff des Patentanspruchs 11. Die Erfindung betrifft weiter eine Vorrichtung zur Herstellung von Brillengläsern nach dem Oberbegriff des Patentanspruchs 12. Ferner betrifft die Erfindung ein Verfahren zur Auslegung eines Satzes von Halbfabrikaten zur Herstellung von Brillengläsern nach dem Oberbegriff des Patentanspruchs 13. Schließlich betrifft die Erfindung ein Computerprogramm mit Programmcode zur Durchführung aller Verfahrensschritte des Verfahrens zur Auslegung eines Satzes von Halbfabrikaten zur Herstellung von Brillengläsern der gattungsgemäßen Art sowie ein computerlesbares Speichermedium mit einem Computerprogramm mit Programmcode zur Durchführung aller Verfahrensschritte des Verfahrens zur Auslegung eines Satzes von Halbfabrikaten zur Herstellung von Brillengläsern der gattungsgemäßen Art.

Eine Brille ist üblicherweise eine vor den Augen getragene Konstruktion mit zumindest einem dem Schutz der Augen oder zur Korrektur von Fehlsichtigkeiten und Stellungsfehlern der Augen dienendem Brillenglas. Brillengläser zur Korrektur von Fehlsichtigkeiten werden daher auch als Korrekturgläser oder als optisch wirksame Brillengläser bezeichnet. Derartige Brillengläser können etwa Einstärkengläser oder Mehrstärkengläser, insbesondere Bifokalgläser, Trifokalgläser oder auch Gleitsichtgläser sein. Fehlsichtigkeiten können beispielhaft etwa Kurzsichtigkeit (Myopie), Fernsichtigkeit (Hyperopie), Stabsichtigkeit (Astigmatismus) sowie weitere normabweichende und/oder suboptimale Zustände des Sehsinns umfassen. Zu den Fehlsichtigkeiten gehört auch die Altersweitsichtigkeit (Presbyopie).

Korrekturgläser unterscheidet man in Plusgläser und Minusgläser. Ein Plusglas hat eine sammelnde und das betrachtete Objekt vergrößernde optische Wirkung. Ein Minusglas hat eine streuende und das betrachtete Objekt verkleinernde optische Wirkung.

Üblicherweise werden Brillengläser auftragsspezifisch nach den speziell auf den einzelnen Brillenträger abgestimmten Anforderungen hergestellt. Im allgemeinen erfolgt die Fertigung der Brillengläser durch Verwendung einer begrenzten Anzahl unterschiedlicher Typen von halbfertigen Brillenglasrohlingen, den sogenannten Halbfabrikaten, die der Brillenglashersteller auf Lager hält. Brillenglas-Halbfabrikate weisen genauso wie Brillenglas-Fertigfabrikate jeweils eine für die objektseitige und eine für die gegenüberliegende augenseitige Anordnung für einen Brillenträger bestimmte optische Flächen und eine diese beabstandende Fläche auf. Die für die Anordnung auf der Objektseite bestimmte optische Fläche wird Vorderfläche bezeichnet, die für die Anordnung auf der Augenseite bestimmte optische Fläche wird Rückfläche genannt. Die dazwischen liegende entweder unmittelbar eine Kante bildende oder mittelbar über eine Kantenfläche einendseitig an die Vorderfläche und andernendseitig an die Rückfläche angrenzende Fläche bezeichnet man als Zylinderrandfläche. Die Vorderfläche ist im allgemeinen konvex gekrümmt, die Rückfläche konkav.

Welche Form das Brillenglas erhalten muss, um die gewünschte optische Korrektur zu erhalten, wird maßgeblich von dessen Werkstoff bestimmt. Wichtigster Parameter ist hierbei der Brechungsindex des Werkstoffs. Während in der Vergangenheit Brillengläser vorwiegend aus mineralischen Gläsern, insbesondere Krongläsern (Abbe-Zahl > 55) und Flintgläsern (Abbe-Zahl < 50) hergestellt wurden, sind mittlerweile Brillengläser aus einer Vielzahl an organischen Materialien erhältlich. Derartige Grundmaterialien für organische Brillengläser werden unter den Handelsbezeichnungen CR 39, MR 8, MR 7, CR 330 sowie MR 174 angeboten. Eine Auswahl solcher Grundmaterialien findet sich auch in der Veröffentlichungsschrift EP 2692941 A1. Laufend werden andere Werkstoffe auf deren Eignung für organische Brillengläser getestet und entwickelt. Die folgende Tabelle 1 veranschaulicht Kenngrößen sowie Bezugsgrößen einer Auswahl an bekannten Grundmaterialien:

| Handels-name | Grundmaterial | Mittlerer Brechungsindex $n_e$ | Abbe-Zahl $v_e$ |
|---|---|---|---|
| CR 39<br>CR607<br>CR630 | Polyallyldiglycolcarbonat | 1.500 | 56 |
| Trivex | Polyharnstoff/Polyurethan | 1.530 | 45 |
| PC | Polycarbonat | 1.590 | 29 |
| MR 8 | Polythiourethan | 1.598 | 41 |
| MR 7 | Polythiourethan | 1.664 | 32 |
| MR 10 | Polythiourethan | 1.666 | 32 |
| MR 174 | Poly(episulfid) | 1.738 | 32 |

(fortgesetzt)

| Handels-name | Grundmaterial | Mittlerer Brechungsindex $n_e$ | Abbe-Zahl $v_e$ |
|---|---|---|---|
| | Mineral 1.5 | 1.525 | 58 |
| | Mineral 1.6 | 1.604 | 44 |

Derzeit werden eine große Anzahl an organischen Brillenglas-Halbfertigfabrikaten oder - Fertigfabrikaten mit sphärischen, rotationssymmetrisch asphärischen oder progressiven Vorderflächen in Massenfertigung in Urformen mit Vorder- und Rückflächenformschalen, die mittels eines Dichtrings einen Hohlraum bildend voneinander beabstandet sind, abgegossen, wie dies z.B. in den Dokumenten DE 3007572 C2, US 6,103,148 A oder JP 2008 191186 A beschrieben ist. Dies gilt für Grundmaterialien mit den Handelsbezeichnungen MR 7, MR 8, MR 10 sowie CR 39, CR 607, CR 630 und weitere. Bei den Grundmaterialien mit den Handelsbezeichnungen MR 7, MR 8 und MR 10 handelt es ich um Polythiourethane, die von der Firma Mitsui Chemicals vertrieben werden. Die Abkürzung "MR" steht dabei für Mitsui Resin. CR 39 oder Columbia Resin 39 ist die von der Firma Pittsburgh Plate Glass Industries (PPG Industries) gewählte Marke, unter der der Werkstoff Polydiethylenglycolbisallylcarbonat bzw. Polyallyldiglycolcarbonat (Abkürzung: PADC) vertrieben wird. Hierbei handelt es sich um einen höherbrechenden duroplastischen Polymerwerkstoff. CR 607 und CR 630 stammen ebenfalls von der Firma PPG. Die Materialien CR 607 und CR 630 werden z.B. für photochrome Anwendungen eingesetzt.

Halbfertigfabrikate oder Fertigfabrikate für Brillengläser aus Polycarbonat werden im Allgemeinen in Metallformen mittels Spritzgusstechnik erzeugt. Dieses Herstellverfahren ist z.B. in der EP 0955147 A1 beschrieben.

Mineralische Brillengläser werden regelmäßig durch maschinelle mechanisch abrasive Bearbeitung eines Rohlings erzeugt.

Die vorstehend beschriebenen Halbfertig- oder Fertigfabrikate werden häufig einem oder mehreren Veredelungsprozessen unterzogen. Insbesondere werden ein- oder beidseitig Funktionsschichten appliziert. Derartige Funktionsschichten sind Schichten, die die Brillengläser mit vorbestimmten und für den Brillenträger vorteilhaften Eigenschaften ausstatten, die die Brillengläser allein aufgrund der Eigenschaften des Grund- oder Trägermaterials, auf das die Funktionsschichten ggf. appliziert werden, und der Formgebung nicht hätten. Derartige vorteilhafte Eigenschaften sind neben optischen Eigenschaften wie z.B. Entspiegelung, Verspiegelung, Lichtpolarisierung, Färbung, Selbsttönung usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften.

Auftragsspezifische Rezeptbrillengläser, d.h. insbesondere individualisierte Einstärken- und Mehrstärkengläser, deren optische Eigenschaften wenigstens teilweise nicht vorauswählbar standardisiert sind, sondern in Bezug auf deren Maß und/oder deren Anordnung auf dem Brillenglas auf den Benutzer angepasst individuell berechnet und gefertigt werden, und im Besonderen Gleitsicht- bzw. Progressivgläser werden durch mechanische, insbesondere deformierende und/oder abrasive, Verfahren in ihre finale Form gebracht. Hierbei können die Außenformen rund, oval oder willkürlich, sogenannte Freiformen beschreibend, ausgebildet sein.

Eine Fläche eines halbfertigen Brillenglasrohlings bildet die finale Fläche des fertigen Brillenglases. Die andere Fläche wird derart bearbeitet, dass das optische System des fertigen Brillenglases der ophthalmischen Verordnung des Brillenträgers entspricht. Es ist in der Regel vorgesehen, dass die Vorderfläche die finale Vorderfläche des fertigen Brillenglases bildet. Es kann vorkommen, dass kleinere Bearbeitungen der finalen Vorderfläche vorgenommen werden, aber stets ohne dass ihre Krümmung verändert wird. Insbesondere ist es möglich, dass eine oder mehrere Funktionsschichten der vorstehend beschriebenen Art aufgebracht werden. Brillenglas-Halbfertigfabrikate sind demnach Linsenrohlinge mit nur einer optisch fertig bearbeiteten Fläche (vgl. Heinz Diepes, Rolf Blendowske "Optik und Technik der Brille", Optische Fachveröffentlichung GmbH, Heidelberg, 2002, Seite 560). Die vorliegende Erfindung bezieht sich -wie im Folgenden noch einmal verdeutlicht wird- ausschließlich auf Brillenglashalbfabrikate mit sphärischer oder rotationssymmetrisch asphärischer Vorderfläche und entsprechend der ophthalmischen Verordnung des Brillenträgers zu bearbeitender Rückfläche.

Im Rahmen der vorliegenden Erfindung und gemäß Abschnitt 11.3 der DIN-Norm EN ISO 13666:2012 (Augenoptik - Brillengläser Vokabular), wird der nominale Flächenbrechwert oder die nominale Krümmung der Vorderfläche eines Brillenglases Basiskurve genannt Alternativ wird anstelle des Ausdrucks Basiskurve auch der Begriff Grundkurve verwendet. Wird der nominale Flächenbrechwert angegeben, so sollte die bei der Messung angenommene Brechzahl angegeben werden. Anstelle des Flächenbrechwertes können auch die nominale Krümmung oder der nominale Krümmungsradius bei entsprechender Kenntlichmachung angegeben werden. Obwohl die DIN EN ISO 13666:2012 im Hinblick auf die Bezeichnung als Basiskurve ausschließlich auf die Vorderfläche eines Einstärkenglases Bezug nimmt, wird im Folgenden generell der nominale Flächenbrechwert im Zentrum einer rotationssymmetrischen Vorderfläche eines Brillenglashalbfabrikats, welches nicht nur zur Herstellung von Einstärkengläsern, sondern auch zur Herstellung von Mehrstärkengläsern geeignet ist, als Basiskurve bezeichnet. Die nominale Krümmung entspricht bei rotationssymmetrisch asphärischen Flächen der Scheitelkrümmung. Der nominale Krümmungsradius entspricht bei rotationssymmetrisch asphärischen Flächen dem Scheitelradius.

Die Basiskurven werden in der Regel unter Bezugnahme auf einen Standard-Brechungsindex von 1,53 angegeben. Andere Brechungsindizes können jedoch auch verwendet werden, um Basiskurven anzugeben.

Die Brillenglashersteller produzieren typischerweise eine Reihe von halbfertigen Brillenglasrohlingen, die jeweils ihre eigene Basiskurve aufweisen. Diese "Hasiskurvenserie" ist ein Satz von Halbfabrikaten, deren nominale Vorderflächenkrummungen und -brechwerte schrittweise zunehmen (z.B. +0,50 D, +2,00 D, +4,00 D und so weiter), wie dies z.B. in Shamir: "Shamir Quick Reference Guide", 6. Dezember 2013, Seiten 1 bis 5; am 16.9.2015 im Internet: URL: http://www.shamiroptic.dc/images/shamir.pdf gefunden, beschrieben ist.

Der nominale Flächenbrechwert oder die nominale Krümmung wird für Kennzeichnungszwecke verwendet und wird auch als nominale Grundkurve bezeichnet. Für die Berechnung wird der tatsächliche Flächenbrechwert oder die tatsächliche Krümmung verwendet. Er/Sie wird auch als tatsächliche Grundkurve bezeichnet. In den nachfolgenden Ausführungen wird auf den tatsächlichen, also den tatsächlich vorhandenen Flächenbrechwert, die tatsächlich vorhandene Krümmung und den tatsächlich vorhandenen Krümmungsradius der Flächen - unter Berücksichtigung der üblichen Fertigungs- und Meßtoleranzen, Bezug genommen, es sei denn, es wird ausdrücklich auf die nominalen Werte verwiesen.

Die Vorderfläche eines Halbfabrikats einer Basiskurvenserie dient als Ausgangspunkt, um die optische Oberfläche der Rückfläche zu berechnen und nach der das endgültige Brillenglas nach der Verordnung eines Brillenträgers hergestellt wird.

Die Vorderflächen der halbfertigen Linsenrohlinge einer Basiskurvenserie können grundsätzlich sowohl rotationssymmetrische Flächen, wie z.B. Kugeln (Sphären) oder rotationssymmetrische asphärische Oberflächen, als auch nicht-rotationssymmetrische Flächen, wie z.B. torische Flächen oder auch Gleitsichtflächen sein. Letztere können auch ohne jegliche Symmetrieeigenschaft ausgebildet sein. In diesem Fall werden sie als Freiformflächen bezeichnet. Im Rahmen der vorliegenden Erfindung sind ausschließlich Brillenglashalbfabrikate mit rotationssymmetrischen, also sphärischen oder rotationssymmetrisch asphärischen Vorderflächen relevant.

Progressive Additionslinsen (PALs) können zum Beispiel nach Auswahl eines halbfertigen Linsenrohlings aus einem Satz von Halbfabrikaten mit unterschiedlichen sphärischen oder rotationssymmetrisch asphärischen Vorderflächen, durch ausschließliche maschinelle Bearbeitung der Rückfläche unter Berücksichtigung der individuell erforderlichen Addition, der Rezeptwerte und gegebenenfalls weiterer individueller Anforderungen des Brillenträgers hergestellt werden, wie dies z.B. in der EP 0857993 A2, der WO 2004/019243 A1 oder der EP 2028527 B1 beschrieben ist. Die Rückfläche besitzt keine Punkt- und/oder Achsensymmetrie und hat aber multifokale Eigenschaften.

Jede Basiskurve in einer Reihe wird üblicherweise für die Herstellung einer Mehrzahl von Verordnungen verwendet, die vom Hersteller des Halbfabrikatsatzes empfohlen werden. Die Hersteller stellen sogenannte Basiskurven-Auswahltabellen (engl.: base-curve selection charts) bereit, aus denen die unterschiedlichen Verordnungen zu entnehmen sind, für die die Verwendung der jeweiligen Basiskurve in der Serie empfohlen wird.

Ein Beispiel einer typischen Basiskurven-Auswahltabelle ist der Patentschrift US 6,948,816 zu entnehmen. Die in den Figuren 23 A bis C dieser Patentschrift gezeigte Basiskurvenreihe besteht aus fünf Basiskurven. Die Auswahltabelle zeigt die vom Hersteller empfohlene Basiskurve entsprechend einer gegebenen Verordnung als Funktion der sphärischen Wirkung und der Zylinderwirkung zur Korrektur einer astigmatischen Fehlsichtigkeit. Die gezeigte Auswahltabelle bezieht sich auf Gleitsichtgläser (PALs), bei denen sich die optische Wirkung zwischen Fernteil und Nahteil ändert. Die gleiche Art einer Auswahltabelle wird im Allgemeinen für jede Art von Brillengläsern, wie beispielsweise (sphärische und/oder torische) Einstärkengläser, Bifokalgläser, asphärische Gläser und PALs, verwendet.

Zwei weitere Beispiele für Basiskurven-Auswahltabellen entnimmt man den Figuren 2 und 3 der EP 2028527 B1. Die Basiskurvenreihe nach der Figur 2 besteht aus acht Basiskurven, die mit den Ziffern "1" bis "8" gekennzeichnet sind und die Basiskurvenreihe nach der Figur 3 umfasst vierzehn Basiskurven, die mit den Ziffern "1" bis "14" bezeichnet sind. Die nominalen Brechwerte der vierzehn sphärischen Basiskurven der Basiskurvenreihe nach der Figur 3 steigt in den Schritten 0,75; 1,00; 1,50; 2,00; 2,75; 3,25; 3,75; 4,25; 5,25; 5,75; 6,25; 6,50; 7,50; 8,50 von 0,75 D auf 8,50 D an.

Der EP 2028527 B1 entnimmt man, dass der allgemeine Trend darin besteht, die Zahl der unterschiedlichen Basiskurven einer Basiskurvenserie zu begrenzen, um die Zahl der Formschalen, die Kosten für die Lagerhaltung und die Anforderungen an die Lagerhaltung zu minimieren. Eine Standardbasiskurvenserie umfasst daher höchstens zwanzig Basiskurven (vgl. EP 2028527 B1, Abschnitt [0013]), wie zum Beispiel zehn (vgl. EP 0857993 A2, Seite 5, Zeilen 38 bis 51) oder fünf Basiskurven (US 6,948,816, Figuren 23 A bis C).

Die in den beiden vorstehenden Abschnitten angegebenen Dokumente beschäftigen sich allesamt mit dem Thema, die Basiskurven einer Basiskurvenserie für Brillengläser aus einem vorgegebenen Grundmaterial zu optimieren. Die Autoren dieser Dokumente gehen dabei vermutlich von der Fertigung bei den großen Brillenglasherstellern aus.

Der eingangs genannten WO 2004/019243 A1 entnimmt man, dass es wünschenswert ist, dass insbesondere die vorstehend beschriebenen individuellen Gleitsichtbrillengläser nicht nur bei einigen wenigen Brillenglasherstellern hergestellt werden können, sondern auch dezentral bei Großhandelsbetrieben, Großlabors und dergleichen, erfolgen kann, wie sie heutzutage in vielen Märkten tätig sind.

Die Aufgabe der Erfindung besteht daher darin, einen Satz von Brillenglashalbfabrikaten, ein Verfahren zur Herstellung von Brillengläsern, eine Verwendung eines Satzes von Halbfabrikaten in einem Verfahren zur Herstellung von Brillengläsern, eine Vorrichtung zur Herstellung von Brillengläsern sowie ein Verfahren zur Auslegung eines Satzes von Halbfabrikaten zur Herstellung von Brillengläsern mit einem entsprechenden Computerprogramm mit Programmcode zur Durchführung aller Verfahrensschritte dieses Verfahrens sowie mit einem entsprechenden computerlesbaren Speichermedium mit einem Computerprogramm mit Programmcode zur Durchführung aller Verfahrensschritte dieses Verfahrens zur Auslegung eines Satzes von Halbfabrikaten bereitzustellen, die besonders auf die Bedürfnisse einer dezentralen Fertigung von Brillengläsern zugeschnitten sind.

Diese Aufgabe wird durch einen Satz von Halbfabrikaten zur Herstellung von Brillengläsern nach dem Patentanspruch 1, ein Verfahren zur Herstellung von Brillengläsern nach dem Patentanspruch 7, eine Verwendung eines Satzes von Halbfabrikaten in einem Verfahren zur Herstellung von Brillengläsern nach dem Patentanspruch 11, eine Vorrichtung zur Herstellung von Brillengläsern nach dem Patentanspruch 12 sowie ein Verfahren zur Auslegung eines Satzes von Halbfabrikaten zur Herstellung von Brillengläsern nach dem Patentanspruch 13 gelöst. Vorteilhafte Ausführungen und Weiterbildungen der Erfindung sind Gegenstand der Unteransprüche.

Die Erfindung basiert auf der Vermutung, dass in naher Zukunft eine Vielzahl an Fertigungsstätten für Brillengläser existieren werden, die entsprechend der Kombination der Lehren der EP 0 857 993 A2 und der WO 2004/019243 A1 Brillenglashalbfabrikate mit jeweils vorgefertigter sphärischer oder rotationssymmetrisch asphärischer Vorderfläche ggf. unterschiedlicher Hersteller beziehen, das Design der Rückfläche auf den jeweiligen Benutzer angepasst berechnen oder berechnen lassen und die Rückfläche entsprechend der Berechnung mit Maschinen der in der DE 195 38 274 A1 beschriebenen Art fertigen.

Die Fertigungsmaschinen in diesen Fertigungsstätten bedürfen zur wirtschaftlichen Herstellung von Brillenlinsen einer gewissen Standardisierung. Die Erfindung basiert auf dem Gedanken, die Zahl der zu verarbeitenden Brillenglashalbfabrikattypen insgesamt zu reduzieren. Die grundlegende Idee der Erfindung besteht darin, ausschließlich Halbfabrikate mit einer eingeschränkten Anzahl an Vorderflächen(teil)geometrien bereitzustellen und zwar unabhängig davon, welche Brechzahl das verarbeitete Brillenglasgrundmaterial besitzt. Damit ist es möglich, die Zahl der Aufnahmewerkzeuge zu reduzieren, die das jeweilige Halbfabrikat halten, während die Rückseitenbearbeitung erfolgt, da gleichartig geformte Halbfabrikate mit demselben Werkzeug aufgenommen werden können. Eine Begrenzung der Zahl der Aufnahmewerkzeuge bietet in entsprechendem Maße die Möglichkeit der Standardisierung.

Ausgehend von einem Satz von Brillenglashalbfabrikaten, die jeweils eine Vorderfläche mit sphärischer oder rotationssymmetrisch asphärischer, konvexer Form besitzen, welche wenigstens ein körperliches Formmerkmal mit einem zugehörigen Formmaß aufweist, umfassend

- eine erste Serie von Brillenglashalbfabrikaten aus einem Grundmaterial mit einem ersten mittleren Brechungsindex, wobei die erste Serie paarweise unterschiedliche Typen von Brillenglashalbfabrikaten aufweist, die sich in dem Formmaß des wenigstens einen körperlichen Formmerkmals der Form ihrer Vorderfläche unterscheiden, wobei wenigstens drei unterschiedliche Typen der paarweise unterschiedlichen Typen einen auf einen Standardbrechungsindex von 1,53 bezogenen und im Falle einer rotationssymmetrisch asphärischen Form der Vorderfläche in deren Symmetriezentrum bestimmten tatsächlichen Flächenbrechwert ihrer Vorderfläche zwischen 3,2 D und 6,7 D aufweisen,

- eine zweite Serie von Brillenglashalbfabrikaten aus einem Grundmaterial mit einem zweiten von dem ersten mittleren Brechungsindex unterschiedlichen mittleren Brechungsindex, wobei die zweite Serie paarweise unterschiedliche Typen von Brillenglashalbfabrikaten aufweist, die sich in dem Formmaß des wenigstens einen körperlichen Formmerkmals der Form ihrer Vorderfläche unterscheiden,

- eine dritte Serie von Brillenglashalbfabrikaten aus einem Grundmaterial mit einem dritten von dem ersten mittleren Brechungsindex und dem zweiten mittleren Brechungsindex unterschiedlichen mittleren Brechungsindex, wobei die dritte Serie paarweise unterschiedliche Typen von Brillenglashalbfabrikaten aufweist, die sich in dem Formmaß des wenigstens einen körperlichen Formmerkmals der Form ihrer Vorderfläche unterscheiden,

sieht die Erfindung vor, dass

- wenigstens drei unterschiedliche Typen der paarweise unterschiedlichen Typen der zweiten Serie einen auf einen Standardbrechungsindex von 1,53 bezogenen tatsächlichen Flächenbrechwert ihrer Vorderfläche zwischen 3,2 D und 6,7 D aufweisen,

- wenigstens drei unterschiedliche Typen der paarweise unterschiedlichen Typen der dritten Serie einen auf einen Standardbrechungsindex von 1,53 bezogenen tatsächlichen Flächenbrechwert ihrer Vorderfläche zwischen 3,2 D und 6,7 D aufweisen, und

- die Formmaße des wenigstens einen körperlichen Formmerkmals der Form der Vorderflächen der wenigstens drei unterschiedlichen Typen der ersten Serie und die Formnaße des wenigstens einen körperlichen Formmerkmals der Form der Vordedlächen der wenigstens drei unterschiedlichen Typen der zweiten Serie und die Formmaße des wenigstens einen körperlichen Formmerkmals der Form der Vorderflächen der wenigstens drei unterschiedlichen Typen der dritten Serie identisch sind.

Anders ausgedrückt besteht der erfindungsgemäße Satz von Brillenglashalbfabrikaten aus wenigstens drei Serien von Brillenglashalbfabrikaten mit sphärischen oder rotationssymmetrisch asphärischen Vorderflächen. Die Serien von Brillenglashalbfabrikaten unterscheiden sich paarweise in ihrem jeweiligen Grundmaterial. Die Grundmaterialen weisen unterschiedliche mittlere Brechungsindizes auf. Jede der Serien umfasst innerhalb eines auf einen Standardbrechungsindex von 1,53 bezogenen tatsächlichen Flächenbrechwertbereiches ihrer Vorderfläche zwischen 3,2 D und 6,7 D paarweise unterschiedliche Typen von Brillenglashalbfabrikaten, deren Vorderflächenformen in irgend einer Weise unterschiedlich ausgebildet sind. Innerhalb dieses auf den Standardbrechungsindex von 1,53 bezogenen tatsächlichen Flächenbrechwertbereiches ihrer Vorderfläche zwischen 3,2 D und 6,7 D sind die Vorderflächenformen von wenigstens drei dieser Typen auf einer (vorzugsweise das Symmetriezentrum der Vorderfläche umfassenden) Teilfläche (die vorzugsweise mehr als 40 %, weiter vorzugsweise mehr als 50 % der gesamten Vorderfläche umfasst) oder seiner gesamten Vorderfläche für alle der wenigstens drei Serien identisch.

Erfindungsgemäß ist bzw. sind das wenigstens eine Formmerkmal (R, R1, R2, ... R20, Dn)

a) die tatsächliche Krümmung und/oder
b) der tatsächliche Krümmungsradius und/oder
c) die Scheitelkrümmung (ρ) des Kegelschnitts des Korrekturpolynoms des in der DIN ISO 10110 definierten aus der Summe eines Kegelschnitts und eines Korrekturpolynoms bestehenden asphärischen Flächenschnitts der Formel

$$z(r) = \frac{\rho r^2}{1 + \sqrt{1 - (1+k)(\rho r)^2}} + A_4 r^4 + A_6 r^6 + \ldots$$

wobei z die Pfeilhöhe, r die Einfallshöhe, ρ die Scheitelkrümmung und k die konische Konstante des Kegelschnitts sowie A4, A6, ... die Koeffizienten des Korrekturpolynoms sind.

Es wird darauf hingewiesen, dass es grundsätzlich möglich ist, dass die Serien sowohl Brillenglashalbfabrikate mit rotationssymmetrisch asphärischen Vorderflächen als auch Brillenglashalbfabrikate mit sphärischen Vorderflächen umfassen. Es hat sich allerdings in der Praxis gezeigt, dass aus fertigungstechnischen Gründen bevorzugt Serien eingesetzt werden, die ausschließlich Halbfabrikate mit rein sphärischen Vorderflächen enthalten. Alternativ ist es ebenfalls möglich Serien einzusetzen, die ausschließlich Halbfabrikate mit rein rotationssymmetrisch asphärischen Vorderflächen enthalten.

Die eingangs gestellte Aufgabe wird durch diesen Satz an Brillenglashalbfabrikaten vollumfänglich gelöst.

In einer Ausgestaltung der Erfindung ist vorgesehen, dass sich der erste mittlere Brechungsindex und der zweite mittlere Brechungsindex und der dritte mittlere Brechungsindex paarweise um wenigstens 0,04 unterscheiden. Damit ist sichergestellt, dass sowohl Brillenglashalbfabrikatserien aus niedrigbrechenden Grundmaterialien als auch Serien von Brillenglashalbfabrikaten aus hochbrechenden Grundmaterialien in erfindungsgemäßer Weise ausgestaltet sind, wodurch sich der mögliche Lieferumfang bestimmt und ggf. erweitert.

Es ist vorgesehen, dass sich die mittleren Brechungsindizes der wenigstens drei Grundmaterialien um wenigstens 0,05 oder gar um wenigstens 0,06 unterscheiden. Je größer der Unterschied der mittleren Brechungsindizes der wenigstens drei Grundmaterialien ist, desto größer ist die Möglichkeit der Standardisierung der für die während der Bearbeitung erforderlichen Aufnahmewerkzeuge zur Aufnahme der Vorderflächen der Brillenglashalbfabrikate.

Eine besonders vorteilhafte Variante besteht darin, dass das Grundmaterial der ersten Serie an Brillenglashalbfabrikaten CR 39, das Grundmaterial der zweite Serie an Brillenglashalbfabrikaten MR 8 und das Grundmaterial der dritten Serie an Brillenglashalbfabrikaten MR 7 ist. Eine Alternativvariante besteht darin, dass das Grundmaterial der ersten Serie an Brillenglashalbfabrikaten CR 39, das Grundmaterial der zweite Serie an Brillenglashalbfabrikaten MR 8 und das Grundmaterial der dritten Serie an Brillenglashalbfabrikaten MR 174 ist. Eine weitere vorteilhafte Variante besteht darin, dass Grundmaterial der ersten Serie an Brillenglashalbfabrikaten CR 39, das Grundmaterial der zweite Serie an Brillenglashalbfabrikaten Polycarbonat und das Grundmaterial der dritten Serie an Brillenglashalbfabrikaten MR 8 ist. Schließlich ist bei einer anderen bevorzugten Variante das Grundmaterial der ersten Serie an Brillenglashalbfabrikaten CR 39, das Grundmaterial der zweiten Serie an Brillenglashalbfabrikaten Polycarbonat und das Grundmaterial der dritten Serie an Brillenglashalbfabrikaten MR 174.

Aus fertigungstechnischer Sicht ist es günstig, die Gesamtzahl unterschiedlicher Vorderflächengeometrien über alle Serien an Brillenglashalbfabrikaten hinweg möglichst klein zu halten. Über einen Basiskurvenlieferbereich mit einem auf einen Standardbrechungsindex von 1,53 bezogenen tatsächlichen Flächenbrechwert ihrer Vorderfläche von z.B. zwischen 0,5 D und 9,6 D wären etwa fünf unterschiedliche Halbfabrikattypen wünschenswert, so dass auf den vorstehend angegebenen Bereich zwischen 3,2 D und 6,7 D die vorstehend angegebene Mindestzahl von drei Typen entfielen. Aus optischer Sicht ist es günstig, die Gesamtzahl unterschiedlicher Vorderflächengeometrien groß zu machen. Über einen Basiskurvenlieferbereich mit einem auf einen Standardbrechungsindex von 1,53 bezogenen tatsächlichen Flächenbrechwert ihrer Vorderfläche von z.B. zwischen 0,5 D und 9,6 D wären etwa 20 unterschiedliche Halbfabrikattypen wünschenswert, so dass auf den vorstehend angegebenen Bereich zwischen 3,2 D und 6,7 D etwa zehn bis dreizehn Typen entfielen.

Ein Kompromiss stellt ein Satz von Brillenglashalbfabrikaten dar, bei dem

- wenigstens vier, vorzugsweise wenigstens fünf, unterschiedliche Typen der paarweise unterschiedlichen Typen der ersten Serie, die sich in dem Formmaß des wenigstens einen körperlichen Formmerkmals der Form ihrer Vorderfläche unterscheiden, einen auf einen Standardbrechungsindex von 1,53 bezogenen tatsächlichen Flächenbrechwert ihrer Vorderfläche zwischen 3,2 D und 6,7 D aufweisen,

- wenigstens vier, vorzugsweise wenigstens fünf, unterschiedliche Typen der paarweise unterschiedlichen Typen der zweiten Serie, die sich in dem Formmaß des wenigstens einen körperlichen Formmerkmals der Form ihrer Vorderfläche unterscheiden, einen auf einen Standardbrechungsindex von 1,53 bezogenen tatsächlichen Flächenbrechwert ihrer Vorderfläche zwischen 3,2 D und 6,7 D aufweisen,

- wenigstens vier, vorzugsweise wenigstens fünf, unterschiedliche Typen der paarweise unterschiedlichen Typen der dritten Serie, die sich in dem Formmaß des wenigstens einen körperlichen Formmerkmals der Form ihrer Vorderfläche unterscheiden, einen auf einen Standardbrechungsindex von 1,53 bezogenen tatsächlichen Flächenbrechwert ihrer Vorderfläche zwischen 3,2 D und 6,7 D aufweisen,

- die Formmaße des wenigstens einen körperlichen Formmerkmals der Form der Vorderflächen der wenigstens vier. vorzugsweise wenigstens fünf, unterschiedlichen Typen der ersten Serie und die Formmaße des wenigstens einen körperlichen Formmerkmals der Form der Vorderflächen der wenigstens vier, vorzugsweise wenigstens fünf, unterschiedlichen Typen der zweiten Serie und die Formmaße des wenigstens einen körperlichen Formmerkmals der Form der Vorderflächen der wenigstens vier, vorzugsweise wenigstens fünf, unterschiedlichen Typen der dritten Serie identisch sind.

Um einen Lieferbereich für Halbfabrikate mit einem auf einen Standardbrechungsindex von 1,53 bezogenen tatsächlichen Flächenbrechwert ihrer Vorderflächen von z.B. zwischen 0,5 D und 9,6 D abzudecken, ergeben sich dann etwa 13 unterschiedliche Halbfabrikattypen.

Es ist günstig, die Stufung der Halbfabrikate innerhalb einer Serie möglichst einheitlich zu gestalten, um über einen möglichst großen Lieferbereich eine einheitliche optische Qualität der fertigen Brillengläser sicherzustellen. Dies ist im Allgemeinen nur innerhalb gewisser Grenzen möglich. Die Erfindung sieht daher in einer besonders vorteilhaften Ausführung vor, dass die erste Sene und die zweite Serie und die dritte Serie jeweils Typen von Brillenglashalbfabrikaten aufweisen, deren Vorderflächen ein Formmerkmal mit identischen Formmaßen aufweisen, und dass die Differenz zwischen jeweils einem der identischen Formmaße oder dessen Kehrwert zum jeweiligen nächstgrößeren identischen Formmaß oder dessen Kehrwert innerhalb einer Varianz von 20 %, vorzugsweise von 10 %, höchst vorzugsweise von 5 % gleich groß ist.

In Fortführung des obigen Gedankens der einheitlichen Stufung der Halbfabrikate innerhalb einer Serie sieht eine Variante der Erfindung vor, dass das wenigstens eine Formmerkmal eine tatsächliche Flächenbrechkraft und dass das zugehörige Formmaß der zugehörige auf einen Standardbrechungsindex von 1,53 bezogene tatsächliche Flächenbrechwert ist, so dass die erste Serie und die zweite Serie und die dritte Serie jeweils Typen von Brillenglashalbfabrikaten aufweisen, deren Vorderflächen eine tatsächliche Flächenbrechkraft mit identischen auf einen Standardbrechungsindex von 1,53 bezogenen tatsächlichen Flächenhrechwerten aufweisen, und dass die Differenz zwischen einem der identischen auf den Standardbrechungsindex von 1,53 bezogenen tatsächlichen Flächenbrechwert zum nächstgrößeren identischen auf den Standardbrechungsindex. von 1,53 bezogenen tatsächlichen Flächenbrechwert kleiner als 2,5 D ist. Der Grenzwert von 2,5 D trägt dem Erfordernis einer hinreichenden optischen Qualität des Endprodukts über den oben angegebenen Lieferbereich Rechnung, unter der Annahme, dass keine weiteren Brillenglashalbfabrikate gegenüber dem erfindungsgemäßen abweichenden Typs eingesetzt werden.

In aller Regel lässt sich die Qualität des Endprodukts erhöhen, wenn dieser vorstehend genannte Differenzwert kleiner als 2,3 D, weiter vorzugsweise kleiner als 1,5 D, noch weiter vorzugsweise kleiner als 1,0 D gewählt wird. Ein Höchstwert von etwa 0,8 D hat sich als günstig herausgestellt, wenn 13 unterschiedliche Halbfabrikattypen verwendet werden, um einen Lieferbereich für Halbfabrikate mit einem auf einen Standardbrechungsindex von 1,53 bezogenen tatsächlichen Flächenbrechwert ihrer Vorderflächen von z.B. zwischen 0,5 D und 9,6 D abzudecken.

Wie vorstehend bereits ausgeführt wurde, stellt die wünschenswerte Anzahl unterschiedlicher Brillenglashalbfabrikattypen innerhalb einer Serie einen Kompromiss zwischen fertigungstechnischen und optischen Anforderungen dar. Weiterhin ist der Lieferbereich maßgeblich für die Gesamtzahl der unterschiedlichen Brillenglashalbfabrikattypen.

Ein Brillenglashalbfabrikatesatz, der die vorstehenden Randbedingungen gleichermaßen berücksichtigt und den die Erfinder als optimal ansehen ist derart ausgestaltet, dass

- wenigstens zehn, vorzugsweise wenigstens elf, weiter vorzugsweise wenigstens zwölf, höchst vorzugsweise wenigstens dreizehn unterschiedliche Typen der paarweise unterschiedlichen Typen der ersten Serie, die sich in dem Formmaß des wenigstens einen körperlichen Formmerkmals der Form ihrer Vorderfläche unterscheiden, einen auf einen Standardbrechungsindex von 1,53 bezogenen tatsächlichen Flächenbrechwert ihrer Vorderfläche zwischen 0,5 D und 9,60 D aufweisen, und dass

- wenigstens zehn, vorzugsweise wenigstens elf, weiter vorzugsweise wenigstens zwölf, höchst vorzugsweise wenigstens dreizehn unterschiedliche Typen der paarweise unterschiedlichen Typen der zweiten Serie, die sich in dem Formmaß des wenigstens einen körperlichen Formmerkmals der Form ihrer Vorderfläche unterscheiden, einen auf einen Standardbrechungsindex von 1,53 bezogenen tatsächlichen Flächenbrechwert ihrer Vorderfläche zwischen 0,5 D und 9,60 D aufweisen,

- wenigstens zehn, vorzugsweise wenigstens elf, weiter vorzugsweise wenigstens zwölf, höchst vorzugsweise wenigstens dreizehn unterschiedliche Typen der paarweise unterschiedlichen Typen der dritten Serie, die sich in dem Formmaß des wenigstens einen körperlichen Formmerkmals der Form ihrer Vorderfläche unterscheiden, einen auf einen Standardbrechungsindex von 1,53 bezogenen tatsächlichen Flächenbrechwert ihrer Vorderfläche zwischen 0,5 D und 9,60 D aufweisen,

- die Formmaße des wenigstens einen körperlichen Formmerkmals der Form der Vorderflächen der wenigstens zehn, vorzugsweise wenigstens elf, weiter vorzugsweise wenigstens zwölf, höchst vorzugsweise wenigstens dreizehn unterschiedlichen Typen der ersten Serie und die Formmaße des wenigstens einen körperlichen Formmerkmals der Form der Vorderflächen der wenigstens zehn, vorzugsweise wenigstens elf, weiter vorzugsweise wenigstens zwölf, höchst vorzugsweise wenigstens dreizehn unterschiedlichen Typen der zweiten Serie und die Formmaße des wenigstens einen körperlichen Formmerkmals der Form der Vorderflächen der wenigstens zehn, vorzugsweise wenigstens elf, weiter vorzugsweise wenigstens zwölf, höchst vorzugsweise wenigstens dreizehn unterschiedlichen Typen der dritten Serie identisch sind.

Das erfindungsgemäße Verfahren zur Herstellung von Brillengläsern umfasst die Schritte:

a) Bereitstellen eines Satzes von Brillenglashalbfabrikaten, die jeweils eine Rückfläche und eine Vorderfläche mit sphärischer oder rotationssymmetrisch asphärischer, konvexer Form besitzen, welche wenigstens ein körperliches Formmerkmal mit einem zugehörigen Formmaß aufweist, umfassend

- eine erste Serie von Brillenglashalbfabrikaten aus einem Grundmaterial mit einem ersten mittleren Brechungsindex, wobei die erste Serie paarweise unterschiedliche Typen von Brillenglashalbfabrikaten aufweist, die sich in dem Formmaß des wenigstens einen körperlichen Formmerkmals der Form ihrer Vorderfläche unterscheiden, wobei wenigstens drei unterschiedliche Typen der paarweise unterschiedlichen Typen einen auf einen Standardbrechungsindex von 1,53 bezogenen und im Falle einer rotationssymmetrisch asphärischen Form der Vorderfläche in deren Symmetriezentrum bestimmten tatsächlichen Flächenbrechwert ihrer Vorderfläche zwischen 3,2 D und 6,7 D aufweisen,

- eine zweite Serie von Brillenglashalbfabrikaten aus einem Grundmaterial mit einem zweiten von dem ersten mittleren Brechungsindex unterschiedlichen mittleren Brechungsindex, wobei die zweite Serie paarweise unterschiedliche Typen von Brillenglashalbfabrikaten aufweist, die sich in dem Formmaß des wenigstens einen körperlichen Formmerkmals der Form ihrer Vorderfläche unterscheiden,

- eine dritte Serie von Brillenglashalbfabrikaten aus einem Grundmaterial mit einem dritten von dem ersten mittleren Brechungsindex und dem zweiten mittleren Brechungsindex unterschiedlichen mittleren Brechungsindex, wobei die dritte Serie paarweise unterschiedliche Typen von Brillenglashalbfabrikaten aufweist, die sich in dem Formmaß des wenigstens einen körperlichen Formmerkmals der Form ihrer Vorderfläche unterscheiden, wobei

- wenigstens drei unterschiedliche Typen der paarweise unterschiedlichen Typen der zweiten Serie einen auf einen Standardbrechungsindex von 1,53 bezogenen tatsächlichen Flächenbrechwert ihrer Vorderfläche zwischen 3,2 D und 6,7 D aufweisen,

- wenigstens drei unterschiedliche Typen der paarweise unterschiedlichen Typen der dritten Serie einen auf einen Standardbrechungsindex von 1,53 bezogenen tatsächlichen Flächenbrechwert ihrer Vorderfläche zwischen 3,2 D und 6,7 D aufweisen,

- die Formmaße des wenigstens einen körperlichen Formmerkmals der Form der Vorderflächen der wenigstens drei unterschiedlichen Typen der ersten Serie und die Formmaße des wenigstens einen körperlichen Formmerkmals der Form der Vorderflächen der wenigstens drei unterschiedlichen Typen der zweiten Serie und die Formmaße des wenigstens einen körperlichen Formmerkmals der Form der Vorderflächen der wenigstens drei unterschiedlichen Typen der dritten Serie identisch sind,

b) Aufnehmen eines der Brillenglashalbfabrikate aus dem bereitgestellten Satz von Brillenglashalbfabrikaten, und

c) Bearheiten der Rückfläche des aufgenommenen Brillenglashalbfabrikats.

Anders ausgedrückt besteht der bereitgestellte Satz von Brillenglashalbfabrikaten aus wenigstens drei Serien von Brillenglashalbfabrikaten mit sphärischen oder rotationssymmetrisch asphärischen Vorderflächen. Die Serien von Brillenglashalbfabrikaten unterscheiden sich paarweise in ihrem jeweiligen Grundmaterial. Die Grundmaterialen weisen unterschiedliche mittlere Brechungsindizes auf. Jede der Serien umfasst innerhalb eines auf einen Standardbrechungsindex von 1,53 bezogenen tatsächlichen Flächenbreehwertbereiches ihrer Vorderfläche zwischen 3,2 D und 6,7 D wenigstens drei paarweise unterschiedliche Typen von Brillenglashalbfabrikaten, deren Vorderflächenformen in irgend einer Weise unterschiedlich ausgebildet sind. Innerhalb dieses auf den Standardbrechungsindex von 1,53 bezogenen tatsächlichen Flächenbrechwertbereiches ihrer Vorderfläche zwischen 3,2 D und 6,7 D sind die Vorderflächenformen dieser wenigstens drei Typen auf einer Teilfläche (die vorzugsweise mehr als 40 %, weiter vorzugsweise mehr als 50 % der gesamten Vorderfläche umfasst) oder seiner gesamten Vorderfläche für alle der wenigstens drei Serien identisch.

Erfindungsgemäß ist bzw. sind das wenigstens eine Formmerkmal (R, R1, R2, ... R20, Dn)

i) die tatsächliche Krümmung und/oder
ii) der tatsächliche Krümmungsradius und/oder
iii) die Scheitelkrümmung (ρ) des Kegelschnitts des Korrektutpolynoms des in der DIN ISO 10110 definierten aus der Summe eines Kegelschnitts und eines Korrekturpolynoms bestehenden asphärischen Flächenschnitts der Formel

$$z(r) = \frac{\rho r^2}{1 + \sqrt{1 - (1+k)(\rho r)^2}} + A_4 r^4 + A_6 r^6 + \ldots$$

wobei z die Pfeilhöhe, r die Einfallshöhe, ρ die Scheitelkrümmung und k die konische Konstante des Kegelschnitts sowie A4, A6, ... die Koeffizienten des Korrekturpolynoms sind.

Bei dem erfindungsgemäßen Verfahren zur Herstellung von Brillengläsern können selbstverständlich sämtliche vorstehend beschriebenen Ausführungsvarianten von Sätzen von Brillenglashalbfabrikaten im Verfahrensschritt a) bereitgestellt werden. Es wird hiermit ausdrücklich auf die obige Beschreibung deren Eigenschaften hingewiesen.

Die Weiterbearbeitung oder Fertigbearbeitung der bereitgestellten Halbfabrikate erfordert üblicherweise eine reproduzierbare Fixierung bzw. Aufspannung der Brillenglashalbfabrikate an einer Aufnahme bzw. an einem Halter entsprechend dem Verfahrensschritt b). Dieser Vorgang wird im Rahmen der vorliegenden Erfindung als Aufnehmen bezeichnet. Das Aufnehmen kann ein Aufbringen einer Schutzfolie auf der zu kontaktierenden Vorderfläche umfassen.

Das Aufnehmen der Halbfabrikate führt zu einer definierten Lagezuordnung zwischen dem Brillenglashalbfabrikat und seinem Träger (auf dem es aufgenommen ist). Ein sich ergebender "Verbund" aus dem Träger und dem aufgenommenen Brillenglashalbfabrikat kann dann etwa definiert, hochgenau und präzise auf einer Bearbeitungsmaschine aufgenommen werden, etwa auf einer Fräsmaschine, einer Drehmaschine und/oder einer Poliermaschine. Demgemäß ist auch eine hochgenaue Aufnahme in einer Kontrollstation zur Überwachung des Fertigungsfortschritts bzw. Bearbeitungsfortschritts möglich. Üblicherweise verbleibt der Brillenglashalbfabrikat während einer Mehrzahl von Fertigungsschritten bzw. Bearbeitungsschritten in seinem aufgenommenen Zustand.

Das Aufnehmen der Brillenglashalbfabrikate kann etwa stoffschlüssig und/oder kraftschlüssig erfolgen. In diesem Zusammenhang sind etwa in der WO 2005/065886 A1 verschiedene Ansätze zum Aufnehmen von Brillenglashalbfabrikaten oder Halbfabrikaten zu entnehmen. Es ist immer noch üblich, Brillenglashalbfabrikate mittels niedrigschmelzender Metalllegierungen stoffschlüssig an geeigneten Aufnahmen aufzunehmen. Dieser Vorgang wird von den Fachleuten auch als Aufblocken bezeichnet. Mit anderen Worten dienen die niedrigschmelzenden Metalllegierungen als "Klebstoff" zwischen dem Brillenglashalbfabrikat, insbesondere dessen Vorderseite, und dem Halter. Ferner ist bekannt, Brillenglashalbfabrikate zur Herstellung von Brillengläsern mittels organischer Klebstoffe auf entsprechenden Aufnahmen zu fixieren bzw. aufzunehmen.

Es ist des Weiteren bekannt, Brillenglashalbfabrikate zur Herstellung von Brillengläsern kraftschlüssig auf entsprechenden Aufnahmen zu fixieren. Ein kraftschlüssiges Aufnehmen kann insbesondere die zumindest teilweise Evakuierung eines Hohlraums zwischen dem Brillenglashalbfabrikat und einem als Aufnahme dienenden Träger oder Halter umfassen. Auf diese Weise kann ein Unterdruck, insbesondere ein Vakuum, erzeugt werden, wodurch das Brillenglashalbfabrikat aufgrund der anliegenden Druckdifferenz fest und sicher auf der Aufnahme aufgenommen werden kann. Sofern der entsprechende Festsitz des Brillenglashalbfabrikats auf der Aufnahme hinreichend abgedichtet ist, kann ein solcher aufgenommener Zustand zumindest für eine bestimmte Zeit sicher aufrechterhalten werden.

Das Aufnehmen von Brillenglashalbfabrikaten durch Aufbringen eines Unterdrucks hat den wesentlichen Vorteil, dass keine zusätzlichen Medien (Metalllegierungen, Klebstoffe oder Ähnliches) erforderlich sind, wie dies in der EP 0 857 993 A2 beschrieben ist. Demgemäß kann sich der Aufwand verringern, eine Entsorgung potentiell schädlicher Substanzen ist nicht erforderlich.

Ein pneumatisches Aufnehmen (zuweilen auch als Vakuumblocken bezeichnet) führt jedoch im Regelfall an anderer Stelle zu erhöhtem Aufwand. Eine sichere und feste Fixierung des Brillenglashalbfabrikats am Träger kann sich nämlich beispielsweise nur dann ergeben, wenn möglichst nur ein geringer definierter Spalt zwischen der Kontaktfläche (üblicherweise der Vorderfläche) des Brillenglashalbfabrikats und einem entsprechenden Sitz am Träger ausgebildet ist. Dies heißt mit anderen Worten, dass der Sitz des Trägers möglichst mit einer Kontaktflächenkontur, insbesondere mit einer Kontaktflächenkrümmung, des Brillenglashalbfabrikats gepaart sein sollte. Beispielhaft ist es also bevorzugt, wenn eine sphärische oder rotationssymmetrisch asphärische Fläche des Sitzes des Trägers an eine sphärische oder rotationssymmetrische Kontaktfläche des Brillenglashalbfabrikats angepasst ist. Dies kann beinhalten, dass beide sphärischen oder rotationssymmetrisch asphärischen Flächen aneinander angepasste Krümmungsradien umfassen, wie dies z.B. in der EP 0 857 993 A2, der US 3,134,208, der US 4,089,102, der DE 39 24 078 A1 oder der DE 25 31 134 A1 beschrieben ist.

In der Regel ist es nicht erforderlich, dass die Aufnahme über der gesamten Vorderfläche des aufzunehmenden Halbfabrikats formkomplementär zur Anlage gebracht wird. Dies gilt sowohl für den Fall des stoffschlüssigen Aufnehmens, insbesondere das Aufblocken mittels einer zwischen die Aufnahme und die Halbfabrikatvorderfläche aufgebrachten niedrigschmelzenden Metalllegierung oder mittels eines zwischen die Aufnahme und die Halbfabrikatvorderfläche aufgebrachten organischen Klebstoffs, als auch für den Fall des kraftschlüssigen Aufnehmens, insbesondere das Vakuumblocken mittels eines Unterdrucks zwischen Aufnahme und Halbfabrikatvorderfläche.

In besonderer Ausgestaltung der Erfindung ist daher vorgesehen, dass in Schritt b) das Aufnehmen des Brillenglashalbfabrikats aus dem bereitgestellten Satz von Brillenglashalbfabrikaten mittels einer ausschließlich zu einem Teilabschnitt der Form der Vorderfläche formkomplementär ausgebildeten Aufnahmeeinrichtung erfolgt. Der Teilabschnitt kann wenigstens 40 %, vorzugsweise wenigstens 50 %, weiter vorzugsweise wenigstens 60 %, höchst vorzugsweise wenigstens 70 % der Vorderfläche des aufgenommenen Brillenglashalbfabrikats umfassen. Es hat sich als ausreichend herausgestellt, wenn der Teilabschnitt zwischen 40 % und 80 %, vorzugsweise zwischen 50 % und 80 %, weiter vorzugsweise zwischen 60 % und 80 %, höchst vorzugsweise zwischen 70 % und 80 % der Vorderfläche des aufgenommenen Brillenglashalbfabrikats umfasst.

Eine formkomplementär vorgeformte Aufnahmeeinrichtung zum Vakuumblocken kann grundsätzlich verglichen mit konventionellen stoffschlüssigen Arten des stoffschlüssigen Aufblockens zu einem erhöhten Aufwand führen. Mit anderen Worten ist es nämlich aus Gründen der Funktionssicherheit beim Aufnehmen wünschenswert, für jede Kontaktflächengestalt eines Brillenglashalbfabrikats einen speziell angepasste Aufnahmeeinrichtung in Form eines Sitzes bzw. Trägers bereitzustellen. Vereinfacht gesagt wäre es erforderlich, für jeden Brillenglashalbfabrikattyp der vorstehend beschriebenen Art, der aufgenommen werden muss, entsprechend dem gegebenen Krümmungsradius der Kontaktfläche einen Sitz oder entsprechend angepassten Träger bereitzuhalten, der einen hierauf angepassten Aufnahmeradius umfasst. Für das stoffschlüssige Aufblocken ist eine formkomplementär ausgebildete Aufnahmeeinrichtung nämlich nicht zwingend erforderlich, wenngleich zumindest für einen Teilabschnitt durchaus wünschenswert.

Anstelle einer Aufnahmeeinrichtung für ein kraftschlüssiges Aufnehmen eines Brillenglashalbfabrikats, die eine zur Vorderfläche des aufzunehmenden Halbfabrikats formkomplementär vorangepasste Kontur aufweist, kann zur Realisierung der vorliegenden Erfindung auch eine Aufnahmeeinrichtung mit zur Vorderfläche des aufzunehmenden Halbfabrikats formkomplementär voranpassbarer Kontur verwendet werden. Dies kann z.B. mittels in axialer Richtung verschiebbarer ringförmiger Auflageelemente erfolgen, wie dies z.B. in der EP 0 857 993 A2 oder der JP 3121763 A beschrieben ist.

Bei einer pneumatischen Aufnahmeeinrichtung ist ein flächiges formschlüssiges Aufnehmen der Vorderfläche eines Brillenglashalbfabrikats nicht zwingend erforderlich. Es hat sich jedoch herausgestellt, dass bei den in den Dokumenten EP 0 857 993 A2, US 3,134,208, US 4,089,102, DE 39 24 078 A1, DE 25 31 134 A1 und JP 3121763 A beschriebenen Aufnahmeeinrichtungen mit formkomplementär zu einem ausgedehnten Abschnitt der Vorderfläche des zu halternden Halbfabrikats ausgebildeter Anlagefläche unter vergleichbaren Bedingungen eine deutlich größere Haltekraft zwischen Aufnahme und Brillenglashalbfabrikat erzielt werden kann, als bei einfachen Saugträgern, die lediglich eine äußere im allgemeinen ringförmige gegenüber der Umgebung abdichtende Anlagefläche zum Brillenglashalbfabrikat besitzen.

Es ist besonders bevorzugt, wenn der Saugträger dazu ausgebildet ist, das Brillenglashalbfabrikat nach dem Erzeugen des Unterdrucks leistungslos stabil zu halten. Dies heißt mit anderen Worten, dass keine weitere Energie zugeführt werden muss, um das einmal aufgenommene Brillenglashalbfabrikat sicher auf dem Saugträger halten zu können. Zu diesem Zweck können geeignete konstruktive Maßnahmen, insbesondere geeignete Maßnahmen zur Abdichtung am Aufnahmesitz und am Saugträger selbst vorgesehen sein. Sofern das Brillenglashalbfabrikat hinreichend dicht am Aufnahmesitz anliegt, etwa an einer umlaufenden Dichtfläche, und sofern eine Unterdruckleitung am Saugträger, die zur Erzeugung des Unterdrucks kontaktierbar ist, hinreichend nach außen abgedichtet ist, kann das Brillenglashalbfabrikat auch für längere Zeit definiert, fest und sicher am Saugträger verbleiben. Mit anderen Worten kann ein Verbund bestehend aus dem Saugträger und dem Brillenglashalbfabrikat gebildet werden, der autark und stabil ist. Der Verbund aus dem Saugträger und dem Brillenglashalbfabrikat kann beispielsweise in einer Fertigungsanlage bewegt und umgesetzt werden, ohne dass ein Nachführen von Unterdruckleitungen oder Ähnlichem erforderlich ist.

Der Unterdruck zwischen dem Aufnahmesitz und dem Brillenglashalbfabrikat kann etwa durch Evakuieren eines ursprünglich mit einem Fluid (v.a. mit Luft) gefüllten Raumes zwischen der Kontaktfläche des Brillenglashalbfabrikats und dem Aufnahmesitz erzeugt werden. Sofern in diesem Zusammenhang in dieser Offenbarung von einem Vakuum die Rede ist, muss dies nicht unbedingt bedeuten, dass ein absolutes Vakuum erzeugt wird. Vielmehr reicht es regelmäßig aus, einen definierten Unterdruck bzw. eine definierte Druckdifferenz zwischen einem Umgebungsdruck und dem Druck in der "Vakuumkammer" zwischen der Kontaktfläche des Brillenglashalbfabrikats und dem Aufnahmesitz zu erzeugen.

Der Bearbeitungsschritt c) kann beispielhaft Schleifvorgänge und/oder Fräsvorgänge und/oder Deformationsvorgänge umfassen. Die Bearbeitung des aufgenommenen Brillenglashalbfabrikats kann ferner Poliervorgänge umfassen. Die Bearbeitung kann in einer formgebenden Herstellung einer standardisierten Rückfläche oder in der formgebenden Herstellung eines individuell für den späteren Nutzer berechneten Flächendesigns der Rückfläche bestehen. Insbesondere können in beiden vorstehenden Fällen beim Optiker oder Augenarzt ermittelte Verordnungswerte und individuelle Gebrauchsinformationen z.B. der in der EP 0 857 993 A2 beschriebenen Art eingehen.

Der Bearbeitungsschritt kann zusätzlich oder alternativ zu den vorstehend beschriebenen formgebenden Vorgängen auch das Aufbringen von Funktionsschichten der in der Beschreibungseinleitung beschriebenen Art umfassen.

Während der Bearbeitung des Brillenglashalbfabrikats kann dieses zumindest zeitweise, vorzugsweise nahezu permanent in seinem aufgenommenen Zustand verbleiben. Insbesondere kann das Brillenglashalbfabrikat im aufgenommenen Zustand zwischen verschiedenen Bearbeitungsstationen umgesetzt werden. Ferner kann das Brillenglashalbfabrikat im aufgenommenen Zustand auch zumindest einer Kontrollstation oder Prüfstation zugeführt werden, um etwa den Bearbeitungsfortschritt zu überwachen. Ferner kann auf diese Weise die Qualitätssicherung vereinfacht werden.

Die Erfindung besteht ferner in dem Vorschlag der Verwendung eines Satzes von Brillenglashalbfabrikaten, insbesondere der oben beschriebenen Art, in einem Verfahren zur Herstellung von Brillengläsern, insbesondere in einem der vorstehend beschriebenen Art, wobei die Brillenglashalbfabrikate jeweils eine Vorderfläche mit sphärischer oder rotationssymmetrisch asphärischer, konvexer Form besitzen, welche wenigstens ein körperliches Formmerkmal mit einem zugehörigen Formmaß aufweist, umfassend

- eine erste Serie von Brillenglashalbfabrikaten aus einem Grundmaterial mit einem ersten mittleren Brechungsindex, wobei die erste Serie paarweise unterschiedliche Typen von Brillenglashalbfabrikaten aufweist, die sich in dem Formmaß des wenigstens einen körperlichen Formmerkmals der Form ihrer Vorderfläche unterscheiden, wobei wenigstens drei unterschiedliche Typen der paarweise unterschiedlichen Typen einen auf einen Standardbrechungsindex von 1,53 bezogenen und im Falle einer rotationssymmetrisch asphärischen Form der Vorderfläche in deren Symmetriezentrum bestimmten tatsächlichen Flächenbrechwert ihrer Vorderfläche zwischen 3,2 D und 6,7 D aufweisen,

- eine zweite Serie von Brillenglashalbfabrikaten aus einem Grundmaterial mit einem zweiten von dem ersten mittleren Brechungsindex unterschiedlichen mittleren Brechungsindex, wobei die zweite Serie paarweise unterschiedliche Typen von Brillenglashalbfabrikaten aufweist, die sich in dem Formmaß des wenigstens einen körperlichen Formmerkmals der Form ihrer Vorderfläche unterscheiden,

- eine dritte Serie von Brillenglashalbfabrikaten aus einem Grundmaterial mit einem dritten von dem ersten mittleren Brechungsindex und dem zweiten mittleren Brechungsindex unterschiedlichen mittleren Brechungsindex, wobei die dritte Serie paarweise unterschiedliche Typen von Brillenglashalbfabrikaten aufweist, die sich in dem Formmaß des wenigstens einen körperlichen Formmerkmals der Form ihrer Vorderfläche unterscheiden, wobei

- wenigstens drei unterschiedliche Typen der paarweise unterschiedlichen Typen der zweiten Serie einen auf einen Standardbrechungsindex von 1,53 bezogenen tatsächlichen Flächenbrechwert ihrer Vorderfläche zwischen 3,2 D und 6,7 D aufweisen, wobei

- wenigstens drei unterschiedliche Typen der paarweise unterschiedlichen Typen der dritten Serie einen auf einen Standardbrechungsindex von 1,53 bezogenen tatsächlichen Flächenbrechwert ihrer Vorderfläche zwischen 3,2 D und 6,7 D aufweisen, wobei

- die Formmaße des wenigstens einen körperlichen Formmerkmals der Form der Vorderflächen der wenigstens drei unterschiedlichen Typen der ersten Serie und die Formmaße des wenigstens einen körperlichen Formmerkmals der Form der Vorderflächen der wenigstens drei unterschiedlichen Typen der zweiten Serie und die Formmaße des wenigstens einen körperlichen Formmerkmals der Form der Vorderflächen der wenigstens drei unterschiedlichen Typen der dritten Serie identisch sind.

Erfindungsgemäß ist bzw. sind das wenigstens eine Formmerkmal (R, R1, R2, ... R20, Dn)

i) die tatsächliche Krümmung und/oder
ii) der tatsächliche Krümmungsradius und/oder
iii) die Scheitelkrümmung (ρ) des Kegelschnitts des Korrekturpolynoms des in der DIN ISO 10110 definierten aus der Summe eines Kegelschnitts und eines Korrekturpolynoms bestehenden asphärischen Flächenschnitts der Formel

$$z(r) = \frac{\rho r^2}{1 + \sqrt{1 - (1+k)(\rho r)^2}} + A_4 r^4 + A_6 r^6 + \ldots$$

wobei z die Pfeilhöhe, r die Einfallshöhe, ρ die Scheitelkrümmung und k die konische Konstante des Kegelschnitts sowie A4, A6, ... die Koeffizienten des Korrekturpolynoms sind.

Die eingangs gestellte Aufgabe der Erfindung wird durch die vorstehend beschriebene Verwendung eines Satzes von Brillenglaskalbfabrikaten in einem Verfahren zur Herstellung von Brillengläsern vollumfänglich gelöst.

Darüber hinaus besteht die Erfindung in der Bereitstellung einer Vorrichtung zur Herstellung von Brillengläsern, insbesondere zur Durchführung des Verfahrens der vorstehend beschriebenen Art, mit:

a) einer Bereitstellungseinrichtung zum Bereitstellen eines Satzes von Brillenglashalbfabrikaten, insbesondere der vorstehend beschriebenen Art, wobei die Brillenglashalbfabrikate jeweils eine Rückfläche und eine Vorderfläche mit sphärischer oder rotationssymmetrisch asphärischer, konvexer Form besitzen, welche wenigstens ein körperliches Formmerkmal mit einem zugehörigen Formmaß aufweist, umfassend

- eine erste Serie von Brillenglashalbfabrikaten aus einem Grundmaterial mit einem ersten mittleren Brechungsindex, wobei die erste Serie paarweise unterschiedliche Typen von Brillenglashalbfabrikaten aufweist, die sich in dem Formmaß des wenigstens einen körperlichen Formmerkmals der Form ihrer Vorderfläche unterscheiden, wobei wenigstens drei unterschiedliche Typen der paarweise unterschiedlichen Typen einen auf einen Standardbrechungsindex von 1,53 bezogenen und im Falle einer rotationssymmetrisch asphärischen Form der Vorderfläche in deren Symmetriezentrum bestimmten tatsächlichen Flächenbrechwert ihrer Vorderfläche zwischen 3,2 D und 6,7 D aufweisen,

- eine zweite Serie von Brillenglashalbfabrikaten aus einem Grundmaterial mit einem zweiten von dem ersten mittleren Brechungsindex unterschiedlichen mittleren Brechungsindex, wobei die zweite Serie paarweise unterschiedliche Typen von Brillenglashalbfabrikaten aufweist, die sich in dem Formmaß des wenigstens einen körperlichen Formmerkmals der Form ihrer Vorderfläche unterscheiden,

- eine dritte Serie von Brillenglashalbfabrikaten aus einem Grundmaterial mit einem dritten von dem ersten mittleren Brechungsindex und dem zweiten mittleren Brechungsindex unterschiedlichen mittleren Brechungsindex, wobei die dritte Serie paarweise unterschiedliche Typen von Brillenglashalbfabrikaten aufweist, die sich in dem Formmaß des wenigstens einen körperlichen Formmerkmals der Form ihrer Vorderfläche unterscheiden, wobei

- wenigstens drei unterschiedliche Typen der paarweise unterschiedlichen Typen der dritten Serie einen auf einen Standardbrechungsindex von 1,53 bezogenen tatsächlichen Flächenbrechwert ihrer Vordertläche zwischen 3,2 D und 6,7 D aufweisen, wobei

- die Formmaße des wenigstens einen körperlichen Formmerkmals der Form der Vorderflächen der wenigstens drei unterschiedlichen Typen der ersten Serie und die Formmaße des wenigstens einen körperlichen Formmerkmals der Form der Vorderflächen der wenigstens drei unterschiedlichen Typen der zweiten Serie und die Formmaße des wenigstens einen körperlichen Formmerkmals der Form der Vorderflächen der wenigstens drei unterschiedlichen Typen der dritten Serie identisch sind.

b) einer Aufnahmeeinrichtung zum Aufnehmen eines der Brillenglashalbfabrikate aus dem bereitgestellten Satz von Brillenglashalbfabrikaten,

c) einer Bearbeitungseinrichtung zum Bearbeiten der Rückfläche des aufgenommenen Brillenglashalbfabrikats.

Erfindungsgemäß ist bzw. sind das wenigstens eine Formmerkmal (R, R1, R2, ... R20, Dn)

i) die tatsächliche Krümmung und/oder
ii) der tatsächliche Krümmungsradius und/oder
iii) die Scheitelkrümmung (ρ) des Kegelschnitts des Korrekturpolynoms des in der DIN ISO 10110 definierten aus der Summe eines Kegelschnitts und eines Korrekturpolynoms bestchenden asphärischen Flächenschnitts der Formel

$$z(r) = \frac{\rho r^2}{1 + \sqrt{1 - (1 + k)(\rho r)^2}} + A_4 r^4 + A_6 r^6 + \ldots$$

wobei z die Pfeilhöhe, r die Einfallshöhe, ρ die Scheitelkrümmung und k die konische Konstante des Kegelschnitts sowie A4, A6, ... die Koeffizienten des Korrekturpolynoms sind.

Die eingangs gestellte Aufgabe der Erfindung wird durch die vorstehend beschriebene erfindungsgemäße Vorrichtung zur Herstellung von Brillengläsern vollumfänglich gelöst.

Die Bereitstellungseinrichtung kann z.B. ein Lager sein, in dem die unterschiedlichen Halbfabrikate des Satzes gelagert und aus dem eines der Brillenglashalbfabrikate des Satzes zur Aufnahme an deren Vorderfläche und zur Bearbeitung der Rückfläche angefordert werden kann. Die Bereitstellungseinrichtung kann z.B. auch eine Datenbank sein, die Informationen zu einzelnen Halbfabrikattypen und deren Bezugsquellen bereitstellt und über die eines der Brillenglashalbfabrikate des Satzes zur Aufnahme an deren Vorderfläche und zur Bearbeitung der Rückfläche angefordert werden kann.

Die Aufnahmeeinrichtung kann -wie vorstehend bereits beschrieben- eine stoffschlüssige und/oder kraftschlüssige und/oder formschlüssige Verbindung zum Brillenglashalbfabrikat herstellen. Die Aufnahmeeinrichtung kann als Aufblockeinrichtung eingerichtet sein, welche eine stoffschlüssige Verbindung zwischen der Aufnahmeeinrichtung und der Vorderfläche des Brillenglashalbfabrikats mittels einer zwischen die Aufnahmeeinrichtung und die Halbfabrikatvorderfläche eingebrachte niedrigschnielzende Metalllegierung oder mittels eines zwischen die Aufnahmeeinrichtung und die Halbfabrikatvorderfläche aufgebrachten organischen Klebstoffs herstellen kann. Die Aufnahmeeinrichtung kann auch als Unterdrucksaugeinrichtung bzw. Vakuumsaugeinrichtung ausgebildet sein, welche eine kraftschlüssige Verbindung mittels eines Unterdrucks in einem Hohlraum zwischen der Aufnahmeeinrichtung und der Halbfabrikatvorderfläche herstellen kann.

Die Bearbeitungseinrichtung kann ein oder mehrere Fräswerkzeuge und/oder ein oder mehrere Drehwerkzeuge und/oder ein oder mehrere Schleifwerkzeuge und/oder ein oder mehrere Polierwerkzeuge umfassen. Die Bearbeitungseinrichtung kann zusätzlich oder alternativ eine oder mehrere Abscheideeinrichtungen zum Aufbringen von Funktionsschichten umfassen. Es können eine oder mehrere Abscheideeinrichtungen, wie zum Beispiel Taucbbadbeschichtugseinrichtungen oder Aufschleuder- bzw. Spin-Coating-Einrichtungen, zum nasschemischen Aufbringen von einer oder mehreren Funktionsschichten vorhanden sein. Weiter ist es möglich, dass ein oder mehrere Vakuumbeschichtungseinrichtungen eingesetzt sind, wie z.B. Gasphasenabscheideeinrichtungen, insbesondere Verdampfungseinrichtungen, Kathodenzerstäubungseinrichtungen oder chemische Vakuumreaktionseinrichtungen.

Schließlich besteht die Erfindung in einem computerimplementierten Verfahren zur Auslegung eines Satzes von Brillenglashalbfabrikaten, insbesondere eines Satzes von Halbfabrikaten nach einer der vorstehend beschriebenen Art, wobei die Brillenglashalbfabrikate jeweils eine Vorderfläche mit sphärischer oder rotationssymmetrisch asphärischer, konvexer Form besitzen, welche wenigstens ein körperliches Formmerkmal mit einem zugehörigen Formmaß aufweist, wobei der Satz von Brillenglashalbfabrikaten eine erste Serie von Brillenglashalbfabrikaten aus einem Grundmaterial mit einem ersten mittleren Brechungsindex und eine zweite Serie von Brillenglashalbfabrikaten aus einem Grundmaterial mit einem zweiten von dem ersten mittleren Brechungsindex unterschiedlichen mittleren Brechungsindex und eine dritte Serie von Brillenglashalbfabrikaten aus einem Grundmaterial mit einem dritten von dem ersten mittleren Brechungsindex ($n_{d4}$) und von dem zweiten mittleren Brechungsindex unterschiedlichen mittleren Brechungsindex umfasst, wobei die erste Serie paarweise unterschiedliche Typen von Brillenglashalbfabrikaten aufweist, die sich in dem Formmaß des wenigstens einen körperlichen Formmerkmals der Form ihrer Vorderfläche unterscheiden, und wobei die zweite Serie paarweise unterschiedliche Typen von

Brillenglashalbfabrikaten aufweist, die sich in dem Formmaß des wenigstens einen körperlichen Formmerkmals der Form ihrer Vorderfläche unterscheiden und wobei die dritte Serie paarweise unterschiedliche Typen von Brillenglashalbfabrikaten aufweist, die sich in dem Formmerkmal des wenigstens einen körperlichen Formmerkmals der Form der Vorderfläche unterscheiden.

Das erfindungsgemäße computcrimplementierte Verfahren ist gekennzeichnet durch den Schritt:

a) Angleichen der Formmaße des wenigstens einen körperlichen Formmerkmals der Form der Vorderflächen der unterschiedlichen Typen der ersten Serie und der Formmaße des wenigstens einen körperlichen Formmerkmals der Form der Vorderflächen der unterschiedlichen Typen der zweiten Serie und der Formmaße des wenigstens einen körperlichen Formmerkmals der Form der Vorderflächen der unterschiedlichen Typen der dritten Serie.

Unter Angleichen der Formmaße versteht man anders ausgedrückt das in Übereinstimmung bringen der Formmaße, so dass der Satz von Brillenglashalbfabrikaten aus wenigstens zwei Serien von Brillenglashalbfabrikaten mit sphärischen oder rotationssymmetrisch asphärischen Vorderflächen besteht, die Serien von Brillenglashalbfabrikaten sich in ihrem jeweiligen Grundmaterial unterscheiden, die Grundmaterialen unterschiedliche mittlere Brechungsindizes aufweisen, jede der Serien wenigstens zwei paarweise unterschiedliche Typen von Brillenglashalbfabrikaten umfasst, deren Vorderflächenformen in irgend einer Weise unterschiedlich ausgebildet sind, und die Vorderflächenformen dieser wenigstens zwei Typen auf einer Teilfläche (die vorzugsweise mehr als 40 %, weiter vorzugsweise mehr als 50 % der gesamten Vorderfläche umfasst) oder auf der gesamten Vorderfläche für alle der wenigstens drei Serien identisch sind.

Erfindungsgemäß ist bzw. sind das wenigstens eine Formmerkmal (R, R1, R2,... R20, Dn)

i) die tatsächliche Krümmung und/oder
ii) der tatsächliche Krümmungsradius und/oder
iii) die Scheitelkrümmung ($\rho$) des Kegelschnitts des Korrekturpolynoms des in der DIN ISO 10110 definierten aus der Summe eines Kegelschnitts und eines Korrekturpolynoms bestehenden asphärischen Flächenschnitts der Formel

$$z(r) = \frac{\rho r^2}{1 + \sqrt{1 - (1+k)(\rho r)^2}} + A_4 r^4 + A_6 r^6 + \ldots$$

wobei z die Pfeilhöhe, r die Einfallshöhe, $\rho$ die Scheitelkrümmung und k die konische Konstante des Kegelschnitts sowie A4, A6, ... die Koeffizienten des Korrekturpolynoms sind.

Die eingangs gestellt Aufgabe der Erfindung wird durch das vorstehend beschriebene erfindungsgemäße computerimplementierte Verfahren zur Auslegung eines Satzes von Brillenglashalbfabrikaten vollumfänglich gelöst.

Eine besonders vorteilhafte Ausbildung des erfindungsgemäßen computerimplementierten Verfahrens besteht darin, dass das wenigstens eine Formmerkmal eine tatsächliche Flächenbrechkraft ist und dass das zugehörige Formmaß der zugehörige auf einen Standardbrechungsindex von 1,53 bezogene tatsächliche Flächenbrechwert ist, so dass die erste Serie und die zweite Serie an Brillenglashalbfabrikaten jeweils Typen von Brillenglashalbfabrikaten aufweisen, deren Vorderflächen eine tatsächliche Flächenbrechkraft mit identischen auf einen Standardbrechungsindex von 1,53 bezogenen tatsächlichen Flächenbrechwerten aufweisen, und dass das Angleichen der auf den Standardbrechungsindex von 1,53 bezogenen tatsächlichen Flächenbrechwerte der Vorderflächen der unterschiedlichen Typen der ersten Serie und der auf den Standardbrechungsindex von 1,53 bezogenen tatsächlichen Flächenbrechwerte der Vorderflächen der unterschiedlichen Typen der zweiten Serie derart erfolgt, dass die Differenz zwischen einem der identischen auf den Standardbrechungsindex von 1,53 bezogenen tatsächlichen Flächenbrechwert zum nächstgrößeren identischen auf den Standardbrechungsindex von 1,53 bezogenen tatsächlichen Flächenbrechwert kleiner als ein vorgegebener Schwellwert ist und/oder innerhalb eines Varianzbereichs von 20 %, vorzugsweise 15 %, weiter vorzugsweise 10 %, höchst vorzugsweise 5 % identisch mit einem fest vorgegebenen Differenzwert ist.

Der Vorteil dieser Auslegungsregel liegt entsprechend den obigen Ausführungen darin, dass eine weitgehend einheitliche Stufung zwischen den Halbfabrikaten einer Serie erzeugt wird, die eine weitgehend homogene Qualitätsverteilung hinsichtlich der optischen Eigenschaften der fertigen Brillengläser über deren gesamten Lieferbereich ermöglicht.

Nach der Erfindung kann das vorstehend beschriebene Verfahren zur Auslegung eines Satzes von Halbfabrikaten zur Herstellung von Brillengläsern sowie dessen Varianten zur Durchführung seiner Verfahrensschritte in Form eines Computerprogramms mit Programmcode vorliegen, wenn das Computerprogramm in einem Computer geladen und/oder in einem Computer ausgeführt wird.

Die Erfindung sieht insbesondere vor, dass das vorstehend beschriebene Verfahren zur Auslegung eines Satzes von Halbfabrikaten zur Herstellung von Brillengläsern sowie dessen Varianten zur Durchführung seiner Verfahrensschritte in Form eines computerlesbaren Speichermediums mit einem Computerprogramm mit Programmcode vorliegt, um das Computerprogramm in einem Computer zu laden und/oder in einem Computer auszuführen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:

| | |
|---|---|
| Fig. 1 | eine vereinfachte schematische Seitenansicht zweier Brillenglashalbfabrikate zur Herstellung von Brillengläsern; |
| Fig. 2 | eine vereinfachte schematische Seitenansicht eines weiteren Brillenglashalbfabrikats zur Herstellung von Brillengläsern und einer Aufnahme mit einem an das Brillenglashalbfabrikat angepasstem Aufnahmesitz; |
| Fig. 3, Fig. 4 und Fig. 5 | vereinfachte schematische Seitenansichten von Paarungen aus Brillenglashalbfabrikaten und Kontaktabschnitten mit Aufnahmesitzen, die an entsprechende Kontaktflächen der Brillenglashalbfabrikate angepasst sind; |
| Fig. 6 | ein stark vereinfachtes schematisches tabellarisches Schaubild zur Veranschaulichung möglicher Zusammensetzungen und Paarungen von Sätzen von Brillenglashalbfabrikate und einem Satz von Trägern bzw. Kontaktabschnitten; |
| Fig. 7 | eine beispielhafte schematische Darstellung einer Zuordnung von Brillenglashalbfabrikattypen, die jeweils ein standardisiertes körperliches Formmerkmal in Form eines Krümmungsradius der Vorderfläche der aus einem Grundmaterial mit einem mittleren Brechungsindex von 1,6 bestehenden Brillenglashalbfabrikate der jeweiligen Brillenglashalbfabrikattypen aufweisen, zu vorgegebenen Bereichen optischer Korrekturen, die auf Basis der Brillenglashalbfabrikattypen erzeugbar sind; |
| Fig. 8 | eine weitere beispielhafte schematische Darstellung einer Zuordnung von Brillenglashalbfabrikattypen, die jeweils ein standardisiertes körperliches Formmerkmal in Form eines Krümmungsradius der Vorderfläche der aus einem Grundmaterial mit einem mittleren Brechungsindex von 1,67 bestehenden Brillenglashalbfabrikate der jeweiligen Brillenglashalbfabrikattypen aufweisen, zu vorgegebenen Bereichen optischer Korrekturen, die auf Basis der Brillenglashalbfabrikattypen erzeugbar sind; |
| Fig. 9 | die Darstellung der Zuordnung nach der Fig. 7, wobei die Krümmungsradien in einen auf einen Standardbrechungsindex von 1,53 bezogenen tatsächlichen Flächenbrechwert umgerechnet sind; |
| Fig. 10 | die Darstellung der Zuordnung nach der Fig. 8, wobei die Krümmungsradien in einen auf einen Standardbrechungsindex von 1,53 bezogenen tatsächlichen Flächenbrechwert umgerechnet sind; |
| Fig. 11 | eine stark vereinfachte schematische Blockdarstellung einer Anlage bzw. eines Systems zur Herstellung von Brillengläsern; |
| Fig. 12 | ein stark vereinfachtes schematisches Blockdiagramm einer Ausgestaltung eines Verfahrens zur Herstellung von Brillengläsern; |
| Fig. 13 | eine stark vereinfachte schematische Blockdarstellung einer alternativen Ausgestaltung ei- |

nes Verfahrens zur Herstellung von Brillengläsern, das auf dem anhand der Fig. 10 veranschaulichten Verfahren basiert; und

Fig. 14 ein stark vereinfachtes, schematisches Blockdiagramm zur Veranschaulichung möglicher Teilschritte eines Verfahrensschrittes des anhand der Fig. 10 veranschaulichten Verfahrens zur Herstellung von Brillengläsern.

Fig. 1 veranschaulicht in stark vereinfachter Weise anhand zweier Seitenansichten mögliche Gestaltungen von Brillenglashalbfabrikaten zur Herstellung von Brillengläsern, wie sie im Rahmen der vorliegenden Erfindung zum Einsatz kommen. Ein mit 10 bezeichnetes Brillenglashalbfabrikat kann beispielhaft zur Herstellung eines sogenannten Plusglases benutzt werden. Ein mit 12 bezeichnetes Brillenglashalbfabrikat kann beispielhaft zur Herstellung eines sogenannten Minusglases genutzt werden.

Die Brillenglashalbfabrikate 10, 12 sind im Ausführungsbeispiel rotationssymmetrisch um eine Rotationsachse 14 ausgebildet. Ferner weisen die Brillenglashalbfabrikate 10, 12 eine Vorderfläche 16 auf. Die Vorderfläche 16 ist bereits fertiggestellt. Krümmungsänderungen zur Änderungen der optischen Wirkung bzw. der optischen Eigenschaften zur Anpassung an die Bedürfnisse des späteren Brillenträgers werden ausschließlich an der Rückfläche 18 der Brillenglashalbfabrikate 10, 12 vorgenommen, die der Vorderfläche 16 gegenüberliegend angeordnet ist. Bei der Vorderfläche 16 handelt es sich üblicherweise um eine sphärische Fläche. Im Rahmen der vorliegenden Erfindung sind auch rotationssymmetrisch asphärische Vorderflächen zugelassen. Die jeweilige Vorderfläche 16 weist eine bestimmte Krümmung auf, die im vorliegenden Ausführungsbeispiel durch den Krümmungsradius 20 kenntlich gemacht ist.

Ein Plusglas, das aus dem Brillengashalbfabrikat 10 herstellbar ist, weist im Allgemeinen eine konvexe Vorderfläche 16 mit einer Krümmung auf, die stärker als eine konkave Krümmung der Rückfläche 18 ist. Ein Minusglas, das aus dem Brillengashalbfabrikat 12 herstellbar ist, weist im Allgemeinen an seiner konvexen Vorderfläche 16 eine Krümmung auf, die im Allgemeinen kleiner als die Krümmung der konkaven Rückfläche 18 ist. Die Brillengashalbfabrikate 10, 12 sind im Ausführungsbeispiel aus einem organischen Werkstoff (Kunststoff) hergestellt. Brillenglashalbfabrikate aus mineralischen Gläsern oder sonstigen anorganischen Werkstoffen sind auch möglich. Bekannte Materialien für organische Brillengläser umfassen etwa solche mit den Handelsbezeichnungen CR 39, MR 8, MR 7, CR 330 sowie MR 174. Andere Werkstoffe für organische und mineralische Brillengläser sind in der Beschreibungseinleitung angegeben. Die in der Beschreibungseinleitung angegebene Tabelle 1 umfasst allerdings nur eine Auswahl aus einer Vielzahl an Werkstoffen.

Neben der Vorderfläche 16 und der Rückfläche 18 weisen die Brillenglashalbfabrikate 10, 12 eine Randfläche 22 auf, die üblicherweise als Zylinderfläche ausgebildet ist. Sie wird daher häufig auch als Zylinderrandfläche bezeichnet. Es versteht sich, dass die anhand der Fig. 1 veranschaulichten Ausgestaltungen der Brillenglashalbfabrikate 10, 12 lediglich beispielhafter Natur sind. Die Randfläche 22 kann allgemein als Umfangsfläche beliebiger Form gestaltet sein.

Wie vorstehend bereits detailliert beschrieben wurde, werden sogenannte Halbfabrikate, also Rohlinge 10, 12, bei denen die Vorderfläche 16, 18 fertig bearbeitet ist und bei denen die Rückfläche 16, 18 zur weiteren Anpassung an optische Erfordernisse des späteren Brillenträgers einer nachgelagerten formgebenden Bearbeitung unterzogen wird, in Aufnahmen fixiert bzw. aufgeblockt, so dass diese in geeigneter Weise an Bearbeitungsmaschinen aufgenommen werden können.

Fig. 2 veranschaulicht in schematisch stark vereinfachter Seitenansicht eine Aufnahmeeinrichtung 34, die zum Aufnehmen eines Brillenglashalbfabrikats 10 ausgebildet ist. Die Aufnahmeeinrichtung 34 ist im Beispiel als Saugträger oder Vakuumträger ausgebildet. Die Aufnahmeeinrichtung 34 ist dazu ausgebildet, das Brillenglashalbfabrikat 10 an einer definierten Kontaktfläche aufzunehmen. Bei der Kontaktfläche kann es sich beispielsweise um die gesamte Vorderfläche 16 handeln. In dem in der Fig. 2 gezeigten Fall umfasst die Kontaktfläche lediglich einen zum Durchstoßpunkt 15 der Rotations- oder Symmetrieachse 14 des Brillenglashalbfabrikats 10 durch die Vorderfläche 16 punktsymmetrischen zentralen Vorderflächenabschnitt 17.

Häufig wird vor dem Aufnehmen des Brillenglashalbfabrikats 10 an der Aufnahmeeinrichtung 34 eine Schutzfolie auf die Kontaktfläche aufgebracht. Auf diese Weise können Beschädigungen der Vorderfläche 16 beim Aufnehmen und während der Fixierung bei der nachfolgenden Bearbeitung vermieden werden. Die Schutzfolie ist in der Fig. 2 mit dem Bezugszeichen 19 kenntlich gemacht.

Der Vorgang des Aufnehmens bzw. des Fixierens des Brillenglashalbfabrikats 10 an der Aufnahmeeinrichtung 34 wird insbesondere bei der Verwendung von niedrigschmelzenden Metalllegierungen als Verbindungsmedium oder bei der Verwendung eines Saug- oder Vakuumträgers als Blocken oder Aufblocken bezeichnet. Im aufgeblockten Zustand des Brillenglashalbfabrikats 10 kann sich ein Verbund aus der Aufnahmeeinrichtung 34 und dem daran aufgenommenen Brillenglashalbfabrikat 10 ergeben. Dieser Verbund erlaubt eine sichere Handhabung und insbesondere eine genaue Aufnahme des Brillenglashalbfabrikats 10 für weitere Bearbeitungsschritte.

Die Aufnahmeeinrichtung 34 umfasst im Ausführungsbeispiel einen Schaft 36, der zur Aufnahme der Aufnahmeeinrichtung 34 an Bearbeitungsmaschinen, Prüfmaschinen oder ähnlichen Einrichtungen einer Anlage zur Herstellung von Brillengläsern ausgebildet ist. Die Aufnahmeeinrichtung 34 umfasst in der gezeigten Anordnung ferner einen Kontaktabschnitt 38, der zur Aufnahme der Kontaktfläche 17 oder Vorderfläche 16 des Brillenglashalbfabrikats 10 ausgebildet ist.

Im Beispiel weist der Kontaktabschnitt 38 eine Aufnahmevertiefung auf, die im Folgenden als Aufnahmesitz 40 bezeichnet ist. Am Kontaktabschnitt 38, insbesondere an dessen dem Brillenglashalbfabrikat 10 zugewandten Ende ist eine Dichtung 42 aufgenommen. Es ist nicht unbedingt erforderlich, dass die Vorderfläche 16 des Brillenglashalbfabrikats 10 im aufgenommenen Zustand mit dem Aufnahmesitz 40 des Kontaktabschnitts 38 zur Anlage kommt. Es ist jedoch eine dichtende Anlage des Dichtrings 42 an der Vorderfläche 16 wünschenswert. Auf diese Weise kann sich zwischen dem Aufnahmesitz 40 und der Vorderfläche 16 ein Hohlraum 44 ergeben, in dem ein Unterdruck bzw. ein Vakuum erzeugbar ist.

Sofern der Hohlraum 44 durch die Anlage des Brillenglashalbfabrikats 10 am Dichtring 42 hinreichend abgedichtet ist, kann das Brillenglashalbfabrikat 10 allein durch den Unterdruck im Hohlraum 44 sicher am Kontaktabschnitt 38 gehalten sein. Auf diese Weise kann eine kraftschlüssige Aufnahme des Brillenglashalbfabrikats 10 am Kontaktabschnitt 38 gewährleistet werden. Dies hat gegenüber bekannten Ansätzen zur stoffschlüssigen Verbindung des Brillenglashalbfabrikats 10 mit dem Kontaktabschnitt 38 verschiedene Vorteile. Insbesondere kann die Bereitstellung, Handhabung und Entsorgung eines Haftmittels zwischen dem Kontaktabschnitt 38 und dem Brillenglashalbfabrikat 10 vermieden werden.

Zur Erzeugung des Unterdrucks bzw. des Vakuums im Hohlraum 44, der auch als Kammer bezeichnet werden kann, ist der Hohlraum 44 über eine Leitung 48 mit einer Pumpe 52 verbindbar. Die Pumpe 52 kann auch als Vakuumpumpe bezeichnet werden. Mittels der Pumpe 52 kann Luft aus dem Hohlraum 44 abgesaugt werden, wenn das Brillenglashalbfabrikat 10 hinreichend dicht am Dichtring 42 anliegt. Vorzugsweise ist die Leitung 48 dichtend absperrbar. Zu diesem Zweck kann beispielsweise ein Ventil 50 vorgesehen sein, das in Fig. 2 lediglich symbolhaft dargestellt ist. Vorzugsweise ist die Leitung 48 derart absperrbar, dass der Träger 34 von der Pumpe 52 lösbar ist. Sofern der Hohlraum 44 hinreichend abgedichtet ist, kann das Brillenglashalbfabrikat 10 selbsttätig und dauerhaft am Kontaktabschnitt 38 gehalten werden. Insbesondere ist keine permanente oder sporadische Energiezufuhr zur Sicherung des Festsitzes erforderlich. Umgekehrt kann das Brillenglashalbfabrikat 10 einfach vom Kontaktabschnitt 38 gelöst werden, indem etwa über die Leitung 48 ein Druckausgleich herbeigeführt wird.

Zur Gewährleistung einer wiederholbaren und prozessfähigen Aufnahme des Brillenglashalbfabrikats 10 am Kontaktabschnitt 38 ist es von Vorteil, einen möglichst definierten Spalt zwischen der Vorderfläche 16 und dem Aufnahmesitz 40 zu erzeugen, der im geblockten Zustand den Hohlraum 44 definiert. Aus diesem Grund ist es von Vorteil, wenn der Aufnahmesitz 40 eine Form aufweist, die zumindest im Bereich der Kontaktfläche 17 an die Form der Vorderfläche 16 angepasst ist. Insbesondere kann es von Vorteil sein, wenn der Aufnahmesitz 40 und die Vorderfläche 16 im Wesentlichen übereinstimmende Krümmungen bzw. Krümmungsradien aufweisen. Der Spalt bzw. der Hohlraum 44 kann sich durch einen entsprechenden Versatz ergeben. Insbesondere ist es bevorzugt, wenn für jede denkbare Form oder Gestalt der Vorderfläche 16 ein entsprechender Aufnahmesitz 40 bzw. ein entsprechender Kontaktabschnitt 38 vorgehalten wird.

In diesem Zusammenhang veranschaulichen die Fig. 3, 4 und 5 verschiedene Paarungen aus Halbfabrikaten 10-1, 10-2, 10-3 mit auf deren Vorderflächen 16-1, 16-2, 16-3 abgestimmten Kontaktabschnitten 38-1, 38-2, 38-3 von Aufnahmeeinrichtungen 34-1, 34-2, 34-3 der in der Fig. 2 gezeigten Art. Die Kontaktabschnitte 38-1, 38-2, 38-3 weisen Vertiefungen oder Aufnahmesitze 40-1, 40-2, 40-3 auf, die in geeigneter Weise an die Gestalt der Vorderfläche 16-1, 16-2, 16-3 angepasst sind. Insbesondere können die Aufnahmesitze 40-1, 40-2, 40-3 und die Vorderflächen 16-1, 16-2, 16-3 im Wesentlichen überstimmende Krümmungsradien aufweisen. Auf diese Weise kann eine sichere Fixierung der Brillenglashalbfabrikate 10-1, 10-2, 10-3 bewirkt werden. Je größer jedoch die Anzahl verschiedenartig gestalteter Vorderflächen 16-1, 16-2, 16-3 ist, desto größer wäre demgemäß auch der Bedarf an entsprechend angepassten Kontaktabschnitten 38-1, 38-2, 38-3. Je größer also die Inhomogenität bzw. Diversität von Brillenglashalbfabrikaten 10, 12 hinsichtlich ihrer Vorderflächengestaltung ist, umso größer der Aufwand zur Bereitstellung adäquater Kontaktabschnitte 38 bzw. mit diesen versehene Aufnahmeeinrichtungen 34.

Jeder der Kontaktabschnitte 38-1, 38-2, 38-3 der Fig. 3, 4 und 5 kann -wie im dargestellten Fall-Bestandteil eines eigenständigen Trägers 34-1, 34-2, 34-3 sein, vgl. auch Fig. 2. Umgekehrt ist es jedoch auch vorstellbar, die Kontaktabschnitte 38-1, 38-2, 38-3 als Adapter auszuführen und somit bei Bedarf an einem entsprechenden Träger 34 zu befestigen.

Die Tatsache der Notwendigkeit einer an die Vorderflächengeometrie des Brillenglashalbfabrikats angepassten Aufnahmeeinrichtung zur Sicherstellung einer sicheren Fixierung des Brillenglashalbfabrikats während dessen Rückflächenbearbeitung gilt nicht nur für den vorstehend detailliert diskutierten Fall der Verwendung eines Vakuumblockers 34 als Aufnahmeeinrichtung zum Aufnehmen eines Brillenglashalbfabrikats 10, sondern generell. Es ist jedoch in Anbetracht des bis zum Zeitpunkt der Erfindung sehr inhomogenen Angebots an Halbfabrikaten zur Herstellung von Brillengläsern, insbesondere von Gleitsichtgläsern und ähnlich komplexen Gläsern, nur wenigen Brillenglasherstellern möglich, Aufnahmeeinrichtungen vorzuhalten, mit denen die Mehrzahl dieser Brillenglashalbfabrikate gehaltert werden können.

Die Erfindung schlägt daher vor, Vorderflächengestalten insbesondere Krümmungsradien für Kontaktflächen der Vorderflächen von Brillenglashalbfabrikaten 10, 12 global zu definieren, so dass sich eine überschaubare Menge verschiedener Kontaktflächengeometrien ergibt. Ein derartiges Konzept wird anhand der in Fig. 6 gezeigten tabellarischen Darstellung veranschaulicht. Fig. 6 zeigt einen Zuordnung von Brillenglashalbfabrikattypen und damit entsprechenden Aufnahmeeinrichtungstypen zu einer globalen Definition bzw. einer globalen Standardisierung körperlicher Formmerkmale, insbesondere einer globalen Definition von Krümmungsradien für Kontaktflächen der sphärischen Vorderflächen der Brillenglashalbfabrikate 10, 12. Es wird hiermit noch einmal ausdrücklich klargestellt, dass als Kontaktfläche die gesamte Vorderfläche oder nur eine Teilfläche der Vorderfläche dienen kann. Anstelle der Kugelform kann die Vorderfläche auch rotationssymmetrisch asphärisch ausgebildet sein. Weiterhin wird hiermit klargestellt, dass ein Brillenglashalbfabrikattyp durch das Formmaß seines Formmerkmals bestimmt ist. Dies bedeutet, dass im vorliegenden Ausführungsbeispiel ein Brillenglashalbfabrikattyp durch die Größe des Radius seiner sphärischen Vorderfläche definiert ist.

Die beispielhafte Zuordnungstabelle ist insgesamt mit 60 bezeichnet. Eine mit 62 bezeichnete Spalte veranschaulicht - lediglich schematisch - festgelegte Werte für Krümmungsradien oder ähnliche körperliche Formmerkmale, die gemäß einer Zeilennummerierung mit R1 bis R20 bezeichnet sind. Die in Spalte 62 definierten Radien R1 bis R20 stellen gewissermaßen eine Maximalmenge dar, aus der entsprechende Vertreter bei der Definition von Brillenglashalbfabrikattypen eines Satzes ausgewählt werden können. Der Einfachheit halber wird angenommen, dass der entsprechende Wert des jeweiligen Radius R1 bis R20 von oben nach unten in der Tabelle 62, also mit zunehmender Zeilennummer, zunimmt.

Es ist bevorzugt, wenn zu jedem Radius R1 bis R20 gemäß der Spalte 62 ein entsprechender Kontaktabschnitt 38 bzw. ein mit einem Kontaktabschnitt 38 versehene Aufnahmeeinrichtung 34 vorgesehen ist, deren Aufnahmesitz 40 zur Aufnahme einer Kontaktfläche mit dem Krümmungsradius R1 bis R20 gestaltet ist, vgl. auch Fig. 2 bis Fig. 5. In der Zuordnungstabelle 60 veranschaulicht eine mit 64 bezeichnet Spalte einen entsprechenden Satz von Aufnahmeeinrichtungen 34.

Sofern nun also bei der Auslegung von Vorderflächengeometrien von Brillenglashalbfabrikaten die globale Definition 62 von Radien R1 bis R20 als "Eingangsgröße" genutzt wird, wird automatisch sichergestellt, dass das sich ergebende Halbfabrikat 10, 12 in gewünschter Weise aufgeblockt und weiterverarbeitet werden kann.

In Fig. 6 veranschaulichen mit 66-1, 66-2, 66-3 bezeichnete Spalten verschiedene Serien von Brillenglashalbfabrikaten 10, 12, die gemäß der globalen Konvention oder Definition der Radien R1 bis R20 ausgewählt worden sind. Jede Serie umfasst demzufolge eine Mehrzahl an Brillenglashalbfabrikattypen, die durch die Krümmungsradien der Vorderflächen der einzelnen Brillenglashalbfabrikate festgelegt sind.

Es versteht sich, dass die Anzahl der gemäß der globalen Definition 62 vordefinierten unterschiedlichen Radien R1 bis R20 lediglich beispielhaft zu Veranschaulichungszwecken gewählt ist. Allgemein ist es vorstellbar, dass die globale Definition 62 etwa zwischen 5 und 25 verschiedene Radien umfasst. Insbesondere kann die globale Definition 62 etwa 10 bis 20 verschiedenen Radien umfassen.

Die verschiedenen Serien 66-1, 66-2, 66-3 unterscheiden sich hinsichtlich ihres Werkstoffs und somit hinsichtlich ihres mittleren Brechungsindex voneinander. Auch im Hinblick auf andere optische Eigenschaften können sich die verschiedenen Serien 66-1, 66-2, 66-3 voneinander unterscheiden. Insbesondere können die Serien oder auch einzelne Halbfabrikate innerhalb einer Serie eine oder mehrere Beschichtungen aufweisen. Maßgeblich ist vorliegend allerdings lediglich der Werkstoff des Trägers oder des Substrats, welcher im Rahmen der vorliegenden Beschreibung als Grundmaterial bezeichnet wird.

Es kann zwischen den Serien 66-1, 66-2, 66-3 Unterschiede hinsichtlich der Nachfrage seitens der Patienten bzw. Kunden geben. Beispielhaft kann es sich bei der Serie 66-1 nach der ersten Spalte #1 um eine stark nachgefragten Serie von Halbfabrikaten 10, 12 handeln. Die Halbfabrikate der Serie 66-2 nach der zweiten Spalte #2 werden weniger als die Halbfabrikate der Serie 66-1 nach der ersten Spalte nachgefragt. Die Halbfabrikate der Serie 66-3 nach der dritten Spalte #3 werden noch weniger als die Halbfabrikate der Serie 66-2 nach der zweiten Spalte #2 nachgefragt. Weiterhin werden Radien mittlerer Größe, also entsprechend den Nummern R7 bis R14 stärker nachgefragt, als kleine oder große Radien R1 bis R6 und R15 bis R20.

Demgemäß kann es wünschenswert sein, bei der Serie 66-1 von der kleinsten Spreizung oder Abstufung zwischen den Radien R1 bis R20 Gebrauch zu machen. Mit anderen Worten kann die Serie 66-1 etwa eine Menge an durch die Radien R1 bis R20 gekennzeichneten Halbfabrikattypen umfassen, die der maximal verfügbaren globalen Menge gemäß Spalte 62 entspricht. Auf diese Weise ist eine feine Abstufung gewährleistet. Zur Erzeugung gewünschter optischer Eigenschaften sind regelmäßig nur vergleichsweise geringe formgebende Bearbeitungen der Rückflächen erforderlich.

Demgegenüber umfasst die in Fig. 6 mit 66-3 bezeichnete Serie eine deutlich reduzierte Anzahl an Brillenglashalbfabrikattypen (markierte Felder in den Zeilen No. 3, 7, 10, 13, 18 in der Spalte 66-3), die als Untermenge der maximal verfügbaren Anzahl an Radien R1 bis R20 bzw. Brillenglashalbfabrikattypen in Spalte 62 ausgewählt ist. Auf diese Weise kann der Aufwand zur Erzeugung der Halbfabrikate 10, 12 begrenzt werden. Umgekehrt kann ein erhöhter Bearbeitungsaufwand in Kauf genommen werden, um gewünschte optische Eigenschaften ausgehend von lediglich einer begrenzten Anzahl an Brillenglashalbfabrikattypen zu erzeugen.

Die in Fig. 6 mit 66-2 bezeichnete Spalte betrifft Brillenglashalbfabrikate 10, 12, für die etwa eine mittlere Nachfrage besteht. Es kann daher von Vorteil sein, bestimmte Bereiche, insbesondere bestimmte Bereiche von Krümmungsradien, feiner abzustufen als andere Bereiche, insbesondere als Randbereiche der Spalte 62. Üblicherweise schwankt auch die Nachfrage innerhalb einer Serie 66 von Brillenglashalbfabrikattypen in Abhängigkeit von der auf Basis des Brillenglashalbfabrikattyps erzielbaren optischen Korrektur. Es kann daher von Vorteil sein, Brillenglashalbfabrikattypen einer Serie 66, die (bezogen auf die Serie) einer höheren Nachfrage unterliegen, mit geringerer Schrittweite zu definieren, vgl. etwa den mittigen Abschnitt bei der Serie 66-2.

Aus einer Mehrzahl von Serien 66-1, 66-2, 66-3 kann ein Satz 68 gebildet werden. Der Satz 68 von Brillenglashalbfabrikaten umfasst demnach eine Mehrzahl an Serien 66-1, 66-2, 66-3, die jeweils wiederum eine Mehrzahl an Brillenglashalbfabrikattypen No. 1 bis 20 umfassen, die selbst wiederum eine Mehrzahl an einzelnen Brillenglashalbfabrikaten umfassen. Die einzelnen Serien unterscheiden sich im Grundmaterial der Brillenglashalbfabrikate. Die einzelnen Brillenglashalbfabrikattypen No. 1 bis 20 unterscheiden sich vorliegend durch deren Krümmungsradien R1 bis R20. Das heißt, dass alle Brillenglashalbfabrikate eines Brillenglashalbfabrikattyps No. 1, No. 2, ... No. 20 denselben Krümmungsradius R1, R2, ... R20 aufweisen. Es spielt keine Rolle, ob einzelne oder eine Mehrzahl der Brillenglashalbfabrikate eines Typs und/oder einer Serie eine Beschichtung tragen oder nicht.

Gleichwohl ist sichergestellt, dass jedes Brillenglashalbfabrikat innerhalb der Serien 66-1, 66-2, 66-3 des Satzes 68 der globalen Definition 62 unterliegt und somit mit einer Aufnahmeeinrichtung 34, insbesondere einem Kontaktabschnitt 38 gemäß dem Satz 64 von Aufnahmeeinrichtungen 34 aufgenommen, insbesondere geblockt werden kann.

Es kann ferner von Vorteil sein, zumindest eine Paarung 72 aus einer Serie 66-1, 66-2, 66-3 von Halbfabrikaten 10, 12 sowie dem Satz 64 von Aufnahmeeinrichtungen 34 bzw. entsprechenden zugehörigen Kontaktabschnitten 38 zu bilden. Das Zusammenfassen in der Paarung 72 stellt sicher, dass für jeden Brillenglashalbfabrikattyp der Serie 66-1, 66-2, 66-3 eine geeignete Aufnahmeeinrichtung 34 bzw. ein geeigneter Kontaktabschnitt 38 des Satzes 64 verfügbar ist.

Ferner kann es sich empfehlen, eine Paarung 74 zu bilden, die den Satz 68 von Serien 66-1, 66-2, 66-3 von Brillenglashalbfabrikattypen No.1, No.2, ... No. 20 sowie den diesen zugeordneten Satz 64 von Aufnahmeeinrichtungen 34 umfasst. Auch bei der Paarung 74 ist sichergestellt, dass jeder Brillenglashalbfabrikattyp No.1, No.2, ... No. 20 in geeigneter Weise geblockt, gehandhabt und bearbeitet werden kann.

Fig. 7 und Fig. 8 veranschaulichen die Zuordnung von Brillenglashalbfabrikattypen, die durch bestimmte Krümmungsradien gekennzeichnet sind, zu optischen Korrekturen, die auf Basis des entsprechenden Brillenglashalbfabrikattyps (funktional und/oder wirtschaftlich sinnvoll) erzeugbar sind.

In den Fig. 7 und 8 bezeichnet die Achse 80 die sphärische Brechkraft des zu erzeugenden Brillenglases in Dioptrien D. Ferner bezeichnet die Achse 78 die astigmatische Wirkung in Dioptrien D (Minuszylinderkonvention). Ein weiterer Parameter, der den Fig. 7 und 8 zugrunde liegt, ist die mögliche Addition für Gleitsichtgläser. Die Diagramme nach den Fig. 7 und 8 gelten für Additionen im Bereich zwischen 2,25 und 2,5 D.

Jede der Fig. 7 und 8 beschreibt eine Serie 66-4, 66-5 von Halbfabrikattypen, welche durch die Krümmungsradien R4, R5, R6, ... R16 der Vorderflächen der Halbfabrikate gekennzeichnet sind. Die Serien 66-4, 66-5 gemäß den Fig. 7 und 8 unterscheiden sich voneinander hinsichtlich ihres mittleren Brechungsindex $n_d$ ihres Grundmaterials. Der Darstellung in Fig. 7 liegt ein Werkstoff mit einem Brechungsindex von $n_d$ = 1,6 zugrunde. Der Darstellung in Fig. 8 liegt ein Werkstoff mit einem Brechungsindex von $n_d$ = 1,67 zugrunde.

Jeder Brillenglashalbfabrikattyp, also etwa Halbfabrikate, die einen bestimmten Krümmungsradius Ri mit i = 1 ... 20 aufweisen, kann einem bestimmten Bereich der sphärischen Brechkraft und einem bestimmten Bereich der astigmatischen Korrektur zugeordnet werden, die auf dessen Basis erzeugbar sind. Es versteht sich, dass in Anbetracht der voneinander abweichenden Brechungsindizes $n_d$ der Grundmaterialien nach den in den Fig. 7 und 8 gezeigten Darstellungen auf Basis von Brillenglashalbfabrikattypen mit gleichen Krümmungsradien bei unterschiedlichen Werkstoffen keine identischen Bereiche abgedeckt werden können.

Nach der Darstellung in Fig. 7 umfasst die Serie 66-4 zwölf verschiedene Brillenglashalbfabrikattypen mit zwölf verschiedenen Krümmungsradien R5 bis R16. Der Darstellung in Fig. 8 entnimmt man, dass die Serie 66-5 dreizehn verschiedene Brillenglashalbfabrikattypen mit dreizehn verschiedenen Krümmungsradien R4 bis R16 umfasst. Die Krümmungsradien R4 bis R16 sind in Fig. 7 und Fig. 8 jeweils in Millimetern angegeben.

Die Krümmungsradien der Brillenglashalbfabrikattypen in den Fig. 7 und 8 sind einer gleichen globalen Definition von Krümmungsradien 62 zugeordnet. Auf Basis des Werkstoffs mit dem höheren Brechungsindex (vgl. Fig. 8) können grundsätzlich Brillengläser mit stärkeren optischen Korrekturen erzeugt werden, etwa um einen größeren Bereich für die sphärische Brechkraft abzudecken.

Die Graphiken nach den Figuren 9 und 10 entsprechen inhaltlich vollumfänglich den Darstellungen nach den Figuren 7 und 8. Die Figur 9 zeigt insbesondere die Zuordnung von Brillenglashalbfabrikattypen, die durch bestimmte Krümmungsradien gekennzeichnet sind, zu optischen Korrekturen, die auf Basis des entsprechenden Brillenglashalbfabrikattyps (funktional und/oder wirtschaftlich sinnvoll) erzeugbar sind für die Serie 66-4 von Halbfabrikattypen, welche durch die Krümmungsradien R5, R6, ... R16 der Vorderflächen der Halbfabrikate gekennzeichnet sind und die auf Halbfabrikaten aus dem Grundmaterial mit einem Brechungsindex von $n_d$ = 1,6 basiert. Die Figur 10 zeigt insbesondere die Zuordnung von Brillenglashalbfabrikattypen, die durch bestimmte Krümmungsradien gekennzeichnet sind, zu optischen Korrekturen, die auf Basis des entsprechenden Brillenglashalbfabrikattyps (funktional und/oder wirtschaftlich sinnvoll) erzeugbar sind für die Serie 66-5 von Halbfabrikattypen, welche durch die Krümmungsradien R4, R5, R6, ... R16 der Vorderflächen der Halbfabrikate gekennzeichnet sind und die auf Halbfabrikaten aus dem Grundmaterial mit einem Brechungsindex von $n_d$ = 1,67 basiert.

Anstelle der Werte der Krümmungsradien R4, R5, R6, ... R16 in Millimetern zeigen die Figuren 9 und 10 den entsprechenden auf einen Standardbrechungsindex $n_s$ von 1,53 bezogenen tatsächlichen Flächenbrechwert $D_n$, welcher durch eine Umrechnung nach der Formel

$$D_n = (1-n_s)/R \qquad (2)$$

aus dem zuvor angegebenen Radius R erhältlich ist. Den Figuren 9 und 10 entnimmt man folgende einfache Auslegungsregel für den die Brillenglashalbfabrikatserien 66-4 und 66-5 umfassenden Satz von Halbfabrikaten:
Die erste Serie 66-4 und die zweite Serie 66-5 weisen jeweils Typen von Brillenglashalbfabrikaten auf, deren Vorderflächen eine tatsächliche Flächenbrechkraft mit identischen auf einen Standardbrechungsindex von 1,53 bezogenen tatsächlichen Flächenbrechwerten auf, nämlich mit den Werten $D_n$ = 0,5; 1,4; 2,3; 3,2; 4,0; 4,7; 5,4; 6,0; 6,7; 7,4; 8,0 und 8,8.

Das Angleichen der auf den Standardbrechungsindex von 1,53 bezogenen tatsächlichen Flächenbrechwerte der Vorderflächen der unterschiedlichen Typen der ersten Serie 66-4 und der auf den Standardbrechungsindex von 1,53 bezogenen tatsächlichen Flächenbrechwerte der Vorderflächen der unterschiedlichen Typen der zweiten Serie 66-5 ist derart erfolgt, dass die Differenz zwischen einem der identischen auf den Standardbrechungsindex von 1,53 bezogenen tatsächlichen Flächenbrechwert zum nächstgrößeren identischen auf den Standardbrechungsindex von 1,53 bezogenen tatsächlichen Flächenbrechwert, nämlich den tatsächlichen Flächenbrechwerten zwischen dem durch R16 gekennzeichneten Typ und dem durch R15 gekennzeichneten Typ oder zwischen dem durch R15 gekennzeichneten Typ und dem durch R14 gekennzeichneten Typ usw. kleiner als ein vorgegebener Schwellwert ist. Die Differenzwerte liegen sämtlich im Bereich zwischen 0,6 D und 0,8 D sind damit sämtlich kleiner als 0,85 D.

Das Angleichen der auf den Standardbrechungsindex von 1,53 bezogenen tatsächlichen Flächenbrechwerte der Vorderflächen der unterschiedlichen Typen der ersten Serie 66-4 und der auf den Standardbrechungsindex von 1,53 bezogenen tatsächlichen Flächenbrechwerte der Vorderflächen der unterschiedlichen Typen der zweiten Serie 66-5 ist derart erfolgt, dass die Differenz zwischen einem der identischen auf den Standardbrechungsindex von 1,53 bezogenen tatsächlichen Flächenbrechwert zum nächstgrößeren identischen auf den Standardbrechungsindex von 1,53 bezogenen tatsächlichen Flächenbrechwert, nämlich den tatsächlichen Flächenbrechwerten zwischen dem durch R16 gekennzeichneten Typ und dem durch R15 gekennzeichneten Typ oder zwischen dem durch R15 gekennzeichneten Typ und dem durch R14 gekennzeichneten Typ usw. innerhalb eines Varianzbereichs von 15 % identisch mit einem fest vorgegebenen Differenzwert ist. Der vorgegebene Differenzwert beträgt im Ausführungsbeispiel 0,7 D und die Varianz 0,1 D.

Obwohl die Figuren 7 bis 10 lediglich exemplarisch zwei Serien 66-4, 66-5 mit Halbfabrikaten unterschiedlichen Grundmaterials zeigen, ist es für den Fachmann evident, wie entsprechende Diagramme für das der Figur 6 zugrundeliegende Ausführungsbeispiel des Satzes 68 mit den drei Serien 66-1, 66-2, 66-3 von Halbfabrikaten prinzipiell aussehen. Legt man für diesen Satz 68 dieselben Werte für Radien R4 bis R13 zugrunde, wie sie in den Figuren 7 und 8 zu entnehmen sind, so ersieht man in Fig. 6, dass die Serien 66-1, 66-2, 66-3 von Halbfabrikaten innerhalb des auf einen Standardbrechungsindex von 1,53 bezogenen tatsächlichen Flächenbrechwertbereichs ihrer Vorderfläche zwischen 3,2 D und 6,7 D drei paarweise unterschiedliche Typen No. 7, 10 und 13 entsprechend den Radien R7, R10 und R13 aufweisen, die allen Serien 66-1, 66-2, 66-3 gemein bzw. in allen drei Serien 66-1, 66-2, 66-3 identisch sind.

Nimmt man an, dass die erste Serie 66-1 ausschließlich Halbfabrikate aus einem Grundmaterial mit einem mittleren Brechungsindex $n_{d1}$ von 1,5, die zweite Serie 66-2 ausschließlich Halbfabrikate aus einem Grundmaterial mit einem mittleren Brechungsindex $n_{d2}$ von 1,6 und die dritte Serie 66-3 ausschließlich Halbfabrikate aus einem Grundmaterial mit einem mittleren Brechungsindex $n_{d3}$ von 1,74 umfassen, so ist auch die Bedingung erfüllt, dass sich die mittleren Brechungsindices $n_{d1}$, $n_{d2}$, $n_{d3}$ der drei Serien 66-1, 66-2, 66-3 um wenigstens 0,06 unterscheiden.

Die Differenz zwischen jeweils einem der identischen Flächenbrechwerte zum jeweiligen nächstgrößeren identischen Flächenbrechwert beträgt 1,5 D (No. 13, zu No. 11) bzw. 1,3 D (No. 11 zu No. 9). Damit ergibt sich ein Mittelwert von 1,4 D und eine Varianz von 0,1 D. Die Varianz liegt demnach unter 7,5 %.

Fig. 6 entnimmt man weiter, dass die Serien 66-1, 66-2, 66-3 von Halbfabrikaten innerhalb des auf einen Standardbrechungsindex von 1,53 bezogenen tatsächlichen Flächenbrechwertbereichs ihrer Vorderfläche zwischen 0,5 D (entsprechend No. 5) und 9,6 D (entsprechend No. 3) neben den bei allen drei Serien vorliegenden unterschiedlichen Typen No. 7, 10 und 13 entsprechend den Radien R7, R10 und R13 auch die Typen No. 5 und No. 3 entsprechend den Radien R3 und R5 bei allen drei Serien 66-1, 66-2, 66-3 von Halbfabrikaten in identischer Weise vorhanden sind.

Fig. 11 veranschaulicht in stark vereinfachter schematischer Weise anhand einer Blockdarstellung ein Fertigungssystem 88 zur Fertigung von Brillengläsern aus organischen Werkstoffen. Das Fertigungssystem 88 umfasst im vorliegenden Ausführungsbeispiel eine Steuereinrichtung 90, die etwa auch als Leitrechner oder Prozessrechner bezeichnet werden kann. Die Steuereinrichtung kann mit verschiedenen Komponenten bzw. Einrichtungen des Systems 88 kommunizieren. Das Fertigungssystem 88 umfasst ferner eine Handhabungseinrichtung 92, die Mittel zur Handhabung von Halbfabrikaten 10, 12 bereitstellt, auf deren Basis die Brillengläser erzeugt werden. Insbesondere kann die Handhabungseinrichtung 92 dazu ausgestaltet sein, eine Aufnahmeeinrichtung 34 (vgl. Fig. 2) für die Brillenglashalbfabrikate 10, 12 zu greifen, zu verfahren und/oder umzusetzen. Die Handhabungseinrichtung 92 kann mit weiteren Komponenten des Fertigungssystems 88 gekoppelt sein, um diese Aufnahmeeinrichtung 34 mit daran aufgenommenen Brillenglashalbfabrikaten 10, 12 zuzuführen bzw. um die Aufnahmeeinrichtung 34 mit einem daran aufgenommenen Brillenglashalbfabrikat 10, 12 von diesen abzuführen.

Das Fertigungssystem 88 umfasst im vorliegenden Ausführungsbeispiel ein Lager 94, in dem ein Satz 68 von Serien 66 von Brillenglashalbfabrikaten 10, 12 der vorstehend beschriebenen erfindungsgemäßen Art bereitgestellt wird. Alternativ kann das Fertigungssystem 88 auch mit dem Lager 94 und/oder ggf. einem oder mehreren weiteren (in der Figur nicht gezeigten) Lagern gekoppelt werden. Sofern sämtliche Serien 66 im Lager 94 der globalen Konvention bzw. Festlegung der Kontaktflächen, insbesondere der Krümmungsradien, entsprechen, ist sichergestellt, dass jedes Brillenglashalbfabrikat 10 aus dem Lager 94 aufgeblockt und bearbeitet werden kann.

Das Fertigungssystem 88 ist ferner mit einem Lager 96 für Aufnahmeeinrichtungen 34 bzw. für Kontaktabschnitte 38 für Aufnahmeeinrichtungen 34 koppelbar, wobei die Aufnahmeeinrichtungen 34 einem Satz 64 von Aufnahmeeinrichtungen 34 der oben beschriebenen Art zugeordnet sind. Es ist bevorzugt, wenn sämtliche Kontaktabschnitte 38 bzw. Aufnahmeeinrichtungen 34 im Lager 96 gemäß der globalen Definition oder Konvention gestaltet sind. Auf diese Weise ist für jeden Brillenglashalbfabrikattyp der Serien 66-1, 66-2, 66-3 ein passender Kontaktabschnitt 38 vorhanden.

Nach dem Eingang eines Fertigungsauftrags können etwa mittels der Handhabungseinrichtung 92 Brillenglashalbfabrikate 10, 12 aus Serien 66-1, 66-2, 66-3 des Satzes 68 ausgewählt und einer Aufblockstation 98 zugeführt werden. Ferner kann eine Aufnahmeeinrichtung 34 mit einem Kontaktabschnitt 38, der etwa an einen Krümmungsradius einer Vorderfläche des gewählten Brillenglashalbfabrikats 10, 12 angepasst ist, aus dem Lager 96 entnommen und der Aufblockstation 98 zugeführt werden.

In der Aufblockstation 98 kann der gewählte Rohling 10, 12 auf der Aufnahmeeinrichtung 34 aufgeblockt werden. Das Aufblocken kann insbesondere ein Blocken mittels Unterdruck bzw. ein Vakuumblocken umfassen. Auf diese Weise kann ein Verbund bestehend aus der Aufnahmeeinrichtung 34 und dem Brillenglashalbfabrikat 10, 12 erzeugt werden. Der Verbund kann zu einer Bearbeitungsstation 100 transferiert werden, die etwa als Schleifstation, Frässtation, Drehstation oder in ähnlicher Weise ausgestaltet ist. In der Bearbeitungsstation 100 kann die Rückfläche des geblockten Brillenglashalbfabrikats 10, 12 bearbeitet werden. Dank der Aufnahmeeinrichtung 38 kann das Brillenglashalbfabrikat 10, 12 hochgenau in der Bearbeitungsstation 100 aufgenommen und demgemäß präzise bearbeitet werden.

Es schließt sich beispielhaft ein Transfer zu einer Polierstation 102 an. Die Polierstation 102 ist dazu vorgesehen und ausgestaltet, die bearbeitete Rückfläche des Brillenglashalbfabrikats 10, 12 zu polieren.

Es kann sich ein weiterer Transfer zu einer Abblockstation 104 anschließen, in der das geblockte Brillenglashalbfabrikat 10, 12 von der Aufnahmeeinrichtung 34 entnommen bzw. abgeblockt wird. Dies kann beispielsweise im Falle des Vakuumblockens durch einen Druckausgleich erfolgen. Nach dem Abblocken kann das Brillenglashalbfabrikat 10, 12 (der mittlerweile weiter bearbeitet ist) von der Aufnahmeeinrichtung 34 gelöst und unabhängig von dieser weiter gehandhabt und bearbeitet werden.

Demgemäß kann das Brillenglashalbfabrikat 10, 12 etwa zu einer Oberflächenbearbeitungsstation 106 transferiert werden. Die Oberflächenbearbeitungsstation 106 kann etwa als Beschichtungsstation oder in ähnlicher Weise ausgestaltet sein. Beispielhaft kann in der Oberflächenbearbeitungsstation 106 eine Hartbeschichtung auf die Vorderfläche und/oder die Rückfläche des Rohlings 10, 12 aufgebracht werden. Auf diese Weise kann das gewünschte Brillenglas fertiggestellt werden.

Es kann sich eine Endkontrollstation 108 anschließen, zu der das Brillenglas transferiert wird. Die Endkontrollstation 108 ist dazu vorgesehen und ausgestaltet, eine Endkontrolle des Brillenglases insbesondere hinsichtlich seiner optischen und/oder mechanischen Eigenschaften durchzuführen.

Die Handhabung des Brillenglashalbfabrikats 10, 12 bzw. der Aufnahmeeinrichtung 34, an dem das Brillenglashalbfabrikat aufgenommen werden kann, kann durch die Handhabungseinrichtung 92 erfolgen. Es versteht sich ferner, dass zumindest einigen der Stationen 89, 100, 102, 104, 106 entsprechende Kontrollstationen bzw. Prüfstationen vor- oder zwischengeordnet sein können. Insbesondere ist das Fertigungssystem 88 dazu ausgestaltet, mittels einer überschaubaren Anzahl von Aufnahmeeinrichtungen 34 bzw. von Kontaktabschnitten 38 für die Aufnahmeeinrichtungen 34, eine hohe Variantenvielfalt von Brillenglashalbfabrikaten 10, 12 handhaben und bearbeiten zu können.

Fig. 12 veranschaulicht in stark vereinfachter Weise anhand eines Blockdiagramms eine beispielhafte Ausgestaltung eines Verfahrens zur Herstellung von Brillengläsern, das von verschiedenen Aspekten der vorliegenden Offenbarung Gebrauch macht. Das in der Fig. 12 gezeigte Verfahren umfasst einen Schritt S10, der die Bereitstellung eines Satzes von Halbfabrikaten. Der Satz weist eine begrenzte Anzahl von Brillenglashalbfabrikattypen auf, wobei jeder Brillenglashalbfabrikattyp eine definierte Kontaktfläche mit zumindest einem standardisierten körperlichen Formmerkmal aufweist. Bei dem zumindest einen körperlichen Formmerkmal kann es sich etwa um eine Kontaktflächengestalt der Vorderfläche des Brillenglashalbfabrikats, insbesondere um die gesamte Vorderflächengestalt handeln. Vorzugsweise handelt es sich bei dem körperlichen Formmerkmal um eine Vorderflächenkrümmung bzw. allgemein um eine Kontaktflächenkrümmung.

Ein weiterer Schritt S12 umfasst die Festlegung zumindest einer gewünschten optischen Eigenschaft eines herzustellenden Brillenglases. Der Schritt S12 kann etwa auf Basis von Daten durchgeführt werden, die eine Fehlsichtigkeit eines Patienten bzw. Kunden beschreiben. Hierzu gehört z.B. die Verordnung, welche von einem Optiker, einem Augenarzt oder einer anderen vorzugsweise in entsprechender Weise ausgebildeten Person erstellt wurde. Daten, die die voraussichtlichen Gebrauchsbedingungen beschreiben können ggf. ebenfalls berücksichtigt werden.

Im vorliegenden Ausführungsbeispiel schließt sich ein Schritt S14 an, der die Auswahl eines Brillenglashalbfabrikats aus dem bereitgestellten Satz von Brillenglashalbfabrikaten umfasst. Dies kann insbesondere unter Berücksichtigung des Schritts S12 erfolgen, bei dem die gewünschte optische Eigenschaft festgelegt wird. Die Wahl des Brillenglashalbfabrikattyps, dem das zu wählende Brillenglashalbfabrikat entspricht, sollte unter der Maßgabe erfolgen, dass auf Basis des Brillenglashalbfabrikattyps die gewünschte optische Eigenschaft tatsächlich erzeugbar ist.

In dem vorgestellten Ausführungsbeispiel schließt sich ein Schritt S16 an, der die Auswahl einer Aufnahmeeinrichtung bzw. die Auswahl eines Kontaktabschnitts für eine Aufnahmeeinrichtung umfasst, die bzw. der dazu ausgebildet ist, das gewählte Brillenglashalbfabrikat sicher und fest aufnehmen zu können. Auf diese Weise kann das sogenannte Aufblocken des Brillenglashalbfabrikat an der Aufnahmeeinrichtung deutlich vereinfacht werden. Insbesondere kann der Schritt S16 die Auswahl eines Kontaktabschnitts umfassen, der geometrisch an das standardisierte körperliche Formmerkmal des Brillenglashalbfabrikattyps angepasst ist. Beispielhaft kann der Kontaktabschnitt einen Aufnahmesitz umfassen, der einen Krümmungsradius aufweist, der im Wesentlichen dem Krümmungsradius der Kontaktfläche bzw. der Vorderfläche des Brillenglashalbfabrikats entspricht.

Es folgt im Beispiel ein weiterer Schritt S18, der ein Aufblocken des Brillenglashalbfabrikats auf der Aufnahmeeinrichtung bzw. auf dessen Kontaktabschnitt umfasst. Insbesondere kann der Schritt S18 ein Vakuumblocken umfassen. Auf diese Weise kann das Brillenglashalbfabrikat kraftschlüssig auf der Aufnahmeeinrichtung aufgenommen werden, ohne dass es einer stoffschlüssigen Verbindung bedarf.

Es schließt sich ein weiterer Schritt S20 an, der eine Bearbeitung des aufgeblockten Brillenglashalbfabrikats umfasst. Das an der Aufnahmeeinrichtung aufgeblockte Brillenglashalbfabrikat kann präzise und sicher für die Bearbeitung aufgenommen werden, so dass eine hochgenaue Bearbeitung ermöglicht ist. Insbesondere kann die Bearbeitung der Rückfläche des Brillenglashalbfabrikats z.B. in der oben beschriebenen Weise die Rückfläche in ihrer Form verändernd erfolgen. Weitere Bearbeitungsschritte, wie z.B. das Applizieren einer oder mehrerer Funktionsschichten, wie dies in der Beschreibungseinleitung dargelegt ist.

Fig. 13 zeigt anhand eines stark vereinfachten schematischen Blockdiagramms eine alternative Ausgestaltung eines Verfahrens zur Herstellung von Brillengläsern. Das anhand der Fig. 13 veranschaulichte Verfahren kann zumindest in wesentlichen Aspekten dem anhand der Fig. 12 veranschaulichten Verfahren ähnlich gestaltet sein. Das Verfahren nach der Fig. 13 umfasst einen Schritt S40, der die Bereitstellung eines Satzes von Serien von Brillenglashalbfabrikaten umfasst. Jede der Serien des Satzes umfasst Brillenglashalbfabrikate, die aus einem gleichen Werkstoff hergestellt sind. Innerhalb jeder Serie des Satzes sind mehrere Brillenglashalbfabrikattypen vorgesehen, wobei jeder Typ jeder Serie des Satzes einer globalen Definition standardisierter körperlicher Formmerkmale zugehörig ist.

Es schließt sich ein Schritt S42 an, der die Festlegung zumindest einer optischen Eigenschaft umfasst. Auf Basis des Schritts S42 kann eine Vorauswahl bezüglich einer geeigneten Serie getroffen werden. Dies erfolgt in einem Schritt S44. Es schließt sich ein Schritt S46 an, der die Auswahl eines Brillenglashalbfabrikats aus der Serie umfasst, die im Schritt S44 ausgewählt wurde. Das Brillenglashalbfabrikat kann insbesondere unter Berücksichtigung der gewünschten optischen Eigenschaft bzw. der gewünschten optischen Korrektur ausgewählt werden.

Der Schritt S44, der die Vorauswahl einer Serie betrifft, kann neben der Auswahl eines Werkstoffs oder Grundmaterials mit einem gewünschten Brechungsindex, die Auswahl einer bestimmten Beschichtung und/oder die Auswahl einer bestimmten Einfärbung umfassen die bereits beim Halbfabrikat erzeugt worden sind.

An die Schritte S40 bis S46 können sich weitere Handhabungsschritte und Bearbeitungsschritte anschließen, die grundsätzlich den in Fig. 12 gezeigten und vorstehend beschriebenen Schritten S16, S18 und S20 entsprechen können.

Fig. 14 zeigt anhand eines Blockdiagramms eine beispielhafte Ausgestaltung eines Bearbeitungsschrittes, der etwa dem Schritt S20 gemäß Fig. 12 entspricht. Es wird vorausgesetzt, dass dem Schritt S20 ein Aufblocken eines Brillenglashalbfabrikats mit seiner sphärischen oder rotationssymmetrisch asphärischen Vorderseite auf einer Aufnahmeeinrichtung vorgeschaltet ist.

Der Bearbeitungsschritt S20 weist einen Teilschritt S50 auf, in dem die Rückfläche des Brillenglashalbfabrikats durch Fräsen eine gewünschte Gleitsichtgeometrie erhält. Andere optische Korrekturen auf der Rückseite des Brillenglashalbfabrikats durch den Teilschritt S50 sind natürlich möglich.

An den Teilschritt S50 schließt sich ein Teilschritt S52 an, der eine Kontrolle des formgefrästen Brillenglashalbfabrikats beinhaltet. Insbesondere kann der Teilschritt S52 eine Überprüfung der Kontur der erzeugten Oberflächengeometrie, eine Überprüfung der Rauigkeit der erzeugten Oberflächengeometrie und/oder eine Überprüfung der Ausrichtung der erzeugten Rückfläche zur Vorderfläche umfassen.

In dem Teilschritt S54 findet ein Polieren der Rückfläche des gefrästen Rohlings statt. Das Brillenglas erhält durch den Poliervorgang seine gewünschte optische Transparenz.

An den Teilschritt S54 schließt sich ein Teilschritt S56 an, der eine Qualitätsprüfung oder Kontrolle des Polierergebnisses umfasst.

Ein weiterer nachgelagerte Teilschritt S58 umfasst ein Abblocken des Brillenglashalbfabrikats. Das Brillenglashalbfabrikat wird von der Aufnahmeeinrichtung getrennt. Im Falle der Verwendung eines Vakuumblockers umfasst der Teilschritt S58 einen Druckausgleich in einem Hohlraum zwischen dem Vakuumblocker und dem aufgenommenen Brillenglashalbfabrikat.

Im anschließenden Teilschritt S60 findet eine Kontrolle oder Qualitätsprüfung des abgeblockten (nahezu fertiggestellten) Rohlings statt.

In einem weiteren sich anschließenden Teilschritt S62 findet eine Oberflächenbehandlung oder Oberflächenbeschichtung des Rohlings statt. Es kann z.B. eine Hartbeschichtung, eine Antireflexbeschichtung und eine antistatisch wirkende Beschichtung aufgebracht werden. Insbesondere ist es möglich, dass nicht nur die Rückfläche, sondern auch die Vorderfläche des Rohlings beschichtet wird.

Der Bearbeitungsschritt S20 umfasst im vorliegenden Ausführungsbeispiel einen abschließenden Teilschritt S64, der eine (erneute) Kontrolle des Bearbeitungsergebnisses, insbesondere des Ergebnisses der Oberflächenbearbeitung, beinhaltet.

Es versteht sich, dass zumindest einige der (Teil-)Schritte, insbesondere die Teilschritte S52, S56, S60 und S64 übersprungen werden können. Es ist jedoch häufig der Fall, dass bei der Herstellung von Brillengläsern jedem Teilschritt eine entsprechende Qualitätskontrolle folgt, um eine bestmögliche Qualität zu gewährleisten.

## Patentansprüche

**1.** Satz (68) von Brillenglashalbfabrikaten (10, 12), die jeweils eine Vorderfläche (16) mit sphärischer oder rotationssymmetrisch asphärischer, konvexer Form besitzen, welche wenigstens ein körperliches Formmerkmal (R1, R2, ... R20) mit einem zugehörigen Formmaß aufweist, umfassend

- eine erste Serie (66-1) von Brillenglashalbfabrikaten (10, 12) aus einem Grundmaterial mit einem ersten mittleren Brechungsindex ($n_{d1}$), wobei die erste Serie (66-1) paarweise unterschiedliche Typen (No. 1, No. 2, ... No. 20) von Brillenglashalbfabrikaten (10, 20) aufweist, die sich in dem Formmaß des wenigstens einen körperlichen Formmerkmals (R1, R2, ... R20) der Form ihrer Vorderfläche (16) unterscheiden, wobei wenigstens drei unterschiedliche Typen (No. 7, No. 10, No. 13) der paarweise unterschiedlichen Typen (No. 1, No. 2, ... No. 20) einen auf einen Standardbrechungsindex ($n_s$) von 1,53 bezogenen und im Falle einer rotationssymmetrisch asphärischen Form der Vorderfläche in deren Symmetriezentrum (15) bestimmten tatsächlichen Flächenbrechwert ($D_n$) ihrer Vorderfläche (16) zwischen 3,2 D und 6,7 D aufweisen,
- eine zweite Serie (66-2) von Brillenglashalbfabrikaten (10, 12) aus einem Grundmaterial mit einem zweiten von dem ersten mittleren Brechungsindex ($n_{d1}$) unterschiedlichen mittleren Brechungsindex ($n_{d2}$), wobei die zweite Serie (66-2) paarweise unterschiedliche Typen (No. 1, No. 3, No. 5, No. 7, No. 9, No. 10, No. 11, No. 13, No. 14, No. 16, No. 18, No. 20) von Brillenglashalbfabrikaten (10, 12) aufweist, die sich in dem Formmaß des wenigstens einen körperlichen Formmerkmals (R1, R2, ... R20) der Form ihrer Vorderfläche (16) unterscheiden,
- eine dritte Serie (66-3) von Brillenglashalbfabrikaten (10, 12) aus einem Grundmaterial mit einem dritten von dem ersten mittleren Brechungsindex ($n_{d1}$) und dem zweiten mittleren Brechungsindex ($n_{d2}$) unterschiedlichen mittleren Brechungsindex ($n_{d3}$), wobei die dritte Serie (66-3) paarweise unterschiedliche Typen (No. 3, No. 7, No. 10, No. 13, No. 16) von Brillenglashalbfabrikaten (10, 12) aufweist, die sich in dem Formmaß des wenigstens einen körperlichen Formmerkmals (R1, R2, ... R20) der Form ihrer Vorderfläche (16) unterscheiden,

**dadurch gekennzeichnet, dass**

- wenigstens drei unterschiedliche Typen (No. 7, No. 10, No. 13) der paarweise unterschiedlichen Typen der zweiten Serie (66-2) einen auf einen Standardbrechungsindex ($n_s$) von 1,53 bezogenen tatsächlichen Flächenbrechwert ($D_n$) ihrer Vorderfläche (16) zwischen 3,2 D und 6,7 D aufweisen,
- wenigstens drei unterschiedliche Typen (No. 7, No. 10, No. 13) der paarweise unterschiedlichen Typen (No. 3, Nu. 7, No. 10, No. 13, No. 16) der dritten Serie (66-3) einen auf einen Standardbrechungsindex ($n_6$) von 1,53 bezogenen tatsächlichen Flächenbreschwert ($D_n$) ihrer Vorderfläche (16) zwischen 3,2 D und 6,7 D aufweisen,
- die Formmaße des wenigstens einen körperlichen Formmerkmals (R7, R10, R13) der Form der Vorderflächen (16) der wenigstens drei unterschiedlichen Typen (No. 7, No. 10, No. 13) der ersten Serie (66-1) und die Formmaße des wenigstens einen körperlichen Formmerkmals (R7, R10, R13) der Form der Vorderflächen (16) der wenigstens drei unterschiedlichen Typen (No. 7, No. 10, No. 13) der zweiten Serie (66-2) und die Formmaße des wenigstens einen körperlichen Formmerkmals (R7, R10, R13) der Form der Vorderflächen (16) der wenigstens drei unterschiedlichen Typen (No. 7, No. 10, No. 13) der dritten Serie (66-3) identisch sind, wobei das wenigstens eine Formmerkmal (R, R1, R2, ... R20, Dn)

a) die tatsächliche Krümmung und/oder
b) der tatsächliche Krümmungsradius und/oder
c) die Scheitelkrümmung (p) des Kegelschnitts des Korrekturpolynoms des in der DIN ISO 10110 definierten aus der Summe eines Kegelschnitts und eines Korrekturpolynoms bestehenden asphärischen Flächenschnitts der Formel

$$z(r) = \frac{\rho r^2}{1 + \sqrt{1 - (1+k)(\rho r)^2}} + A_4 r^4 + A_6 r^6 + \ldots$$

ist bzw. sind, wobei z die Pfeilhöhe, r die Einfallshöhe, p die Scheitelkrümmung und k die konische Konstante des Kegelschnitts sowie A4, A6, ... die Koeffizienten des Korrekturpolynoms sind.

2. Satz (68) von Brillenglashalbfabrikaten (10, 12) nach Anspruch 1, **dadurch gekennzeichnet, dass** sich der erste mittlere Brechungsindex ($n_{d1}$) und der zweite mittlere Brechungsindex ($n_{d2}$) und der dritte mittlere Brechungsindex ($n_{d3}$) paarweise um wenigstens 0,04 unterscheiden.

3. Satz (68) von Brillenglashalbfabrikaten (10, 12) nach einem der vorangegangenen Ansprüche, **dadurch gekennzeichnet, dass**

- wenigstens vier unterschiedliche Typen der paarweise unterschiedlichen Typen (No. 1, No. 2 ... No. 20) der ersten Serie (66-1), die sich in dem Formmaß des wenigstens einen körperlichen Formmerkmals (R1, R2, ... R20) der Form ihrer Vorderfläche (16) unterscheiden, einen auf einen Standardbrechungsindex ($n_s$) von 1,53 bezogenen tatsächlichen Flächenbrechwert ($D_n$) ihrer Vorderfläche (16) zwischen 3,2 D und 6,7 D aufweisen,
- wenigstens vier unterschiedliche Typen der paarweise unterschiedlichen Typen (No. 1, No. 3, No. 5, No. 7, No. 9, No. 10. No. 11, No. 13, No. 14, No. 16, No. 18, No. 20) der zweiten Serie (66-2), die sich in dem Formmaß des wenigstens einen körperlichen Formmerkmals (R1, R3, R5, R7, R9, R10, R11, R13, R14, R16, R18, R20) der Form ihrer Vorderfläche (16) unterscheiden, einen auf einen Standardbrechungsindex ($n_s$) von 1,53 bezogenen tatsächlichen Flächenbrechwert ihrer Vorderfläche (16) zwischen 3,2 D und 6,7 D aufweisen,
- wenigstens vier unterschiedliche Typen der paarweise unterschiedlichen Typen der dritten Serie, die sich in dem Formmaß des wenigstens einen körperlichen Formmerkmals der Form ihrer Vorderfläche unterscheiden, einen auf einen Standardbrechungsindex von 1,53 bezogenen tatsächlichen Flächenbrechwert ihrer Vorderfläche zwischen 3,2 D und 6,7 D aufweisen,
- die Formmaße des wenigstens einen körperlichen Formmerkmals der Form der Vorderflächen der wenigstens vier unterschiedlichen Typen der ersten Serie (66-1) und die Formmaße des wenigstens einen körperlichen Formmerkmals der Form der Vorderflächen (16) der wenigstens vier unterschiedlichen Typen der zweiten Serie (66-2) und die Formmaße des wenigstens einen körperlichen Formmerkmals der Form der Vorderflächen (16) der wenigstens vier unterschiedlichen Typen der dritten Serie (66-3) identisch sind.

4. Satz (68) von Brillenglashalbfabrikaten (10, 12) nach einem der vorangegangenen Ansprüche, **dadurch gekennzeichnet, dass** die erste Serie (66-1) und die zweite Serie (66-2) und die dritte Serie (66-3) jeweils Typen (No. 3, No. 7, No. 10, No. 13, No. 16) von Brillenglashalbfabrikaten (10,12) aufweisen, deren Vorderflächen (16) ein Formmerkmal (R3, R7, R10, R13, R16) mit identischen Formmaßen aufweisen, und dass die Differenz zwischen jeweils einem der identischen Formmaße oder dessen Kehrwert zum jeweiligen nächstgrößeren identischen Formmaß oder dessen Kehrwert innerhalb einer Varianz von 20 % gleich groß ist.

**5.** Satz (68) von Brillenglashalbfabrikaten (10, 12) nach einem der vorangegangenen Ansprüche, **dadurch gekennzeichnet, dass** das wenigstens eine Formmerkmal eine tatsächliche Flächenbrechkraft ($D_n$) und dass das zugehörige Formmaß der zugehörige auf einen Standardbrechungsindex ($n_s$) von 1,53 bezogene tatsächliche Flächenbrechwert ist, so dass die erste Serie (66-1) und die zweite Serie (66-2) und die dritte Serie (66-3) jeweils Typen von Brillenglashalbfabrikaten (10, 12) aufweisen, deren Vorderflächen (16) eine tatsächliche Flächenbrechkraft ($D_n$) mit identischen auf einen Standardbrechungsindex ($n_s$) von 1,53 bezogenen tatsächlichen Flächenbrechwerten aufweisen, und dass die Differenz zwischen einem der identischen auf den Standardbrechungsindex ($n_s$) von 1,53 bezogenen tatsächlichen Flächenbrechwert zum nächstgrößeren identischen auf den Standardbrechungsindex ($n_s$) von 1,53 bezogenen tatsächlichen Flächenbrechwert kleiner als 2,5 D ist.

**6.** Satz (68) von Brillenglashalbfabrikaten (10, 12) nach einem der vorangegangenen Ansprüche, **dadurch gekennzeichnet, dass**

- wenigstens zehn unterschiedliche Typen der paarweise unterschiedlichen Typen der ersten Serie (66-1), die sich in dem Formmaß des wenigstens einen körperlichen Formmerkmals der Form ihrer Vorderfläche (16) unterscheiden, einen auf einen Standardbrechungsindex ($n_s$) von 1,53 bezogenen tatsächlichen Flächenbrechwert ihrer Vorderfläche (16) zwischen 0,5 D und 9,60 D aufweisen,
- wenigstens zehn unterschiedliche Typen der paarweise unterschiedlichen Typen der zweiten Serie (66-2), die sich in dem Formmaß des wenigstens einen körperlichen Formmerkmals der Form ihrer Vorderfläche (16) unterscheiden, einen auf einen Standardbrechungsindex ($n_s$) von 1,53 bezogenen tatsächlichen Flächenbrechwert ihrer Vorderfläche (16) zwischen 0,5 D und 9,60 D aufweisen,
- wenigstens zehn unterschiedliche Typen der paarweise unterschiedlichen Typen der dritten Serie (66-3), die sich in dem Formmaß des wenigstens einen körperlichen Formmerkmals der Form ihrer Vorderfläche (16) unterscheiden, einen auf einen Standardbrechungsindex ($n_s$) von 1,53 bezogenen tatsächlichen Flächenbrechwert ihrer Vorderfläche (16) zwischen 0,50 D und 9,60 D aufweisen,
- die Formmaße des wenigstens einen körperlichen Formmerkmals der Form der Vorderflächen (16) der wenigstens zehn unterschiedlichen Typen der ersten Serie (66-1) und die Formmaße des wenigstens einen körperlichen Formmerkmals der Form der Vorderflächen (16) der wenigstens zehn unterschiedlichen Typen der zweiten Serie (66-2) und die Formmaße des wenigstens einen körperlichen Formmerkmals der Form der Vorderflächen (16) der wenigstens zehn unterschiedlichen Typen der dritten Serie (66-3) identisch sind.

**7.** Verfahren zur Herstellung von Brillengläsern mit den Schritten:

a) Bereitstellen eines Satzes (68) von Brillenglashalbfabrikaten (10, 12), die jeweils eine Rückfläche (18) und eine Vorderfläche (16) mit sphärischer oder rotationssymmetrisch asphärischer, konvexer Form besitzen, welche wenigstens ein körperliches Formmerkmal mit einem zugehörigen Formmaß aufweist, umfassend

- eine erste Serie (66-1) von Brillenglashalbfabrikaten (10, 12) aus einem Grundmaterial mit einem ersten mittleren Brechungsindex ($n_{d1}$), wobei die erste Serie (66-1) paarweise unterschiedliche Typen von Brillenglashalbfabrikaten (10, 12) aufweist, die sich in dem Formmaß des wenigstens einen körperlichen Formmerkmals der Form ihrer Vorderfläche (16) unterscheiden, wobei wenigstens drei unterschiedliche Typen der paarweise unterschiedlichen Typen einen auf einen Standardbrechungsindex ($n_s$) von 1,53 bezogenen und im Falle einer rotationssymmetrisch asphärischen Form der Vorderfläche (16) in deren Symmetriezentrum bestimmten tatsächlichen Flächenbrechwert ($D_a$) ihrer Vorderfläche (16) zwischen 3,2 D und 6,7 D aufweisen,
- eine zweite Serie (66-2) von Brillenglashalbfäbrikaten (10, 12) aus einem Grundmaterial mit einem zweiten von dem ersten mittleren Brechungsindex ($n_{d1}$) unterschiedlichen mittleren Brechungsindex ($n_{d2}$). wobei die zweite Serie (66-2) paarweise unterschiedliche Typen von Brillenglashalbfabrikaten (10, 12) aufweist, die sich in dem Formmaß des wenigstens einen körperlichen Formmerkmals der Form ihrer Vorderfläche (16) unterscheiden,
- eine dritte Serie (66-3) von Brillenglashalbfabrikaten (10,12) aus einem Grundmaterial mit einem dritten von dem ersten mittleren Brechungsindex ($n_{d1}$) und dem zweiten mittleren Brechungsindex ($n_{d2}$) unterschiedlichen mittleren Brechungsindex ($n_{d3}$), wobei die dritte Serie (66-3) paarweise unterschiedliche Typen von Brillenglashalbfabrikaten (10, 12) aufweist, die sich in dem Formmaß des wenigstens einen körperlichen Formmerkmals der Form ihrer Vorderfläche (16) unterscheiden,

b) Aufnehmen eines der Brillenglashalbfabrikate (10, 12) aus dem bereitgestellten Satz (68) von Brillenglashalbfabrikaten (10,12),

c) Bearbeiten der Rückfläche (18) des aufgenommenen Brillenglashalbfabrikats (10, 12),

**dadurch gekennzeichnet, dass**

- wenigstens drei unterschiedliche Typen der paarweise unterschiedlichen Typen der zweiten Serie (66-2) einen auf einen Standardbrechungsindex ($n_s$) von 1,53 bezogenen tatsächlichen Flächenbrechwert ihrer Vorderfläche (16) zwischen 3,2 D und 6,7 D aufweisen,
- wenigstens drei unterschiedliche Typen der paarweise unterschiedlichen Typen der dritten Serie (66-3) einen auf einen Standardbrechungsindex ($n_s$) von 1,53 bezogenen tatsächlichen Flächenbrechwert ihrer Vorderfläche (16) zwischen 3,2 D und 6,7 D aufweisen,
- die Formmaße des wenigstens einen körperlichen Formmerkmals der Form der Vorderflächen der wenigstens drei unterschiedlichen Typen der ersten Serie (66-1) und die Formmaße des wenigstens einen körperlichen Formmerkmals der Form der Vorderflächen (16) der wenigstens drei unterschiedlichen Typen der zweiten Serie (66-2) und die Formmaße des wenigstens einen körperlichen Formmerkmals der Form der Vorderflächen (16) der wenigstens drei unterschiedlichen Typen der dritten Serie (66-3) identisch sind,

wobei das wenigstens eine Formmerkmal (R, R1, R2, ... R20, Dn)

a) die tatsächliche Krümmung, und/oder

b) der tatsächliche Krümmungsradius, und/oder

c) die Scheitelkrümmung (p) des Kegelschnitts des Korrekturpolynoms des in der DIN ISO 10110 definierten aus der Summe eines Kegelschnitts und eines Korrekturpolynoms bestehenden asphärischen Flächenschnitts der Formel

$$z(r) = \frac{\rho r^2}{1 + \sqrt{1 - (1+k)(\rho r)^2}} + A_4 r^4 + A_6 r^6 + \ldots$$

ist bzw. sind, wobei z die Pfeilhöhe, r die Einfallshöhe, p die Scheitelkrümmung und k die konische Konstante des Kegelschnitts sowie A4, A6, ... die Koeffizienten des Korrekturpolynoms sind.

**8.** Verfahren zur Herstellung von Brillengläsern nach Anspruch 7, **dadurch gekennzeichnet, dass** der bereitgestellte Satz (68) von Halbfabrikaten (10, 12) nach einem der Ansprüche 2 bis 6 ausgebildet ist.

**9.** Verfahren zur Herstellung von Brillengläsern nach einem der Ansprüche 7 oder 8, **dadurch gekennzeichnet, dass** in Schritt b) das Aufnehmen des Brillenglashalbfabrikats (10, 12) aus dem bereitgestellten Satz (68) von Brillenglashalbfabrikaten (10, 12) mittels einer zu wenigstens einem Teilabschnitt (17) der Form der Vorderfläche (16) formkomplementär ausgebildeten Aufnahmeeinrichtung (34) erfolgt.

**10.** Verfahren nach Anspruch 9, **dadurch gekennzeichnet, dass** der Teilabschnitt (17) wenigstens 40 % der Vorderfläche des aufgenommenen Brillenglashalbfabrikats (10, 12) umfasst.

**11.** Verwendung eines Satzes (68) von Brillenglashalbfabrikaten (10, 12) in einem Verfahren zur Herstellung von Brillengläsern wobei die Brillenglashalbfabrikate (10, 12) jeweils eine Vorderfläche (16) mit sphärischer oder rotationssymmetrisch asphärischer, konvexer Form besitzen, welche wenigstens ein körperliches Formmerkmal mit einem zugehörigen Formmaß aufweist, umfassend

- eine erste Serie (66-1) von Brillenglashalbfabrikaten (10, 12) aus einem Grundmaterial mit einem ersten mittlenen Brechungsindex, wobei die erste Serie paarweise unterschiedliche Typen von Brillenglashalbfabrikaten (10, 12)aufweist, die sich in dem Formmaß des wenigstens einen körperlichen Formmerkmals der Form ihrer Vorderfläche (16) unterscheiden, wobei wenigstens drei unterschiedliche Typen der paarweise unterschiedlichen Typen einen auf einen Standardbrechungsindex von 1,53 bezogenen und im Falle einer rotationssymmetrisch asphärischen Form der Vorderfläche (16) in deren Symmetriezentrum bestimmten tatsächlichen Flächenbrechwert ($D_n$) ihrer Vorderfläche (16) zwischen 3,2 D und 6,7 D aufweisen,
- eine zweite Serie (66-2) von Brillenglashalbfabrikaten (10, 12) aus einem Grundmaterial mit einem zweiten von dem ersten mittleren Brechungsindex unterschiedlichen mittleren Brechungsindex, wobei die zweite Serie paarweise unterschiedliche Typen von Brillenglashalbfabrikaten (10, 12) aufweist, die sich in dem Formmaß des wenigstens einen körperlichen Formmerkmals der Form ihrer Vorderfläche unterscheiden,
- eine dritte Serie (66-3) von Brillenglashalbfabrikaten (10, 12) aus einem Grundmaterial mit einem dritten von dem ersten mittleren Brechungsindex und dem zweiten mittleren Brechungsindex unterschiedlichen mittleren Brechungsindex, wobei die dritte Serie paarweise unterschiedliche Typen von Brillenglashalbfabrikaten (10, 12) aufweist, die sich in dem Formmaß des wenigstens einen körperlichen Formmerkmals der Form ihrer Vorderfläche (16) unterscheiden,

**dadurch gekennzeichnet, dass**

- wenigstens drei unterschiedliche Typen der paarweise unterschiedlichen Typen der zweiten Serie (66-2) einen auf einen Standardbrechungsindex ($n_s$) von 1,53 bezogenen tatsächlichen Flächenbrechwert ($D_n$) ihrer Vorderfläche (16) zwischen 3,2 D und 6,7 D aufweisen,
- wenigstens drei unterschiedliche Typen der paarweise unterschiedlichen Typen der dritten Serie (66-3) einen auf einen Standardbrechungsindex ($n_s$) von 1,53 bezogenen tatsächlichen Flächenbrechwert ($D_n$) ihrer Vorderfläche (16) zwischen 3,2 D und 6,7 D aufweisen,
- die Formmaße des wenigstens einen körperlichen Formmerkmals der Form der Vorderflächen (16) der wenigstens drei unterschiedlichen Typen der ersten Serie (66-1) und die Formmaße des wenigstens einen körperlichen Formmerkmals der Form der Vorderflächen (16) der wenigstens drei unterschiedlichen Typen der zweiten Serie (66-2) und die Formmaße des wenigstens einen körperlichen Formmerkmals der Form der Vorderflächen (16) der wenigstens drei unterschiedlichen Typen der dritten Serie (66-3) identisch sind, wobei das wenigstens eine Formmerkmal (R, R1, R2,... R20, Dn)

a) die tatsächliche Krümmung und/oder
b) der tatsächliche Krümmungsradius und/oder
c) die Scheitelkrümmung (p) des Kegelschnitts des Korrekturpolynoms des in der DIN ISO 10110 definierten aus der Summe eines Kegelschnitts und eines Korrekturpolynoms bestehenden asphärischen Flächenschnitts der Formel

$$z(r) = \frac{\rho r^2}{1+\sqrt{1-(1+k)(\rho r)^2}} + A_4 r^4 + A_6 r^6 + \ldots$$

ist bzw. sind, wobei z die Pfeilhöhe, r die Einfallshöhe, p die Scheitclkrümmung und k die konische Konstante des Kegelschnitts sowie A4, A6, ... die Koeffizienten des Korrekturpolynoms sind.

**12.** Vorrichtung (88) zur Herstellung von Brillengläsern mit:

a) einer Bereitstellungseinrichtung (96) zum Bereitstellen eines Satzes (68) von Brillenglashalbfabrikaten (10, 12), wobei die Brillenglashalbfabrikate (10, 12) jeweils eine Rückfläche (18) und eine Vorderfläche (16) mit sphärischer oder rotationssymmetrisch asphärischer, konvexer Form besitzen, welche wenigstens ein körperliches Formmerkmal mit einem zugehörigen Formmaß aufweist, umfassend

- eine erste Serie (66-1) von Brillenglashalbfabrikaten (10, 12) aus einem Grundmaterial mit einem ersten mittleren Brechungsindex, wobei die erste Serie paarweise unterschiedliche Typen von Brillenglashalbfabrikaten (10, 12) aufweist, die sich in dem Formmaß des wenigstens einen körperlichen Formmerkmals der Form ihrer Vorderfläche unterscheiden, wobei wenigstens drei unterschiedliche Typen der paarweise unterschiedlichen Typen einen auf einen Standardbrechungsindex von 1,53 bezogenen und im Falle einer rotationssymmetrisch asphärischen Form der Vorderfläche in deren Symmetriezentrum bestimmten tatsächlichen Flächenbrechwert ihrer Vorderfläche zwischen 3,2 D und 6,7 D aufweisen,
- eine zweite Serie von Brillenglashalbfabrikaten (10, 12) aus einem Grundmaterial mit einem zweiten von dem ersten mittleren Brechungsindex unterschiedlichen mittleren Brechungsindex, wobei die zweite Serie paarweise unterschiedliche Typen von Brillenglashalbfabrikaten (10, 12) aufweist, die sich in dem Formmaß des wenigstens einen körperlichen Formmerkmals der Form ihrer Vorderfläche unterscheiden,
- eine dritte Serie von Brillenglashalbfabrikaten aus einem Grundmaterial mit einem dritten von dem ersten mittleren Brechungsindex und dem zweiten mittleren Brechungsindex unterschiedlichen mittleren Brechungsindex, wobei die dritte Serie paarweise unterschiedliche Typen von Brillenglashalbfabrikaten (10,

12) aufweist, die sich in dem Formmaß des wenigstens einen körperlichen Formmerkmals der Form ihrer Vorderfläche (16) unterscheiden,

b) einer Aufnahmeeinrichtung (34) zum Aufnehmen eines der Brillenglashalbfabrikate (10, 12) aus dem bereitgestellten Satz (68) von Brillenglashalbfabrikaten (10, 12),
c) einer Bearbeitungseinrichtung (100) zum Bearbeiten der Rückfläche (18) des aufgenommenen Brillenglashalbfabrikats (10, 12),

**dadurch gekennzeichnet, dass**

- wenigstens drei unterschiedliche Typen der paarweise unterschiedlichen Typen der zweiten Serie (66-2) einen auf einen Standardbrechungsindex ($n_s$) von 1,53 bezogenen tatsächlichen Flächenbrechwert ihrer Vorderfläche zwischen 3,2 D und 6,7 D aufweisen,
- wenigstens drei unterschiedliche Typen der paarweise unterschiedlichen Typen der dritten Serie (66-3) einen auf einen Standardbrechungsindex ($n_s$) von 1,53 bezogenen tatsächlichen Flächenbrechwert ihrer Vorderfläche (16) zwischen 3,2 D und 6,7 D aufweisen,
- die Formmaße des wenigstens einen körperlichen Formmerkmals der Form der Vorderflächen (16) der wenigstens drei unterschiedlichen Typen der ersten Serie (66-1) und die Formmaße des wenigstens einen körperlichen Formmerkmals der Form der Vorderflächen (16) der wenigstens drei unterschiedlichen Typen der zweiten Serie (66-2) und die Formmaße des wenigstens einen körperlichen Formmerkmals der Form der Vorderflächen (16) der wenigstens drei unterschiedlichen Typen der dritten Serie (66-3) identisch sind,

wobei das wenigstens eine Formmerkmal (R, R1, R2, ... R20, Dn)

a) die tatsächliche Krümmung und/oder
b) der tatsächliche Krümmungsradius und/oder
c) die Scheitelkrümmung (p) des Kegelschnitts des Korrekturpolynoms des in der DIN ISO 10110 definierten aus der Summe eines Kegelschnitts und eines Korrekturpolynoms bestehenden asphärischen Flächenschnitts der Formel

$$z(r) = \frac{\rho r^2}{1 + \sqrt{1 - (1+k)(\rho r)^2}} + A_4 r^4 + A_6 r^6 + \ldots$$

ist bzw. sind, wobei z die Pfeilhöhe, r die Einfallshöhe, p die Scheitelkrümmung und k die konische Konstante des Kegelschnitts sowie A4, A6, ... die Koeffizienten des Korrekturpolynoms sind.

**13.** Computerimplementiertes Verfahren zur Auslegung eines Satzes (68) von Brillenglashalbfabrikaten (10, 12), wobei die Brillenglashalbfabrikate (10, 12) jeweils eine Vorderfläche (16) mit sphärischer oder rotationssymmetrisch asphärischer, konvexer Form besitzen, welche wenigstens ein körperliches Formmerkmal (R5, R6.... R16) mit einem zugehörigen Formmaß aufweist, wobei der Satz (68) von Brillenglashalbfabrikaten (10, 12) eine erste Serie (66-4) von Brillenglashalbfabrikaten (10, 12) aus einem Grundmaterial mit einem ersten mittleren Brechungsindex ($n_{d4}$) und eine zweite Serie (66-5) von Brillenglashalbfabrikaten (10,12) aus einem Grundmaterial mit einem zweiten von dem ersten mittleren Brechungsindex ($n_{d4}$) unterschiedlichen mittleren Brechungsindex ($n_{d5}$) und eine dritte Serie von Brillenglashalbfabrikaten aus einem Grundmaterial mit einem dritten von dem ersten mittleren Brechungsindex ($n_{d4}$) und von dem zweiten mittleren Brechungsindex ($n_{d5}$) unterschiedlichen mittleren Brechungsindex umfasst, wobei die erste Serie (66-4) paarweise unterschiedliche Typen von Brillenglashalbfabrikaten (10,12) aufweist, die sich in dem Formmaß des wenigstens einen körperlichen Formmerkmals (R5, R6, ... R16) der Form ihrer Vorderfläche (16) unterscheiden, und wobei die zweite Serie (66-5) paarweise unterschiedliche Typen von Brillenglashalbfabrikaten (10, 12) aufweist, die sich in dem Formmaß des wenigstens einen körperlichen Formmerkmals (R5, R6, ... R16) der Form ihrer Vorderfläche (16) unterscheiden, und wobei die dritte Serie paarweise unterschiedliche Typen von Brillenglashalbfabrikaten aufweist, die sich in dem Formmerkmal des wenigstens einen körperlichen Formmerkmals der Form der Vorterfläche unterscheiden,
**gekennzeichnet durch** den Schritt:

a) Angleichen, nämlich in Übereinstimmung Bringen der formmaße des wenigstens einen körperlichen Formmerkmals (R5, R6, ... R16) der Form der Vorderflächen (16) der unterschiedlichen Typen der ersten Serie (66-4) und der Foormmaße des wenigstens einen körperlichen Formmerkmals (R5, R6, ... R16) der Form der Vorderflichen (16) der unterschiedlichen Typen der zweiten Serie (66-5) und der Formmaße des wenigstens einen körperlichen Formmerkmals der Form der Vorderflächen der unterschiedlichen Typen der dritten Serie, so dass die Vorderflächenformen dieser unterschiedlichen Typen auf einer Teilfläche oder auf der gesamten Vorderfläche für alle der wenigstens drei Serien identisch sind, wobei das wenigstens eine Formmerkmal (R. R1. R2, ... R20, Dn)

i) die tatsächliche Krümmung und/oder
ii) der tatsächliche Krümmungsradius und/oder
iii) die Scheitelkrümmung (p) des Kegelschnitts des Korrekturpolynoms des in der DIN ISO 10110 definierten aus der Summe eines Kegelschnitts und eines Korrekturpolynoms bestehenden asphärischen Flächenschnitts der Formel

$$z(r) = \frac{\rho r^2}{1 + \sqrt{1 - (1 + k)(\rho r)^2}} + A_4 r^4 + A_6 r^6 + \dots$$

ist bzw. sind, wobei z die Pfeilhöhe, r die Einfallshöhe, ρ die Scheitelkrümmung und k die konische Konstante des Kegelschnitts sowie A4, A6, ... die Koeffizienten des Korrekturpolynoms sind.

**14.** Computerimplementiertes Verfahren nach Anspruch 13, **dadurch gekennzeichnet, dass** das das wenigstens eine Formmerkmal eine tatsächliche Flächenbrechkraft ($D_n$) und dass das zugehörige Formmaß der zugehörige auf einen Standardbrechungsindex ($n_s$) von 1,53 bezogene tatsächliche Flächenbrechwert ist, so dass die erste Serie (66-4) und die zweite Serie (66-5) jeweils Typen von Brillenglashalbfabrikaten (10,12) aufweisen, deren Vorderflächen (16) eine tatsächliche Flächenbrechkraft ($D_n$) mit identischen auf einen Standardbrechungsindex ($n_s$) von 1,53 bezogenen tatsächlichen Flächenbrechwerten aufweisen, und dass das Angleichen der auf den Standardbrechungsindex ($n_s$) von 1,53 bezogenen tatsächlichen Flächenbrechwerte der Verderflächen (16) der Brillenglashalbfabrikate der unterschiedlichen Typen der ersten Serie (66-4) und der auf den Standardbrechungindex von 1,53 bezogenen tatsächlichen Flächenbrechwerte der Vorderflächen der Brillenglashalbfabrikate (10, 12) der unterschiedlichen Typen der zweiten Serie (66-5) derart erfolgt, dass die Differenz zwischen einem der identischen auf den Standardbrechungsindex ($n_s$) von 1,53 bezogenen tatsächlichen Flächenbrechwert zum nächstgrößeren identischen auf den Standardbrechungsindex ($n_s$) von 1,53 bezogenen tatsächlichen Flächenbrechwert kleiner als ein vorgegebener Schwellwert ist und/oder innerhalb eines Varianzberachs von 20 % identisch mit einem fest vorgegebenen Differenzwert ist

**15.** Computerprogramm mit Programmcode zur Durchführung aller Verfahrensschritte nach einem der Ansprüche 13 oder 14, wenn das Computerprogramm in einem Computer geladen und/oder in einem Computer ausgeführt wird.

**16.** Computerlesbares Speichermedium mit einem Computerprogramm mit Programmcode zur Durchführung aller Verfahrensschritte nach einem der Ansprüche 13 oder 14, wenn das Computerprogramm in einem Computer geladen und/oder in einem Computer ausgeführt wird.

## Claims

**1.** Set (68) of spectacle lens semifinished products (10, 12), which each have a front surface (16) with a spherical or rotationally symmetric aspherical, convex form, which has at least one physical form feature (R1, R2, ... R20) with an associated form dimension, comprising

- a first series (66-1) of spectacle lens semifinished products (10, 12) made of a base material with a first average refractive index ($n_{d1}$), wherein the first series (66-1) has pairwise different types (No. 1, No. 2, ... No. 20) of spectacle lens semifinished products (10, 20) which differ in the form dimension of the at least one physical form feature (R1, R2, ... R20) of the form of the front surface (16) thereof, wherein at least three different types (No. 7, No. 10, No. 13) of the pairwise different types (No. 1, No. 2, ... No. 20) have an actual surface power value ($D_n$) of the front surface (16) thereof of between 3.2 D and 6.7 D in relation to a standard refractive index ($n_s$) of 1.53 and determined, in the case of a rotationally symmetric aspherical form of the front surface, at the center of symmetry (15) thereof,

- a second series (66-2) of spectacle lens semifinished products (10, 12) made of a base material with a second average refractive index ($n_{d2}$) that differs from the first average refractive index ($n_{d1}$), wherein the second series (66-2) has pairwise different types (No. 1, No. 3, No. 5, No. 7, No. 9, No. 10, No. 11, No. 13, No. 14, No. 16, No. 18, No. 20) of spectacle lens semifinished products (10, 12) which differ in the form dimension of the at least one physical form feature (R1, R2, ... R20) of the form of the front surface (16) thereof,
- a third series (66-3) of spectacle lens semifinished products (10, 12) made of a base material with a third average refractive index ($n_{d3}$) that differs from the first average refractive index ($n_{d1}$) and the second average refractive index ($n_{d2}$), wherein the third series (66-3) has pairwise different types (No. 3, No. 7, No. 10, No. 13, No. 16) of spectacle lens semifinished products (10, 12) which differ in the form dimension of the at least one physical form feature (R1, R2, ... R20) of the form of the front surface (16) thereof,

**characterized in that**

- at least three different types (No. 7, No. 10, No. 13) of the pairwise different types of the second series (66-2) have an actual surface power value ($D_n$) of the front surface (16) thereof of between 3.2 D and 6.7 D in relation to a standard refractive index ($n_s$) of 1.53,
- at least three different types (No. 7, No. 10, No. 13) of the pairwise different types (No. 3, No. 7, No. 10, No. 13, No. 16) of the third series (66-3) have an actual surface power value ($D_n$) of the front surface (16) thereof of between 3.2 D and 6.7 D in relation to a standard refractive index ($n_s$) of 1.53,
- the form dimensions of the at least one physical form feature (R7, R10, R13) of the form of the front surfaces (16) of the at least three different types (No. 7, No. 10, No. 13) of the first series (66-1) and the form dimensions of the at least one physical form feature (R7, R10, R13) of the form of the front surfaces (16) of the at least three different types (No. 7, No. 10, No. 13) of the second series (66-2) and the form dimensions of the at least one physical form feature (R7, R10, R13) of the form of the front surfaces (16) of the at least three different types (No. 7, No. 10, No. 13) of the third series (66-3) are identical, wherein the at least one form feature (R, R1, R2, ... R20, Dn) is/are:

a) the actual curvature and/or
b) the actual radius of curvature and/or
c) the vertex curvature (p) of the conic section of the correction polynomial of the aspherical surface section defined in DIN ISO 10110, consisting of the sum of a conic section and a correction polynomial, in accordance with the equation

$$z(r) = \frac{\rho r^2}{1 + \sqrt{1 - (1 + k)(\rho r)^2}} + A_4 r^4 + A_6 r^6 + \ldots$$

where z is the sagittal height, r is the incident height, ρ is the vertex curvature and k is the conic constant of the conic section, and $A_4$, $A_6$, ... are the coefficients of the correction polynomial.

2. Set (68) of spectacle lens semifinished products (10, 12) according to Claim 1, **characterized in that** the first average refractive index ($n_{d1}$) and the second average refractive index ($n_{d2}$) and the third average refractive index ($n_{d3}$) differ pairwise by at least 0.04.

3. Set (68) of spectacle lens semifinished products (10, 12) according to one of the preceding claims, **characterized in that**

- at least four different types of the pairwise different types (No.1, No. 2 ... No. 20) of the first series (66-1), which differ in terms of the form dimension of the at least one physical form feature (R1, R2, ... R20) of the form of the front surface (16) thereof, have an actual surface power value ($D_n$) of the front surface (16) thereof of between 3.2 D and 6.7 D in relation to a standard refractive index ($n_s$) of 1.53,
- at least four different types of the pairwise different types (No. 1, No. 3, No. 5, No. 7, No. 9, No. 10, No. 11, No. 13, No. 14, No. 16, No. 18, No. 20) of the second series (66-2), which differ in terms of the form dimension of the at least one physical form feature (R1, R3, R5, R7, R9, R10, R11, R13, R14, R16, R18, R20) of the form of the front surface (16) thereof, have an actual surface power value of the front surface (16) thereof of between 3.2 D and 6.7 D in relation to a standard refractive index ($n_s$) of 1.53,
- at least four different types of the pairwise different types of the third series, which differ in terms of the form dimension of the at least one physical form feature of the form of the front surface thereof, have an actual surface power value of the front surface thereof of between 3.2 D and 6.7 D in relation to a standard refractive index of 1.53.
- the form dimensions of the at least one physical form feature of the form of the front surfaces of the at least four different types of the first series (66-1) and the form dimensions of the at least one physical form feature of the form of the front surfaces (16) of the at least four different types of the second series (66-2) and the form dimensions of the at least one physical form feature of the form of the front surfaces (16) of the at least four different types of the third series (66-3) are identical.

**4.** Set (68) of spectacle lens semifinished products (10, 12) according to one of the preceding claims, **characterized in that** the first series (66-1) and the second series (66-2) and the third series (66-3) each have types (No. 3, No. 7, No. 10, No. 13, No. 16) of spectacle lens semifinished products (10, 12), the front surfaces (16) of which have a form feature (R3, R7, R10, R13, R16) with identical form dimensions, and **in that** the difference between in each case one of the identical form dimensions or the inverse thereof and the in each case next-larger identical form dimension or the inverse thereof is of equal size within a variance of 20%.

**5.** Set (68) of spectacle lens semifinished products (10, 12) according to one of the preceding claims, **characterized in that** the at least one form feature is an actual surface power ($D_n$) and **in that** the associated form dimension is the associated actual surface power value in relation to a standard refractive index ($n_s$) of 1.53 such that the first series (66-1) and the second series (66-2) and the third series (66-3) each have types of spectacle lens semifinished products (10, 12), the front surfaces (16) of which have an actual surface power ($D_n$) with identical actual surface power values in relation to a standard refractive index ($n_s$) of 1.53, and **in that** the difference between one of the identical actual surface power values in relation to the standard refractive index ($n_s$) of 1.53 and the next-larger identical actual surface power value in relation to the standard refractive index ($n_s$) of 1.53 is less than 2.5 D.

**6.** Set (68) of spectacle lens semifinished products (10, 12) according to one of the preceding claims, **characterized in that**

- at least ten different types of the pairwise different types of the first series (66-1), which differ in terms of the form dimension of the at least one physical form feature of the form of the front surface (16) thereof, have an actual surface power value of the front surface (16) thereof of between 0.5 D and 9.60 D in relation to a standard refractive index ($n_s$) of 1.53,
- at least ten different types of the pairwise different types of the second series (66-2), which differ in terms of the form dimension of the at least one physical form feature of the form of the front surface (16) thereof, have an actual surface power value of the front surface (16) thereof of between 0.5 D and 9.60 D in relation to a standard refractive index ($n_s$) of 1.53,
- at least ten different types of the pairwise different types of the third series (66-3), which differ in terms of the form dimension of the at least one physical form feature of the form of the front surface (16) thereof, have an actual surface power value of the front surface (16) thereof of between 0.50 D and 9.60 D in relation to a standard refractive index ($n_s$) of 1.53,
- the form dimensions of the at least one physical form feature of the form of the front surfaces (16) of the at least ten different types of the first series (66-1) and the form dimensions of the at least one physical form feature of the form of the front surfaces (16) of the at least ten different types of the second series (66-2) and the form dimensions of the at least one physical form feature of the form of the front surfaces (16) of the at least ten different types of the third series (66-3) are identical.

**7.** Method for producing spectacle lenses, comprising the following steps:

a) providing a set (68) of spectacle lens semifinished products (10, 12), which each have a back surface (18) and a front surface (16) with a spherical or rotationally symmetric aspherical, convex form, which has at least one physical form feature with an associated form dimension, comprising

- a first series (66-1) of spectacle lens semifinished products (10, 12) made of a base material with a first average refractive index ($n_{d1}$), wherein the first series (66-1) has pairwise different types of spectacle lens semifinished products (10, 12) which differ in the form dimension of the at least one physical form feature of the form of the front surface (16) thereof, wherein at least three different types of the pairwise different types have an actual surface power value ($D_n$) of the front surface (16) thereof of between 3.2 D and 6.7 D in relation to a standard refractive index ($n_s$) of 1.53 and determined, in the case of a rotationally symmetric aspherical form of the front surface (16), at the center of symmetry thereof,

- a second series (66-2) of spectacle lens semifinished products (10, 12) made of a base material with a second average refractive index ($n_{d2}$) that differs from the first average refractive index ($n_{d1}$), wherein the second series (66-2) has pairwise different types of spectacle lens semifinished products (10, 12) which differ in the form dimension of the at least one physical form feature of the form of the front surface (16) thereof,
- a third series (66-3) of spectacle lens semifinished products (10, 12) made of a base material with a third average refractive index ($n_{d3}$) that differs from the first average refractive index ($n_{d1}$) and the second average refractive index ($n_{d2}$), wherein the third series (66-3) has pairwise different types of spectacle lens semifinished products (10, 12) which differ in the form dimension of the at least one physical form feature of the form of the front surface (16) thereof,

b) receiving one of the spectacle lens semifinished products (10, 12) from the provided set (68) of spectacle lens semifinished products (10, 12),
c) machining the back surface (18) of the received spectacle lens semifinished product (10, 12),

**characterized in that**

- at least three different types of the pairwise different types of the second series (66-2) have an actual surface power value of the front surface (16) thereof of between 3.2 D and 6.7 D in relation to a standard refractive index ($n_s$) of 1.53,
- at least three different types of the pairwise different types of the third series (66-3) have an actual surface power value of the front surface (16) thereof of between 3.2 D and 6.7 D in relation to a standard refractive index ($n_s$) of 1.53,
- the form dimensions of the at least one physical form feature of the form of the front surfaces of the at least three different types of the first series (66-1) and the form dimensions of the at least one physical form feature of the form of the front surfaces (16) of the at least three different types of the second series (66-2) and the form dimensions of the at least one physical form feature of the form of the front surfaces (16) of the at least three different types of the third series (66-3) are identical, wherein the at least one form feature (R, R1, R2, ... R20, Dn) is/are:

a) the actual curvature and/or
b) the actual radius of curvature and/or
c) the vertex curvature (ρ) of the conic section of the correction polynomial of the aspherical surface section defined in DIN ISO 10110, consisting of the sum of a conic section and a correction polynomial, in accordance with the equation

$$z(r) = \frac{\rho r^2}{1 + \sqrt{1 - (1+k)(\rho r)^2}} + A_4 r^4 + A_6 r^6 + \ldots$$

where z is the sagittal height, r is the incident height, ρ is the vertex curvature and k is the conic constant of the conic section, and $A_4$, $A_6$, ... are the coefficients of the correction polynomial.

**8.** Method for producing spectacle lenses according to Claim 7, **characterized in that** the provided set (68) of semifinished products (10, 12) is embodied according to one of Claims 2 to 6.

**9.** Method for producing spectacle lenses according to either of Claims 7 and 8, **characterized in that**, in step b), the receiving of the spectacle lens semifinished product (10, 12) from the provided set (68) of spectacle lens semifinished products (10, 12) is carried out by means of a receiving device (34) which has an embodiment complementary in terms of form to at least a portion (17) of the form of the front surface (16).

**10.** Method according to Claim 9, **characterized in that** the portion (17) comprises at least 40% of the front surface of the received spectacle lens semifinished product (10, 12).

**11.** Use of a set (68) of spectacle lens semifinished products (10, 12) in a method for producing spectacle lenses, wherein the spectacle lens semifinished products (10, 12) each have a front surface (16) with a spherical or rotationally symmetric aspherical, convex form, which has at least one physical form feature with an associated form dimension, comprising

- a first series (66-1) of spectacle lens semifinished products (10, 12) made of a base material with a first average refractive index, wherein the first series has pairwise different types of spectacle lens semifinished products (10, 12) which differ in the form dimension of the at least one physical form feature of the form of the front surface (16) thereof, wherein at least three different types of the pairwise different types have an actual surface power value ($D_n$) of the front surface (16) thereof of between 3.2 D and 6.7 D in relation to a standard refractive index of 1.53 and determined, in the case of a rotationally symmetric aspherical form of the front surface (16), at the center of symmetry thereof,
- a second series (66-2) of spectacle lens semifinished products (10, 12) made of a base material with a second average refractive index that differs from the first average refractive index, wherein the second series has pairwise different types of spectacle lens semifinished products (10, 12) which differ in the form dimension of the at least one physical form feature of the form of the front surface thereof,
- a third series (66-3) of spectacle lens semifinished products (10, 12) made of a base material with a third average refractive index that differs from the first average refractive index and the second average refractive index, wherein the third series has pairwise different types of spectacle lens semifinished products (10, 12) which differ in the form dimension of the at least one physical form feature of the form of the front surface (16) thereof,

**characterized in that**

- at least three different types of the pairwise different types of the second series (66-2) have an actual surface power value ($D_n$) of the front surface (16) thereof of between 3.2 D and 6.7 D in relation to a standard refractive index ($n_s$) of 1.53,
- at least three different types of the pairwise different types of the third series (66-3) have an actual surface power value ($D_n$) of the front surface (16) thereof of between 3.2 D and 6.7 D in relation to a standard refractive index ($n_s$) of 1.53,
- the form dimensions of the at least one physical form feature of the form of the front surfaces (16) of the at least three different types of the first series (66-1) and the form dimensions of the at least one physical form feature of the form of the front surfaces (16) of the at least three different types of the second series (66-2) and the form dimensions of the at least one physical form feature of the form of the front surfaces (16) of the at least three different types of the third series (66-3) are identical, wherein the at least one form feature (R, R1, R2, ... R20, Dn) is/are:

a) the actual curvature and/or
b) the actual radius of curvature and/or
c) the vertex curvature (p) of the conic section of the correction polynomial of the aspherical surface section defined in DIN ISO 10110, consisting of the sum of a conic section and a correction polynomial, in accordance with the equation

$$z(r) = \frac{\rho r^2}{1 + \sqrt{1 - (1+k)(\rho r)^2}} + A_4 r^4 + A_6 r^6 + \ldots$$

where z is the sagittal height, r is the incident height, ρ is the vertex curvature and k is the conic constant of the conic section, and $A_4$, $A_6$, ... are the coefficients of the correction polynomial.

**12.** Apparatus (88) for producing spectacle lenses, comprising:

a) a provision device (96) for providing a set (68) of spectacle lens semifinished products (10, 12), wherein the spectacle lens semifinished products (10, 12) each have a back surface (18) and a front surface (16) with a spherical or rotationally symmetric aspherical, convex form, which has at least one physical form feature with an associated form dimension, comprising

- a first series (66-1) of spectacle lens semifinished products (10, 12) made of a base material with a first average refractive index, wherein the first series has pairwise different types of spectacle lens semifinished products (10, 12) which differ in the form dimension of the at least one physical form feature of the form of the front surface thereof, wherein at least three different types of the pairwise different types have an actual surface power value of the front surface thereof of between 3.2 D and 6.7 D in relation to a standard refractive index of 1.53 and determined, in the case of a rotationally symmetric aspherical form of the front surface, at the center of symmetry thereof,
- a second series of spectacle lens semifinished products (10, 12) made of a base material with a second average refractive index that differs from the first average refractive index, wherein the second series has pairwise different types of spectacle lens semifinished products (10, 12) which differ in the form dimension of the at least one physical form feature of the form of the front surface thereof,
- a third series of spectacle lens semifinished products made of a base material with a third average refractive index that differs from the first average refractive index and the second average refractive index, wherein the third series has pairwise different types of spectacle lens semifinished products (10, 12) which differ in the form dimension of the at least one physical form feature of the form of the front surface (16) thereof,

b) a receiving device (34) for receiving one of the spectacle lens semifinished products (10, 12) from the provided set (68) of spectacle lens semifinished products (10, 12),
c) a machining device (100) for machining the back surface (18) of the received spectacle lens semifinished product (10, 12),

**characterized in that**

- at least three different types of the pairwise different types of the second series (66-2) have an actual surface power value of the front surface thereof of between 3.2 D and 6.7 D in relation to a standard refractive index ($n_s$) of 1.53,
- at least three different types of the pairwise different types of the third series (66-3) have an actual surface power value of the front surface (16) thereof of between 3.2 D and 6.7 D in relation to a standard refractive index ($n_s$) of 1.53,
- the form dimensions of the at least one physical form feature of the form of the front surfaces (16) of the at least three different types of the first series (66-1) and the form dimensions of the at least one physical form feature of the form of the front surfaces (16) of the at least three different types of the second series (66-2) and the form dimensions of the at least one physical form feature of the form of the front surfaces (16) of the at least three different types of the third series (66-3) are identical, wherein the at least one form feature (R1, R2, R3, ... R20, Dn) is/are:

a) the actual curvature and/or
b) the actual radius of curvature and/or
c) the vertex curvature ($\rho$) of the conic section of the correction polynomial of the aspherical surface section defined in DIN ISO 10110, consisting of the sum of a conic section and a correction polynomial, in accordance with the equation

$$z(r) = \frac{\rho r^2}{1 + \sqrt{1 - (1+k)(\rho r)^2}} + A_4 r^4 + A_6 r^6 + \ldots$$

where z is the sagittal height, r is the incident height, $\rho$ is the vertex curvature and k is the conic constant of the conic section, and $A_4$, $A_6$, ... are the coefficients of the correction polynomial.

**13.** Computer-implemented method for designing a set (68) of spectacle lens semifinished products (10, 12), wherein the spectacle lens semifinished products (10, 12) each have a front surface (16) with a spherical or rotationally symmetric aspherical, convex form, which has at least one physical form feature (R5, R6, ... R16) with an associated form dimension, wherein the set (68) of spectacle lens semifinished products (10, 12) comprises a first series (66-4) of spectacle lens semifinished products (10, 12) made of a base material with a first average refractive index ($n_{d4}$) and a second series (66-5) of spectacle lens semifinished products (10, 12) made of a base material with a second average refractive index ($n_{d5}$) which differs from the first average refractive index ($n_{d4}$) and a third series of spectacle lens semifinished products made of a base material with a third average refractive index with differs from the first average refractive index ($n_{d4}$) and from the second average refractive index ($n_{d5}$), wherein the first series (66-4) has pairwise different types of spectacle lens semifinished products (10, 12), which differ in terms of the form dimension of the at least one physical form feature (R5, R6, ... R16) of the form of the front surface (16) thereof, and wherein the second series (66-5) has pairwise different types of spectacle lens semifinished products (10, 12), which differ in the form dimension of the at least one physical form feature (R5, R6, ... R16) of the form of the front surface (16) thereof, and wherein the third series has pairwise different types of spectacle lens semifinished products, which differ in the form feature of the at least one physical form feature of the form of the front surface thereof, **characterized by** the following step:

a) equalizing, that is to say bringing into correspondence, the form dimensions of the at least one physical form feature (R5, R6, ... R16) of the form of the front surfaces (16) of the different types of the first series (66-4) and the form dimensions of the at least one physical form feature (R5, R6, ... R16) of the form of the front surfaces (16) of the different types of the second series (66-5) and the form dimensions of the at least one physical form feature of the form of the front surfaces of the different types of the third series such that the front surface forms of these different types are identical for all of the at least three series, either on a portion or on the whole front surface, wherein the at least one form feature (R, R1, R2, ... R20, Dn) is/are:

i) the actual curvature and/or
ii) the actual radius of curvature and/or
iii) the vertex curvature (ρ) of the conic section of the correction polynomial of the aspherical surface section defined in DIN ISO 10110, consisting of the sum of a conic section and a correction polynomial, in accordance with the equation

$$z(r) = \frac{\rho r^2}{1 + \sqrt{1 - (1+k)(\rho r)^2}} + A_4 r^4 + A_6 r^6 + \ldots$$

where z is the sagittal height, r is the incident height, ρ is the vertex curvature and k is the conic constant of the conic section, and $A_4$, $A_6$, ... are the coefficients of the correction polynomial.

**14.** Computer-implemented method according to Claim 13, **characterized in that** the at least one form feature is an actual surface power ($D_n$) and **in that** the associated form dimension is the associated actual surface power value in relation to a standard refractive index ($n_s$) of 1.53 such that the first series (66-4) and the second series (66-5) each have types of spectacle lens semifinished products (10, 12), the front surfaces (16) of which have an actual surface power ($D_n$) with identical actual surface power values in relation to a standard refractive index ($n_s$) of 1.53, and **in that** the equalization of the actual surface power values of the front surfaces (16) of the spectacle lens semifinished products of the different types of the first series (66-4) in relation to the standard refractive index ($n_s$) of 1.53 and the actual surface power values of the front surfaces of the spectacle lens semifinished products (10, 12) of the different types of the second series (66-5) in relation to the standard refractive index of 1.53 is carried out in such a way that the difference between one of the identical actual surface power value in relation to the standard refractive index ($n_s$) of 1.53 and the next larger identical actual surface power value in relation to the standard refractive index ($n_s$) of 1.53 is less than a predetermined threshold and/or identical to a fixedly predetermined difference value within a variance range of 20%.

**15.** Computer program with program code for carrying out all of the method steps according to one of Claims 13 or 14, when the computer program is loaded onto a computer and/or executed on a computer.

**16.** Computer-readable storage medium comprising a computer program with program code for carrying out all of the method steps according to one of Claims 13 or 14, when the computer program is loaded onto a computer and/or executed on a computer.

## Revendications

**1.** Lot (68) de verres de lunettes semi-finis (10, 12) qui ont chacun une surface antérieure (16) de forme sphérique, ou asphérique symétrique en rotation, convexe, laquelle présente au moins une caractéristique de forme physique (R1, R2, ... R20) avec une forme dimensionnelle associée, comprenant

- une première série (66-1) de verres de lunettes semi-finis (10, 12) en une matière de base faisant preuve d’un premier indice de réfraction ($n_{d1}$) moyen, la première série (66-1) comportant des types différents par paires (n° 1, n° 2, ... n° 20) de verres de lunettes semi-finis (10, 12) qui se différencient par la forme dimensionnelle de l’au moins une caractéristique de forme physique (R1, R2, ... R20) de la forme de leur surface antérieure (16), au moins trois différents types (n° 7, n° 10, n° 13) des types (n° 1, n° 2, ... n° 20) différents par paires faisant preuve d'une puissance optique ($D_n$) superficielle réelle de leur surface antérieure (16) comprise entre 3,2 D et 6,7 D, rapportée à un indice de réfraction standard ($n_s$) de 1,53 et dans le cas d'une forme asphérique, symétrique en rotation de la surface antérieure, déterminée dans son centre de symétrie (15),
- une deuxième série (66-2) de verres de lunettes semi-finis (10, 12), en une matière de base faisant preuve d'un deuxième indice de réfraction ($n_{d2}$) moyen, différent du premier indice de réfraction ($n_{d1}$) moyen, la deuxième série (66-2) comportant des types différents par paires (n° 1, n° 3, n° 5, n° 7, n° 9, n° 10, n° 11, n° 13, n° 14, n° 16, n° 18, n° 20) de verres de lunettes semi-finis (10, 12) qui se différencient par la forme dimensionnelle de l'au moins une caractéristique de forme physique (R1, R2, ... R20) de la forme de leur surface antérieure (16),
- une troisième série (66-3) de verres de lunettes semi-finis (10, 12), en une matière de base faisant preuve d'un troisième indice de réfraction ($n_{d3}$) moyen, différent du premier indice de réfraction ($n_{d1}$) moyen et du deuxième indice de réfraction ($n_{d2}$) moyen, la troisième série (66-3) comportant des types différents par paires (n° 3, n° 7, n° 10, n° 13, n° 16) de verres de lunettes semi-finis (10, 12) qui se différencient par la forme dimensionnelle de l'au moins une caractéristique de forme physique (R1, R2, ... R20) de la forme de leur surface antérieure (16),

**caractérisé**

- **en ce qu'**au moins trois différents types (n° 7, n° 10, n° 13) des types différents par paires de la deuxième série (66-2) font preuve d'une puissance optique ($D_n$) superficielle réelle de leur surface antérieure (16) comprise entre 3,2 D et 6,7 D, rapportée à un indice de réfraction standard ($n_s$) de 1,53,
- **en ce qu'**au moins trois différents types (n° 7, n° 10, n° 13) des types (n° 3, n° 7, n° 10, n° 13, n° 16) différents par paires de la troisième série (66-3) font preuve d'une puissance optique ($D_n$) superficielle réelle de leur surface antérieure (16) comprise entre 3,2 D et 6,7 D, rapportée à un indice de réfraction standard ($n_s$) de 1,53,
- **en ce que** les formes dimensionnelles de l'au moins une caractéristique de forme physique (R7, R10, R13) de la forme des surfaces antérieures (16) des au moins trois différents types (n° 7, n° 10, n° 13) de la première série (66-1) et les formes dimensionnelles de l'au moins une caractéristique de forme physique (R7, R10, R13) de la forme des surfaces antérieures (16) des au moins trois différents types (n° 7, n° 10, n° 13) de la deuxième série (66-2) et les formes dimensionnelles de l'au moins une caractéristique de forme physique (R7, R10, R13) de la forme des surfaces antérieures (16) des au moins trois différents types (n° 7, n° 10, n° 13) de la troisième série (66-3) sont identiques, l'au moins une caractéristique de forme (R, R1, R2, ..., R20, Dn) étant

a) la courbure réelle et/ou
b) le rayon de courbure réel et/ou
c) la courbure au sommet (ρ) de la section conique du polynôme de correction de la section de surface asphérique constituée de la somme d'une section conique et d'un polynôme de correction, de la formule

$$z(r) = \frac{\rho r^2}{1 + \sqrt{1 - (1+k)(\rho r)^2}} + A_4 r^4 + A_6 r^6 + \ldots$$

définie dans DIN ISO 10110, z étant la hauteur de flèche, r étant la hauteur d'incidence, ρ étant la courbure au sommet et k étant la constante conique de la section conique, ainsi que A4, A6, ..., étant les coefficients du polynôme de correction.

**2.** Lot (68) de verres de lunettes semi-finis (10, 12) selon la revendication 1, **caractérisé en ce que** le premier indice de réfraction ($n_{d1}$) moyen et le deuxième indice de réfraction ($n_{d2}$) moyen et le troisième indice de réfraction ($n_{d3}$) moyen diffèrent par paire d'au moins 0,04.

**3.** Lot (68) de verres de lunettes semi-finis (10, 12) selon l'une quelconque des revendications précédentes, **caractérisé**

- **en ce qu'**au moins quatre différents types des types (n° 1, n° 2 ... n° 20) différents par paires de la première série (66-1), qui se différencient par la forme dimensionnelle de l'au moins une caractéristique de forme physique (R1, R2, ... R20) de la forme de leur surface antérieure (16) font preuve d'une puissance optique ($D_n$) superficielle réelle de leur surface antérieure (16) comprise entre 3,2 D et 6,7 D, rapportée à un indice de réfraction standard ($n_s$) de 1,53,
- **en ce qu'**au moins quatre différents types des types (n° 1, n° 3, n° 5, n° 7, n° 9, n° 10, n° 11, n° 13, n° 14, n° 16, n° 18, n° 20) différents par paire de la deuxième série (66-2), qui se différencient par la forme dimensionnelle de l'au moins une caractéristique de forme physique (R1, R3, R5, R7, R9, R10, R11, R13, R14, R16, R18, R20) de la forme de leur surface antérieure (16) font preuve d'une puissance optique superficielle réelle de leur surface antérieure (16) comprise entre 3,2 D et 6,7 D, rapportée à un indice de réfraction standard ($n_s$) de 1,53,
- **en ce qu'**au moins quatre différents types des types différents par paires de la troisième série, qui se différencient par la forme dimensionnelle de l'au moins une caractéristique de forme physique de la forme de leur surface antérieure font preuve d'une puissance optique superficielle réelle de leur surface antérieure comprise entre 3,2 D et 6,7 D, rapportée à un indice de réfraction standard de 1,53,
- **en ce que** les formes dimensionnelles de l'au moins une caractéristique physique de la forme des surfaces antérieures des au moins quatre différents types de la première série (66-1) et les formes dimensionnelles de l'au moins une caractéristique physique de la forme des surfaces antérieures (16) des au moins quatre différents types de la deuxième série (66-2) et les formes dimensionnelles de l'au moins une caractéristique physique de la forme des surfaces antérieures (16) des au moins quatre différents types de la troisième série (66-3) sont identiques.

**4.** Lot (68) de verres de lunettes semi-finis (10, 12) selon l'une quelconque des revendications précédentes, **caractérisé en ce que** la première série (66-1) et la deuxième série (66-2) et la troisième série (66-3) comportent chacune des types (n° 3, n° 7, n° 10, n° 13, n° 16) de verres de lunettes semi-finis (10, 12) dont les surfaces antérieures (16) présentent une caractéristique de forme (R3, R7, R10, R13, R16) dotée de formes dimensionnelles identiques et **en ce que** la différence entre chaque fois l'une des formes dimensionnelles identiques ou la valeur réciproque de celle-ci et la forme dimensionnelle identique respective, immédiatement supérieure ou sa valeur réciproque, est de même valeur, dans une variance de 20 %.

**5.** Lot (68) de verres de lunettes semi-finis (10, 12) selon l'une quelconque des revendications précédentes, **caractérisé en ce que** l'au moins une caractéristique de forme est un pouvoir de réfraction ($D_n$) superficiel réel et **en ce que** la forme dimensionnelle associée est la puissance optique réelle associée, rapportée à un indice de réfraction standard ($n_s$) de 1,53, de sorte que la première série (66-1) et la deuxième série (66-2) et la troisième série (66-3) comportent chacune des types de verres de lunettes semi-finis (10, 12) dont les surfaces antérieures (16) font preuve d'un pouvoir de réfraction ($D_n$) superficiel réel avec des puissances optiques superficielles réelles identiques, rapportées à un indice de réfraction standard ($n_s$) de 1,53 et **en ce que** la différence entre l'une des puissances optiques superficielles réelles identiques, rapportée à l'indice de réfraction standard ($n_s$) de 1,53 et la puissance optique superficielle réelle identique immédiatement supérieure, rapportée à l'indice de réfraction standard ($n_s$) de 1,53, est inférieure à 2,5 D.

**6.** Lot (68) de verres de lunettes semi-finis (10, 12) selon l'une quelconque des revendications précédentes, **caractérisé**

- **en ce qu'**au moins dix différents types des types différents par paires de la première série (66-1), qui se différencient par la forme dimensionnelle de l'au moins une caractéristique de forme physique de la forme de leur surface antérieure (16), font preuve d'une puissance optique ($D_n$) superficielle réelle de leur surface antérieure (16) comprise entre 0,5 D et 9,60 D, rapportée à un indice de réfraction standard de 1,53,
- **en ce qu'**au moins dix différents types des types différents par paires de la deuxième série (66-2), qui se différencient par la forme dimensionnelle de l'au moins une caractéristique de forme physique de la forme de leur surface antérieure (16), font preuve d'une puissance optique superficielle réelle de leur surface antérieure (16) comprise entre 0,5 D et 9,60 D, rapportée à un indice de réfraction standard ($n_s$) de 1,53,
- **en ce qu'**au moins dix différents types des types différents par paires de la troisième série (66-3), qui se différencient par la forme dimensionnelle de l'au moins une caractéristique de forme physique de la forme de leur surface antérieure (16), font preuve d'une puissance optique superficielle réelle de leur surface antérieure (16) comprise entre 0,50 D et 9,60 D, rapportée à un indice de réfraction standard ($n_s$) de 1,53,
- **en ce que** les formes dimensionnelles de l'au moins une caractéristique physique de la forme des surfaces antérieures (16) des au moins dix différents types de la première série (66-1) et les formes dimensionnelles de l'au moins une caractéristique physique de la forme des surfaces antérieures (16) des au moins dix différents types de la deuxième série (66-2) et les formes dimensionnelles de l'au moins une caractéristique physique de la forme des surfaces antérieures (16) des au moins dix différents types de la troisième série (66-3) sont identiques.

**7.** Procédé, destiné à fabriquer des verres de lunettes, comprenant les étapes consistant à :

a) mettre à disposition un lot (68) de verres de lunettes semi-finis (10, 12), qui ont chacun une surface postérieure (18) et une surface antérieure (16) de forme sphérique, ou asphérique symétrique en rotation, convexe, laquelle présente au moins une caractéristique de forme physique avec une forme dimensionnelle associée, comprenant

- une première série (66-1) de verres de lunettes semi-finis (10, 12) en une matière de base faisant preuve d'un premier indice de réfraction ($n_{d1}$) moyen, la première série (66-1) comportant des types différents par paires de verres de lunettes semi-finis (10, 12) qui se différencient par la forme dimensionnelle de l'au moins une caractéristique de forme physique de la forme de leur surface antérieure (16), au moins trois différents types des types différents par paires faisant preuve d'une puissance optique ($D_n$) superficielle réelle de leur surface antérieure (16) comprise entre 3,2 D et 6,7 D, rapportée à un indice de réfraction standard ($n_s$) de 1,53 et dans le cas d'une forme asphérique, symétrique en rotation de la surface antérieure (16), déterminée dans son centre de symétrie,
- une deuxième série (66-2) de verres de lunettes semi-finis (10, 12), en une matière de base faisant preuve d'un deuxième indice de réfraction ($n_{d2}$) moyen, différent du premier indice de réfraction ($n_{d1}$) moyen, la deuxième série (66-2) comportant des types différents par paires de verres de lunettes semi-finis (10, 12) qui se différencient par la forme dimensionnelle de l'au moins une caractéristique de forme physique de la forme de leur surface antérieure (16),
- une troisième série (66-3) de verres de lunettes semi-finis (10, 12), en une matière de base faisant preuve d'un troisième indice de réfraction ($n_{d3}$) moyen, différent du premier indice de réfraction ($n_{d1}$) moyen et du deuxième indice de réfraction ($n_{d2}$) moyen, la troisième série (66-3) comportant des types différents par paires de verres de lunettes semi-finis (10, 12) qui se différencient par la forme dimensionnelle de l'au moins une caractéristique de forme physique de la forme de leur surface antérieure (16),

b) prélever l'un des verres de lunettes semi-finis (10, 12) dans le lot (68) de verres de lunettes semi-finis (10, 12) mis à disposition,
c) usiner la face postérieure (18) du verre de lunettes semi-fini (10, 12), **caractérisé**

- **en ce qu'**au moins trois différents types des types différents par paires de la deuxième série (66-2) font preuve d'une puissance optique superficielle réelle de leur surface antérieure (16) comprise entre 3,2 D et 6,7 D, rapportée à un indice de réfraction standard ($n_s$) de 1,53,
- **en ce qu'**au moins trois différents types des types différents par paires de la troisième série (66-3) font preuve d'une puissance optique superficielle réelle de leur surface antérieure (16) comprise entre 3,2 D et 6,7 D, rapportée à un indice de réfraction standard ($n_s$) de 1,53,
- **en ce que** les formes dimensionnelles de l'au moins une caractéristique de forme physique de la forme des surfaces antérieures (16) des au moins trois différents types de la première série (66-1) et les formes dimensionnelles de l'au moins une caractéristique de forme physique de la forme des surfaces antérieures (16) des au moins trois différents types de la deuxième série (66-2) et les formes dimensionnelles de l'au moins une caractéristique de forme physique de la forme des surfaces antérieures (16) des au moins trois différents types de la troisième série (66-3) sont identiques, l'au moins une caractéristique de forme (R, R1, R2, ..., R20, Dn) étant

a) la courbure réelle et/ou
b) le rayon de courbure réel et/ou
c) la courbure au sommet (ρ) de la section conique du polynôme de correction de la section de surface asphérique constituée de la somme d'une section conique et d'un polynôme de correction, de la formule

$$z(r) = \frac{\rho r^2}{1 + \sqrt{1 - (1 + k)(\rho r)^2}} + A_4 r^4 + A_6 r^6 + \dots$$

définie dans DIN ISO 10110, z étant la hauteur de flèche, r étant la hauteur d'incidence, ρ étant la courbure au sommet et k étant la constante conique de la section conique, ainsi que A4, A6, ..., étant les coefficients du polynôme de correction.

**8.** Procédé, destiné à fabriquer des verres de lunettes selon la revendication 7, **caractérisé en ce que** le lot (68) mis à disposition de produits semi-finis (10, 12) est réalisé selon l'une quelconque des revendications 2 à 6.

**9.** Procédé, destiné à fabriquer des verres de lunettes selon l'une quelconque des revendications 7 ou 8, **caractérisé**

**en ce que**, dans l'étape b), le prélèvement des verres de lunettes semi-finis (10, 12) dans le lot (68) de verres de lunettes semi-finis (10, 12) mis à disposition s'effectue au moyen d'un système de prélèvement (34) réalisé avec une forme complémentaire à au moins un segment partiel (17) de la forme de la surface antérieure (16).

**10.** Procédé selon la revendication 9, **caractérisé en ce que** le segment partiel (17) comprend au moins 40 %, de la surface antérieure des verres de lunettes semi-finis (10, 12) prélevés.

**11.** Utilisation d'un lot (68) de verres de lunettes semi-finis (10, 12) dans un procédé destiné à fabriquer des verres de lunettes, les verres de lunettes semi-finis (10, 12) ayant chacun une surface antérieure (16) de forme sphérique, ou asphérique symétrique en rotation, convexe, laquelle présente au moins une caractéristique de forme physique avec une forme dimensionnelle associée, comprenant :

- une première série (66-1) de verres de lunettes semi-finis (10, 12) en une matière de base faisant preuve d'un premier indice de réfraction moyen, la première série comportant des types différents par paires de verres de lunettes semi-finis (10, 12) qui se différencient par la forme dimensionnelle de l'au moins une caractéristique de forme physique de la forme de leur surface antérieure (16), au moins trois différents types des types différents par paires faisant preuve d'une puissance optique ($D_n$) superficielle réelle de leur surface antérieure (16) comprise entre 3,2 D et 6,7 D, rapportée à un indice de réfraction standard de 1,53 et dans le cas d'une forme asphérique, symétrique en rotation de la surface antérieure (16), déterminée dans son centre de symétrie,
- une deuxième série (66-2) de verres de lunettes semi-finis (10, 12), en une matière de base faisant preuve d'un deuxième indice de réfraction moyen, différent du premier indice de réfraction moyen, la deuxième série comportant des types différents par paires de verres de lunettes semi-finis (10, 12) qui se différencient par la forme dimensionnelle de l'au moins une caractéristique de forme physique de la forme de leur surface antérieure,
- une troisième série (66-3) de verres de lunettes semi-finis (10, 12), en une matière de base faisant preuve d'un troisième indice de réfraction moyen différent du premier indice de réfraction moyen et du deuxième indice de réfraction moyen, la troisième série comportant des types différents par paires de verres de lunettes semi-finis (10, 12) qui se différencient par la forme dimensionnelle de l'au moins une caractéristique de forme physique de la forme de leur surface antérieure (16),

**caractérisé**

- **en ce qu'**au moins trois différents types des types différents par paires de la deuxième série (66-2) font preuve d'une puissance optique ($D_n$) superficielle réelle de leur surface antérieure (16) comprise entre 3,2 D et 6,7 D, rapportée à un indice de réfraction standard ($n_s$) de 1,53,
- **en ce qu'**au moins trois différents types des types différents par paires de la troisième série (66-3) font preuve d'une puissance optique ($D_n$) superficielle réelle de leur surface antérieure (16) comprise entre 3,2 D et 6,7 D, rapportée à un indice de réfraction standard ($n_s$) de 1,53,
- **en ce que** les formes dimensionnelles de l'au moins une caractéristique physique de la forme des surfaces antérieures (16) des au moins trois différents types de la première série (66-1) et les formes dimensionnelles de l'au moins une caractéristique physique de la forme des surfaces antérieures (16) des au moins trois différents types de la deuxième série (66-2) et les formes dimensionnelles de l'au moins une caractéristique physique de la forme des surfaces antérieures (16) des au moins trois différents types de la troisième série (66-3) sont identiques, l'au moins une caractéristique de forme (R, R1, R2, ..., R20, Dn) étant

a) la courbure réelle et/ou
b) le rayon de courbure réel et/ou
c) la courbure au sommet (ρ) de la section conique du polynôme de correction de la section de surface asphérique constituée de la somme d'une section conique et d'un polynôme de correction, de la formule

$$z(r) = \frac{\rho r^2}{1 + \sqrt{1 - (1+k)(\rho r)^2}} + A_4 r^4 + A_6 r^6 + \dots$$

définie dans DIN ISO 10110, z étant la hauteur de flèche, r étant la hauteur d'incidence, ρ étant la courbure au sommet et k étant la constante conique de la section conique, ainsi que A4, A6, ..., étant les coefficients du polynôme de correction.

**12.** Dispositif (88), destiné à fabriquer des verres de lunettes, comprenant :

a) un système de mise à disposition (96), pour mettre à disposition un lot (68) de verres de lunettes semi-finis (10, 12), les verres de lunettes semi-finis (10, 12) ayant chacun une surface postérieure (18) et une surface antérieure (16) de forme sphérique, ou asphérique symétrique en rotation, convexe, laquelle présente au moins une caractéristique de forme physique avec une forme dimensionnelle associée, comprenant :

- une première série (66-1) de verres de lunettes semi-finis (10, 12) en une matière de base faisant preuve d'un premier indice de réfraction moyen, la première série comportant des types différents par paires de verres de lunettes semi-finis (10, 12) qui se différencient par la forme dimensionnelle de l'au moins une caractéristique de forme physique de la forme de leur surface antérieure, au moins trois différents types des types différents par paires faisant preuve d'une puissance optique superficielle réelle de leur surface antérieure comprise entre 3,2 D et 6,7 D, rapportée à un indice de réfraction standard de 1,53 et dans le cas d'une forme asphérique, symétrique en rotation de la surface antérieure, déterminée dans son centre de symétrie,
- une deuxième série de verres de lunettes semi-finis, en une matière de base faisant preuve d'un deuxième indice de réfraction moyen, différent du premier indice de réfraction moyen, la deuxième série comportant des types différents par paires de verres de lunettes semi-finis (10, 12) qui se différencient par la forme dimensionnelle de l'au moins une caractéristique de forme physique de la forme de leur surface antérieure,
- une troisième série de verres de lunettes semi-finis, en une matière de base faisant preuve d'un troisième indice de réfraction moyen différent du premier indice de réfraction moyen et du deuxième indice de réfraction moyen, la troisième série comportant des types différents par paires de verres de lunettes semi-finis (10, 12) qui se différencient par la forme dimensionnelle de l'au moins une caractéristique de forme physique de la forme de leur surface antérieure (16),

b) un système de prélèvement (34) pour prélever l'un des verres de lunettes semi-finis (10, 12) dans le lot (68) de verres de lunettes semi-finis (10, 12) mis à disposition,
c) un système d'usinage (100) pour usiner la surface arrière (18) du verre de lunettes semi-fini (10, 12) prélevé,

**caractérisé**

- **en ce qu'**au moins trois différents types des types différents par paires de la deuxième série (66-2) font preuve d'une puissance optique superficielle réelle de leur surface antérieure comprise entre 3,2D et 6,7 D, rapportée à un indice de réfraction standard ($n_s$) de 1,53,
- **en ce qu'**au moins trois différents types des types différents par paires de la troisième série (66-3) font preuve d'une puissance optique superficielle réelle de leur surface antérieure (16) comprise entre 3,2 D et 6,7 D, rapportée à un indice de réfraction standard ($n_s$) de 1,53,
- **en ce que** les formes dimensionnelles de l'au moins une caractéristique physique de la forme des surfaces antérieures (16) des au moins trois différents types de la première série (66-1) et les formes dimensionnelles de l'au moins une caractéristique physique de la forme des surfaces antérieures (16) des au moins trois différents types de la deuxième série (66-2) et les formes dimensionnelles de l'au moins une caractéristique physique de la forme des surfaces antérieures (16) des au moins trois différents types de la troisième série (66-3) sont identiques,

l'au moins une caractéristique de forme (R, R1, R2, ..., R20, Dn) étant

a) la courbure réelle et/ou
b) le rayon de courbure réel et/ou
c) la courbure au sommet (ρ) de la section conique du polynôme de correction de la section de surface asphérique constituée de la somme d'une section conique et d'un polynôme de correction, de la formule

$$z(r) = \frac{\rho r^2}{1+\sqrt{1-(1+k)(\rho r)^2}} + A_4 r^4 + A_6 r^6 + \ldots$$

définie dans DIN ISO 10110, z étant la hauteur de flèche, r étant la hauteur d'incidence, ρ étant la courbure au sommet et k étant la constante conique de la section conique, ainsi que A4, A6, ..., étant les coefficients du polynôme de correction.

**13.** Procédé mis en oeuvre par ordinateur, destiné à concevoir un lot (68) de verres de lunettes semi-finis (10, 12), les verres de lunettes semi-finis (10, 12) ayant chacun une surface antérieure (16) de forme sphérique, ou asphérique symétrique en rotation, convexe, laquelle présente au moins une caractéristique de forme physique (R5, R6, ... R16) avec une forme dimensionnelle associée, le lot (68) de verres de lunettes semi-finis (10, 12) comprenant une première série (66-4) de verres de lunettes semi-finis (10, 12) en une matière de base faisant preuve d'un premier indice de réfraction ($n_{d4}$) moyen et une deuxième série (66-5) de verres de lunettes semi-finis (10, 12) en une matière de base, faisant preuve d'un deuxième indice de réfraction ($n_{d5}$) moyen, différent du premier indice de réfraction ($n_{d4}$) moyen, et une troisième série de verres de lunettes semi-finis en une matière de base faisant preuve d'un troisième indice de réfraction moyen, différent du premier indice de réfraction ($n_{d4}$) moyen et du deuxième indice de réfraction ($n_{d5}$) moyen, la première série (66-4) comportant des types de verres de lunettes semi-finis (10, 12) différents par paires, qui se différencient par la forme dimensionnelle de l'au moins une caractéristique de forme physique (R5, R6, ... R16) de la forme de leur surface antérieure (16) et la deuxième série (66-5) comportant des types de verres de lunettes semi-finis (10, 12) différents par paires, qui se différencient par la forme dimensionnelle de l'au moins une caractéristique de forme physique (R5, R6, ... R16) de la forme de leur surface antérieure (16) et la troisième série comportant des types de verres de lunettes semi-finis différents par paires, qui se différencient par la forme dimensionnelle de l'au moins une caractéristique de forme physique de la forme de la surface antérieure, **caractérisé par** l'étape consistant à :

a) ajuster, à savoir mettre en correspondance les formes dimensionnelles de l'au moins une caractéristique de forme (R5, R6, ... R16) physique de la forme des surfaces antérieures (16) des différents types de la première série (66-4) et les formes dimensionnelles de l'au moins une caractéristique de forme (R5, R6, ... R16) physique de la forme des surfaces antérieures (16) des différents types de la deuxième série (66-5) et les formes dimensionnelles de l'au moins une caractéristique de forme physique de la forme des surfaces antérieures des différents types de la troisième série, de sorte que les formes des surfaces antérieures desdits différents types soient identiques sur une surface partielle ou sur l'ensemble de la surface antérieure pour la totalité des au moins trois séries, l'au moins une caractéristique de forme (R, R1, R2, ..., R20, Dn) étant

i) la courbure réelle et/ou
ii) le rayon de courbure réel et/ou
iii) la courbure au sommet (ρ) de la section conique du polynôme de correction de la section de surface asphérique constituée de la somme d'une section conique et d'un polynôme de correction, de la formule

$$z(r) = \frac{\rho r^2}{1 + \sqrt{1 - (1 + k)(\rho r)^2}} + A_4 r^4 + A_6 r^6 + \ldots$$

définie dans DIN ISO 10110, z étant la hauteur de flèche, r étant la hauteur d'incidence, p étant la courbure au sommet et k étant la constante conique de la section conique, ainsi que A4, A6, ..., étant les coefficients du polynôme de correction.

**14.** Procédé mis en oeuvre par ordinateur selon la revendication 13, **caractérisé en ce que** l'au moins une caractéristique de forme est un pouvoir de réfraction superficiel ($D_n$) réel et **en ce que** la forme dimensionnelle associée est la puissance optique ($n_s$) superficielle réelle, rapportée à un indice de réfraction standard de 1,53, de sorte que la première série (66-4) et la deuxième série (66-5) comportent chacune des types de verres de lunettes semi-finis (10, 12) dont les surfaces antérieures (16) présentent un pouvoir de réfraction superficiel ($D_n$) réel avec des puissances optiques réelles identiques, rapportées à un indice de réfraction standard ($n_s$) de 1,53 et **en ce que** l'ajustement des puissances optiques superficielles réelles des surfaces antérieures (16) des verres de lunettes semi-finis des différents types de la première série (66-4), rapportées à l'indice de réfraction standard ($n_s$) de 1,53 et des puissances optiques superficielles réelles des surfaces antérieures des verres de lunettes semi-finis (10, 12) des différents types de la deuxième série (66-5), rapportées à l'indice de réfraction standard de 1,53 s'effectue de telle sorte que la différence entre l'une des puissances optiques superficielles réelles identiques, rapportées à l'indice de réfraction standard ($n_s$) de 1,53 et la puissance optique superficielle réelle identique immédiatement supérieure, rapportée à l'indice de réfraction standard ($n_s$) de 1,53 soit inférieure à une valeur seuil prédéfinie et/ou soit identique dans une plage de variance de 20 % à une valeur différentielle fixe prédéfinie.

**15.** Programme informatique, avec code programme, destiné à réaliser toutes les étapes de procédé selon l'une quelconque des revendications 13 ou 14, lorsque le programme informatique est chargé dans un ordinateur et/ou exécuté sur un ordinateur.

16. Support de stockage lisible par ordinateur comprenant un programme informatique avec code programme, destiné à réaliser toutes les étapes de procédé selon l'une quelconque des revendications 13 ou 14, lorsque le programme informatique est chargé dans un ordinateur et/ou exécuté sur un ordinateur.

FIG.1

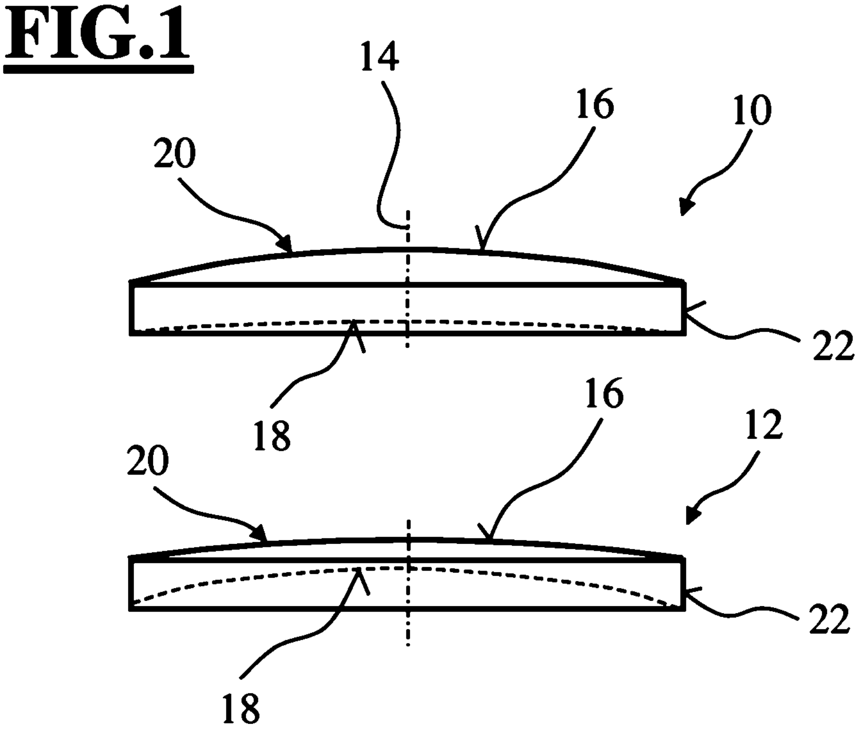
14
16
10
20
22
18
16
12
20
22
18

FIG.2

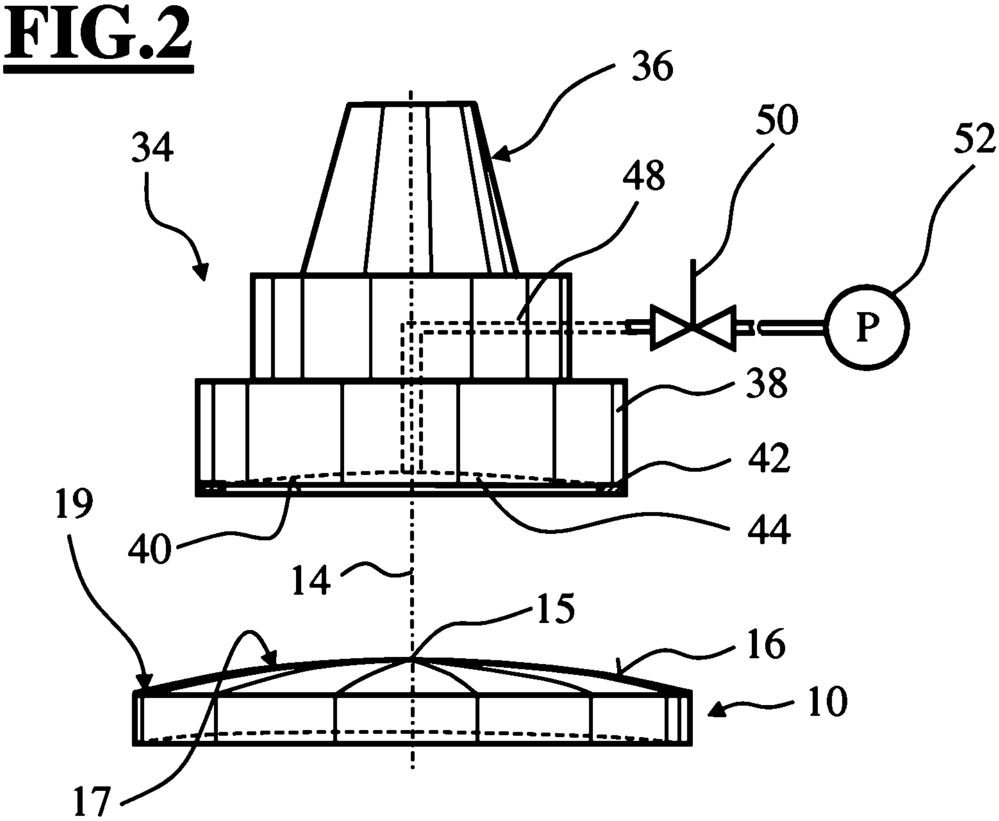
36
50
52
34
48
P
38
42
19
40
44
14
15
16
10
17

FIG.3

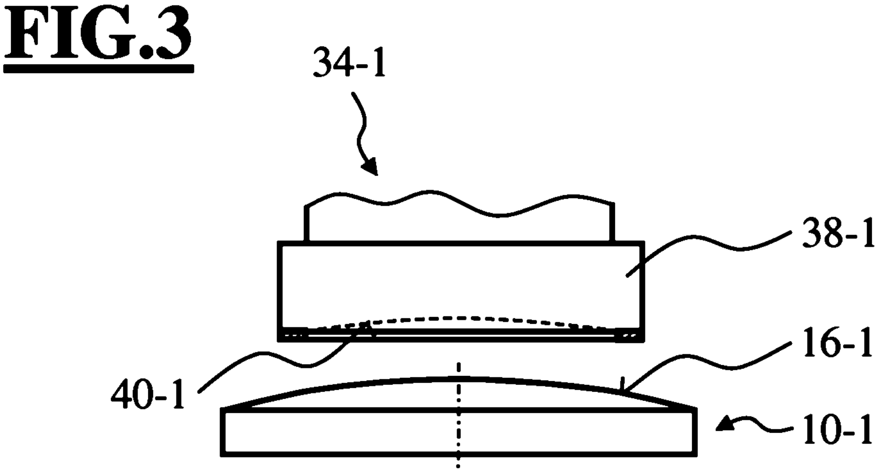


FIG.4

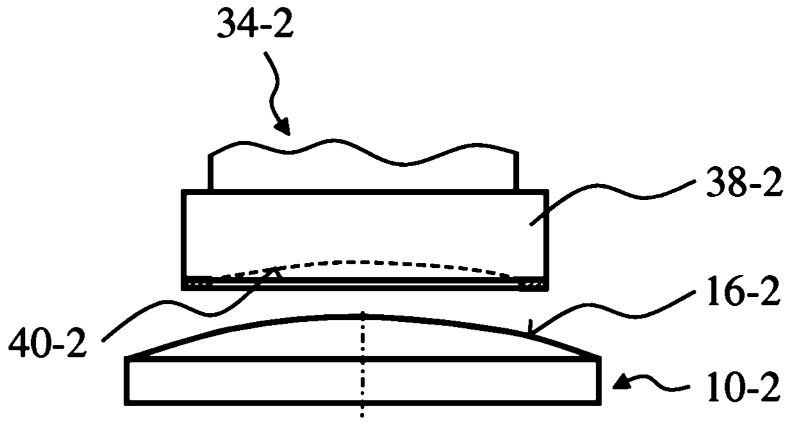


FIG.5

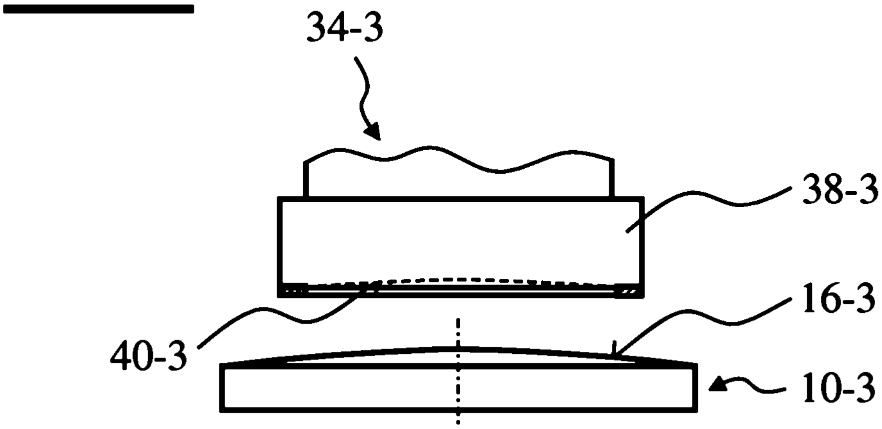

# FIG.6

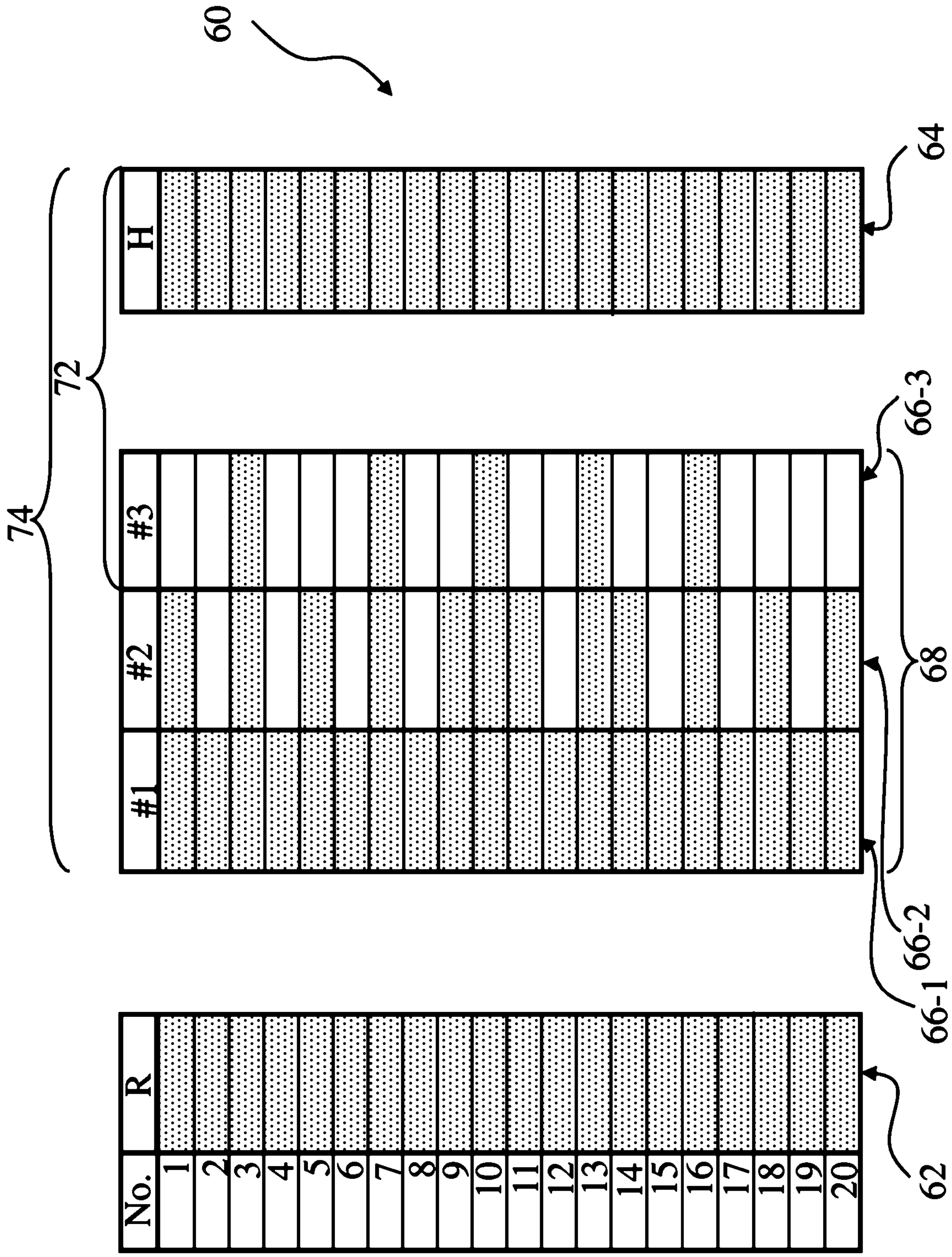
60
64
H
72
74
66-3
#3
#2
#1
68
66-2
66-1
R
No.
1
2
3
4
5
6
7
8
9
10
11
12
13
14
15
16
17
18
19
20
62

**FIG.7**

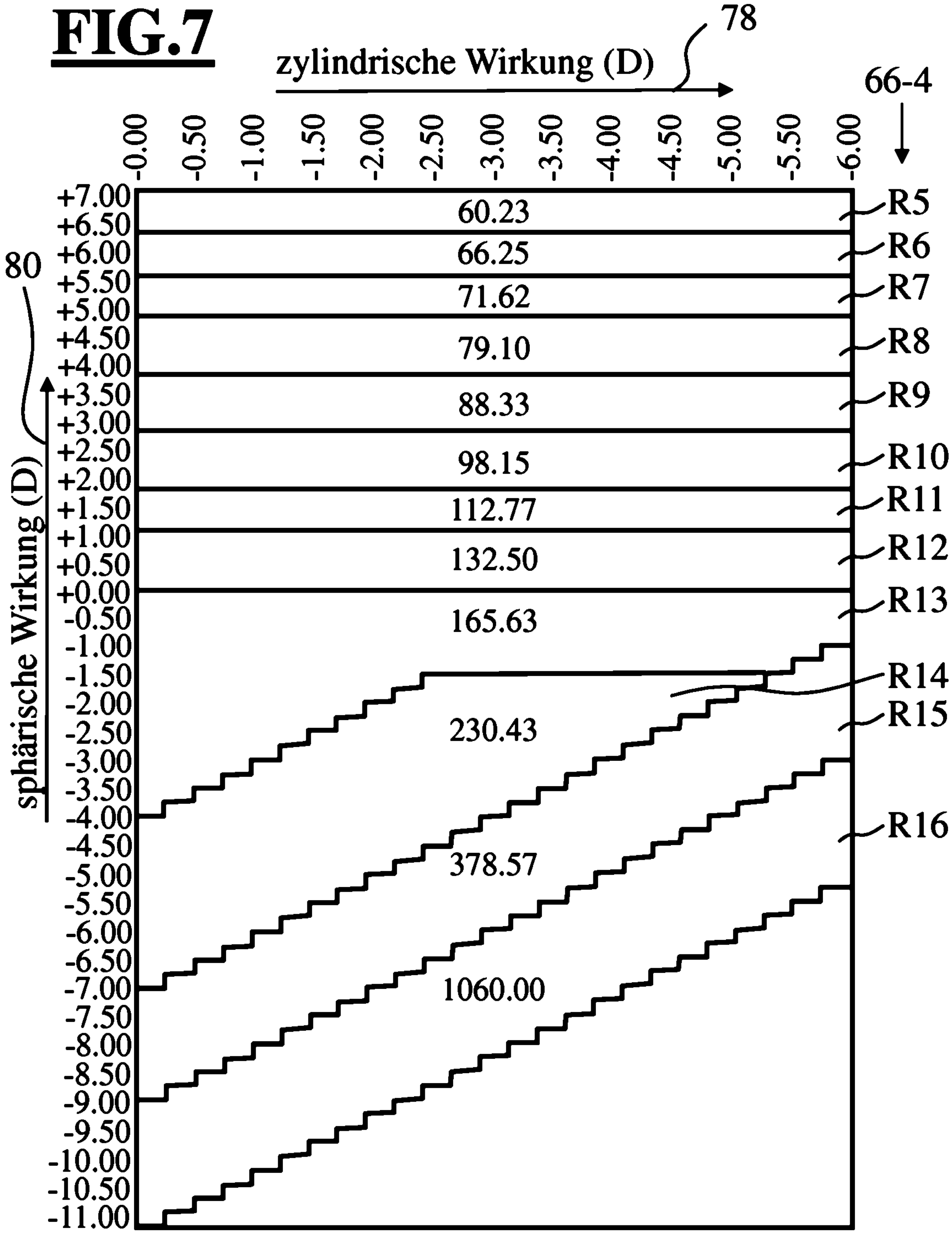

78
zylindrische Wirkung (D)
66-4
-0.00
-0.50
-1.00
-1.50
-2.00
-2.50
-3.00
-3.50
-4.00
-4.50
-5.00
-5.50
-6.00
80
sphärische Wirkung (D)
+7.00
+6.50
+6.00
+5.50
+5.00
+4.50
+4.00
+3.50
+3.00
+2.50
+2.00
+1.50
+1.00
+0.50
+0.00
-0.50
-1.00
-1.50
-2.00
-2.50
-3.00
-3.50
-4.00
-4.50
-5.00
-5.50
-6.00
-6.50
-7.00
-7.50
-8.00
-8.50
-9.00
-9.50
-10.00
-10.50
-11.00
60.23
66.25
71.62
79.10
88.33
98.15
112.77
132.50
165.63
230.43
378.57
1060.00
R5
R6
R7
R8
R9
R10
R11
R12
R13
R14
R15
R16

# FIG.8

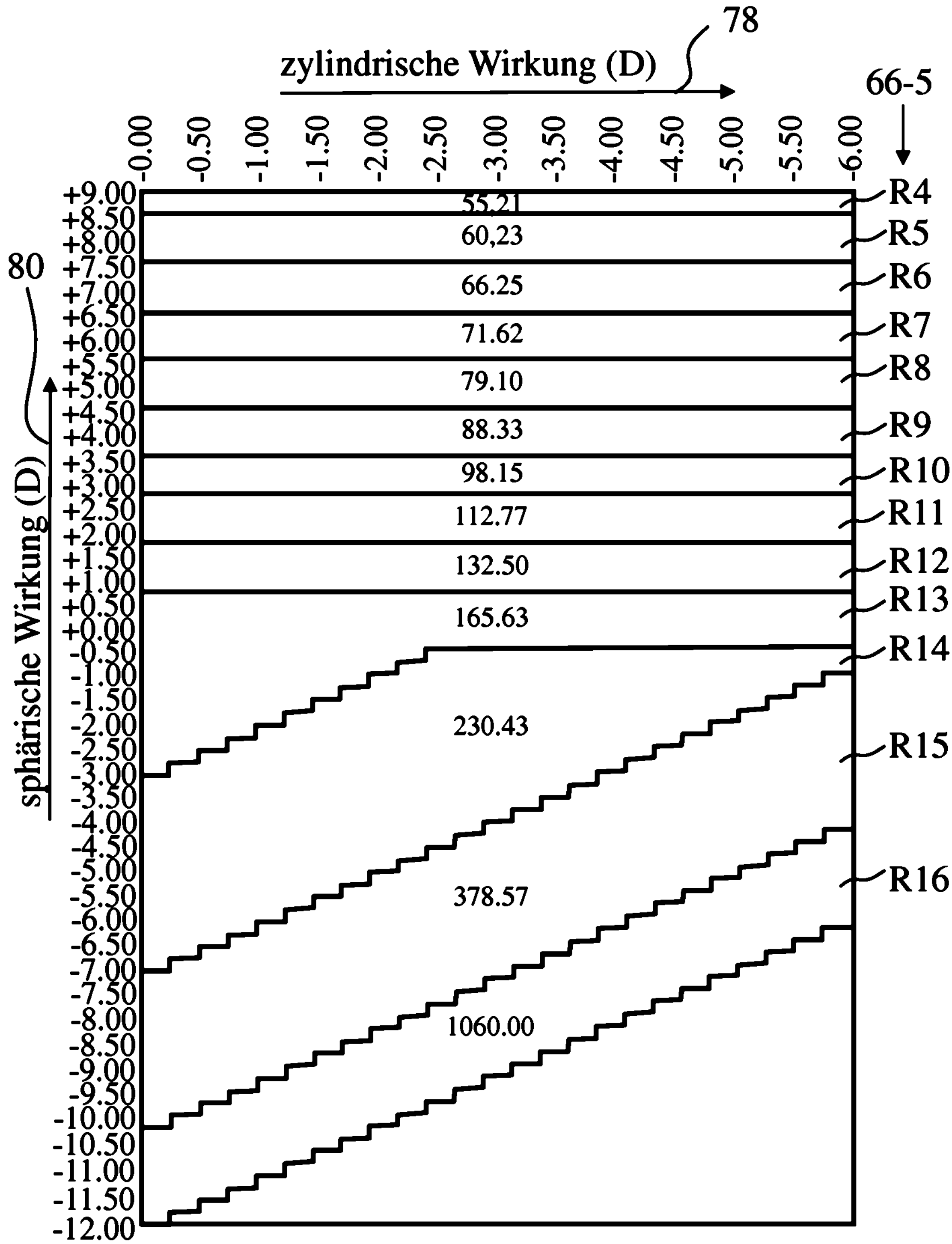
78
zylindrische Wirkung (D)
66-5
-0.00
-0.50
-1.00
-1.50
-2.00
-2.50
-3.00
-3.50
-4.00
-4.50
-5.00
-5.50
-6.00
80
sphärische Wirkung (D)
+9.00
+8.50
+8.00
+7.50
+7.00
+6.50
+6.00
+5.50
+5.00
+4.50
+4.00
+3.50
+3.00
+2.50
+2.00
+1.50
+1.00
+0.50
+0.00
-0.50
-1.00
-1.50
-2.00
-2.50
-3.00
-3.50
-4.00
-4.50
-5.00
-5.50
-6.00
-6.50
-7.00
-7.50
-8.00
-8.50
-9.00
-9.50
-10.00
-10.50
-11.00
-11.50
-12.00
55.21
60,23
66.25
71.62
79.10
88.33
98.15
112.77
132.50
165.63
230.43
378.57
1060.00
R4
R5
R6
R7
R8
R9
R10
R11
R12
R13
R14
R15
R16

FIG.9

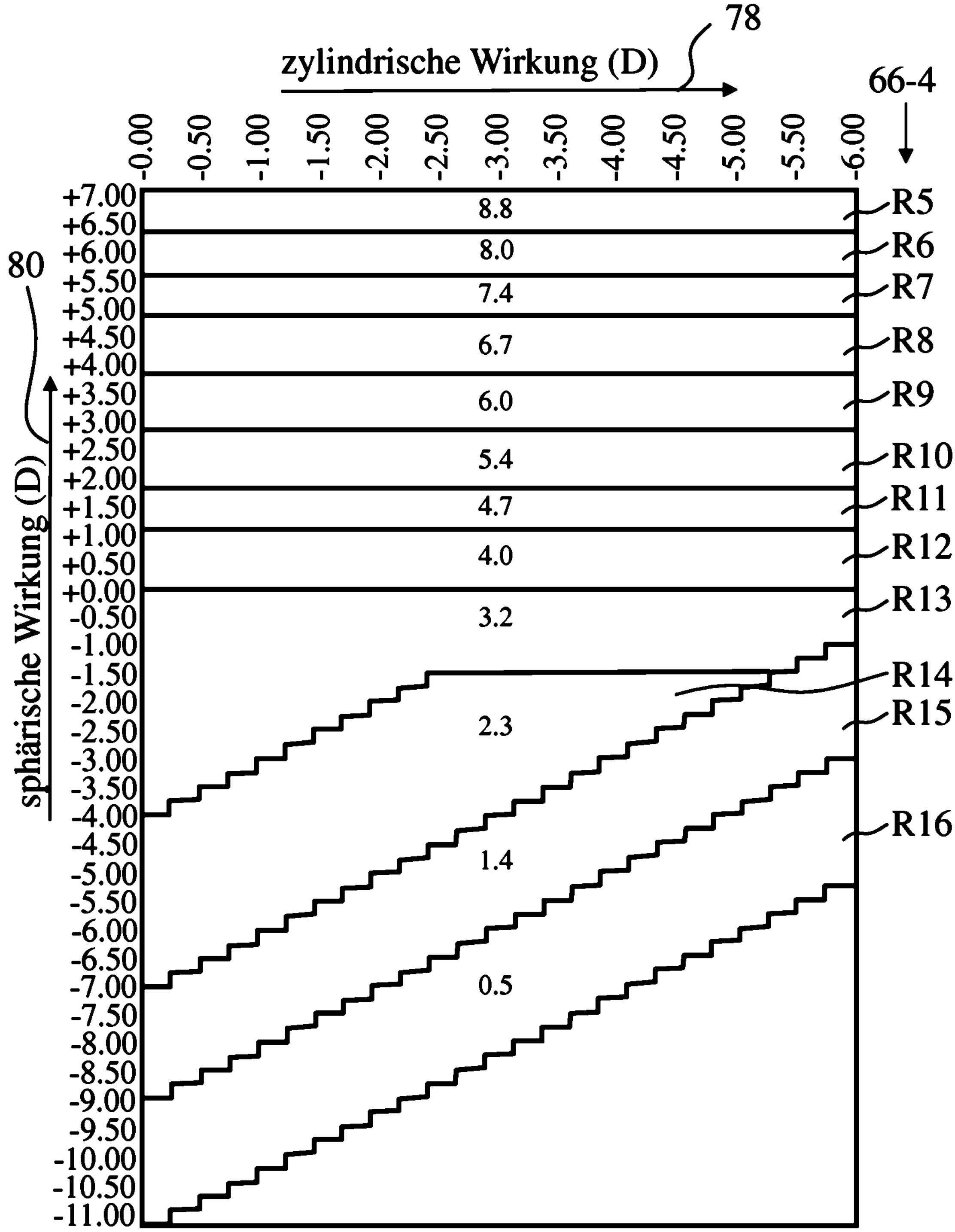
78
zylindrische Wirkung (D)
66-4
-0.00
-0.50
-1.00
-1.50
-2.00
-2.50
-3.00
-3.50
-4.00
-4.50
-5.00
-5.50
-6.00
80
sphärische Wirkung (D)
+7.00
+6.50
+6.00
+5.50
+5.00
+4.50
+4.00
+3.50
+3.00
+2.50
+2.00
+1.50
+1.00
+0.50
+0.00
-0.50
-1.00
-1.50
-2.00
-2.50
-3.00
-3.50
-4.00
-4.50
-5.00
-5.50
-6.00
-6.50
-7.00
-7.50
-8.00
-8.50
-9.00
-9.50
-10.00
-10.50
-11.00
8.8
8.0
7.4
6.7
6.0
5.4
4.7
4.0
3.2
2.3
1.4
0.5
R5
R6
R7
R8
R9
R10
R11
R12
R13
R14
R15
R16

FIG.10

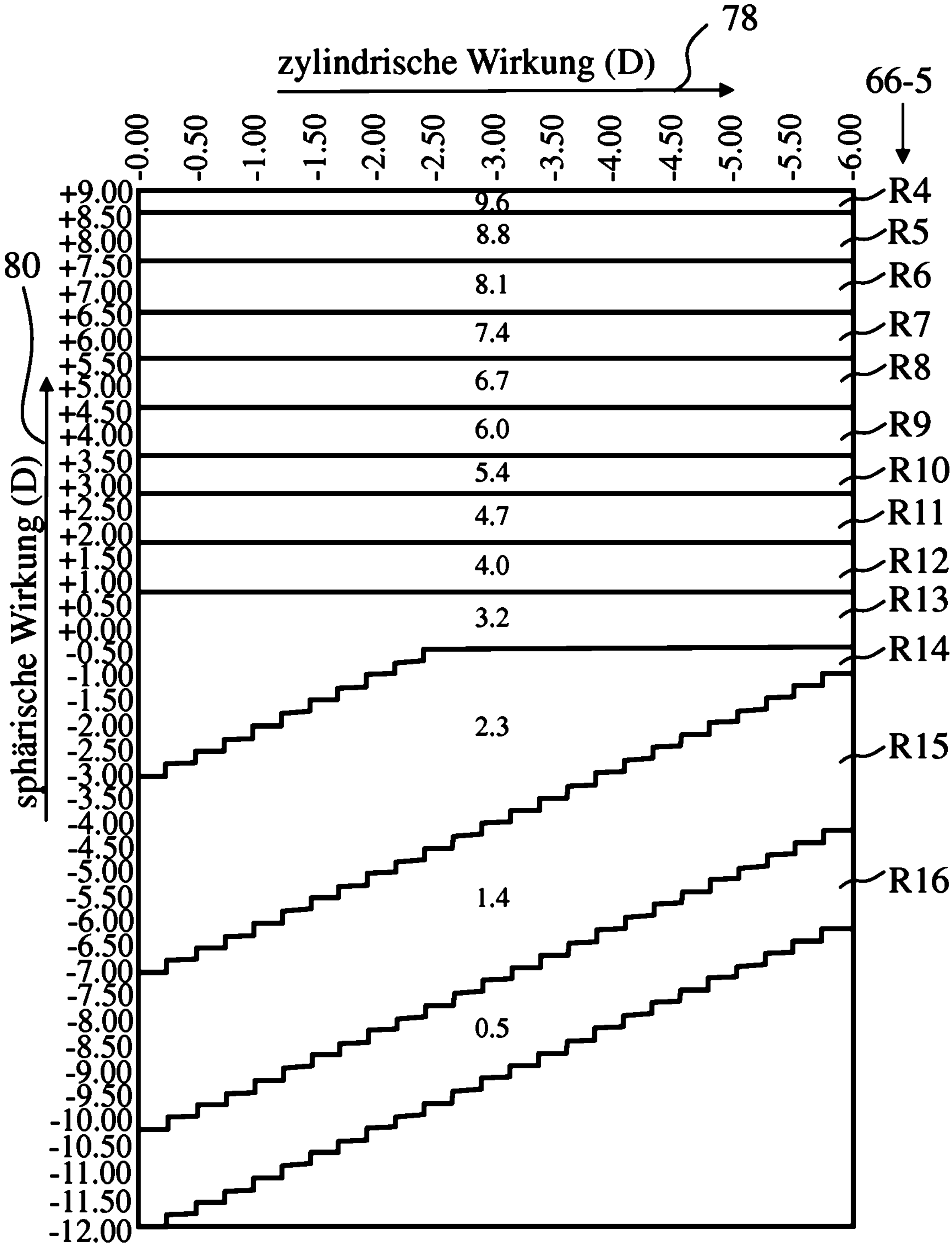
78
zylindrische Wirkung (D)
66-5
-0.00
-0.50
-1.00
-1.50
-2.00
-2.50
-3.00
-3.50
-4.00
-4.50
-5.00
-5.50
-6.00
80
sphärische Wirkung (D)
+9.00
+8.50
+8.00
+7.50
+7.00
+6.50
+6.00
+5.50
+5.00
+4.50
+4.00
+3.50
+3.00
+2.50
+2.00
+1.50
+1.00
+0.50
+0.00
-0.50
-1.00
-1.50
-2.00
-2.50
-3.00
-3.50
-4.00
-4.50
-5.00
-5.50
-6.00
-6.50
-7.00
-7.50
-8.00
-8.50
-9.00
-9.50
-10.00
-10.50
-11.00
-11.50
-12.00
9.6
8.8
8.1
7.4
6.7
6.0
5.4
4.7
4.0
3.2
2.3
1.4
0.5
R4
R5
R6
R7
R8
R9
R10
R11
R12
R13
R14
R15
R16

FIG.11

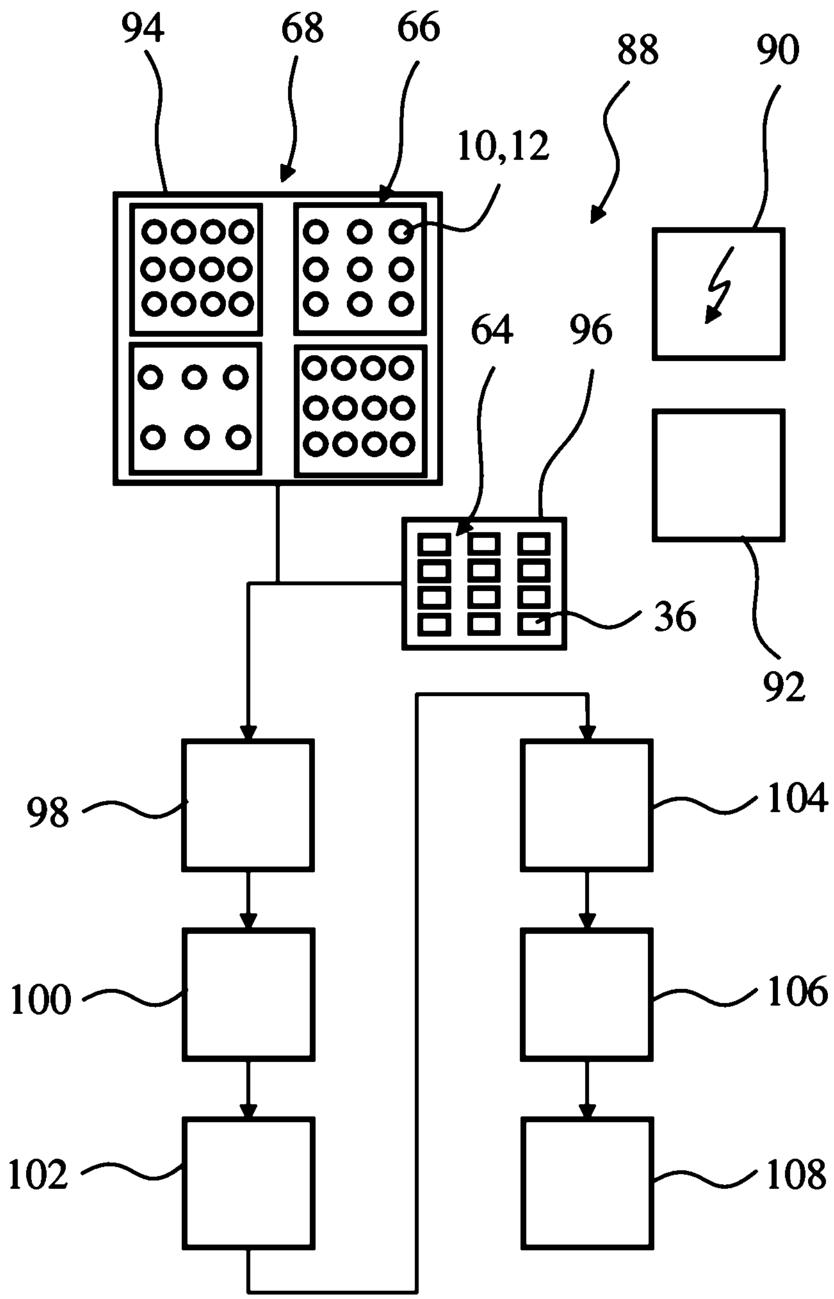

FIG.12

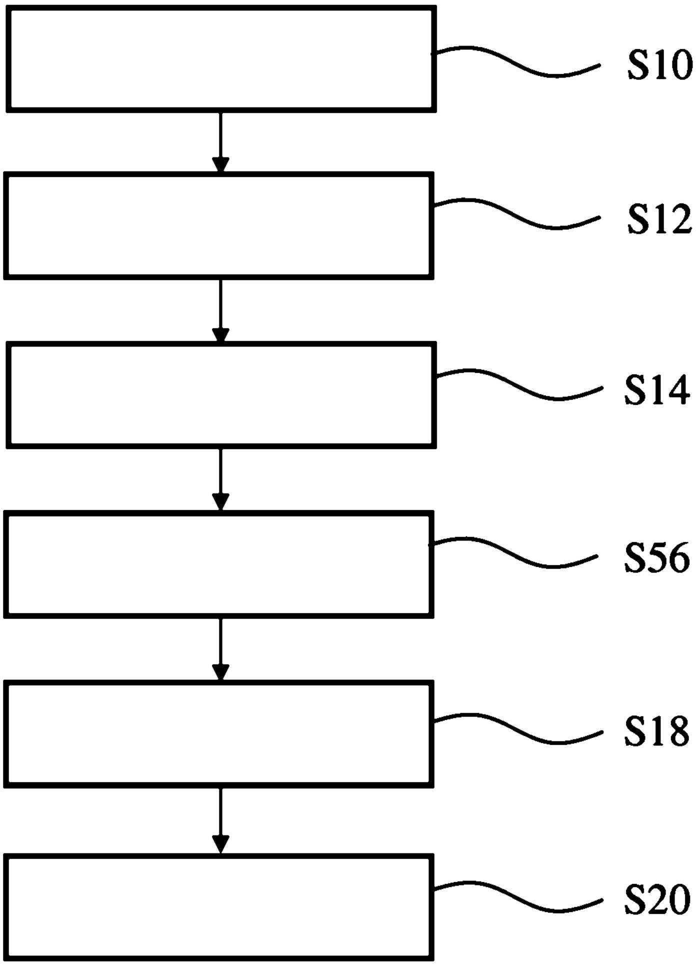


FIG.13

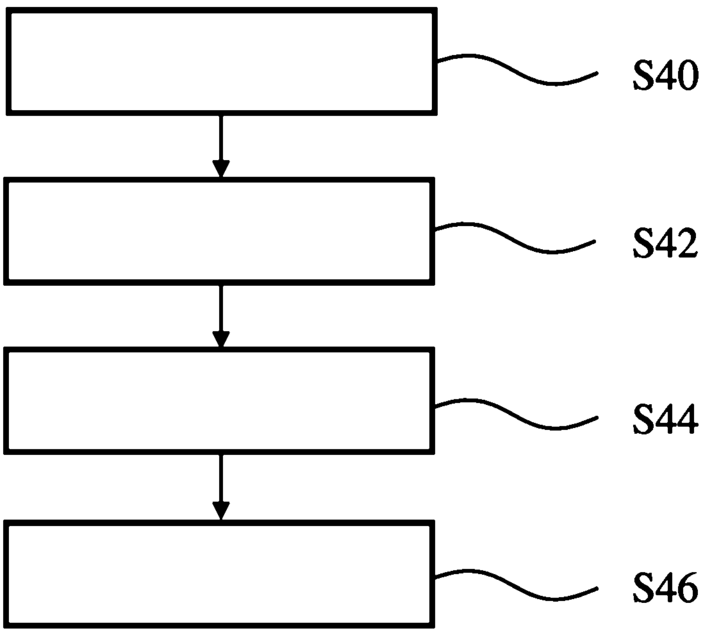

FIG.14

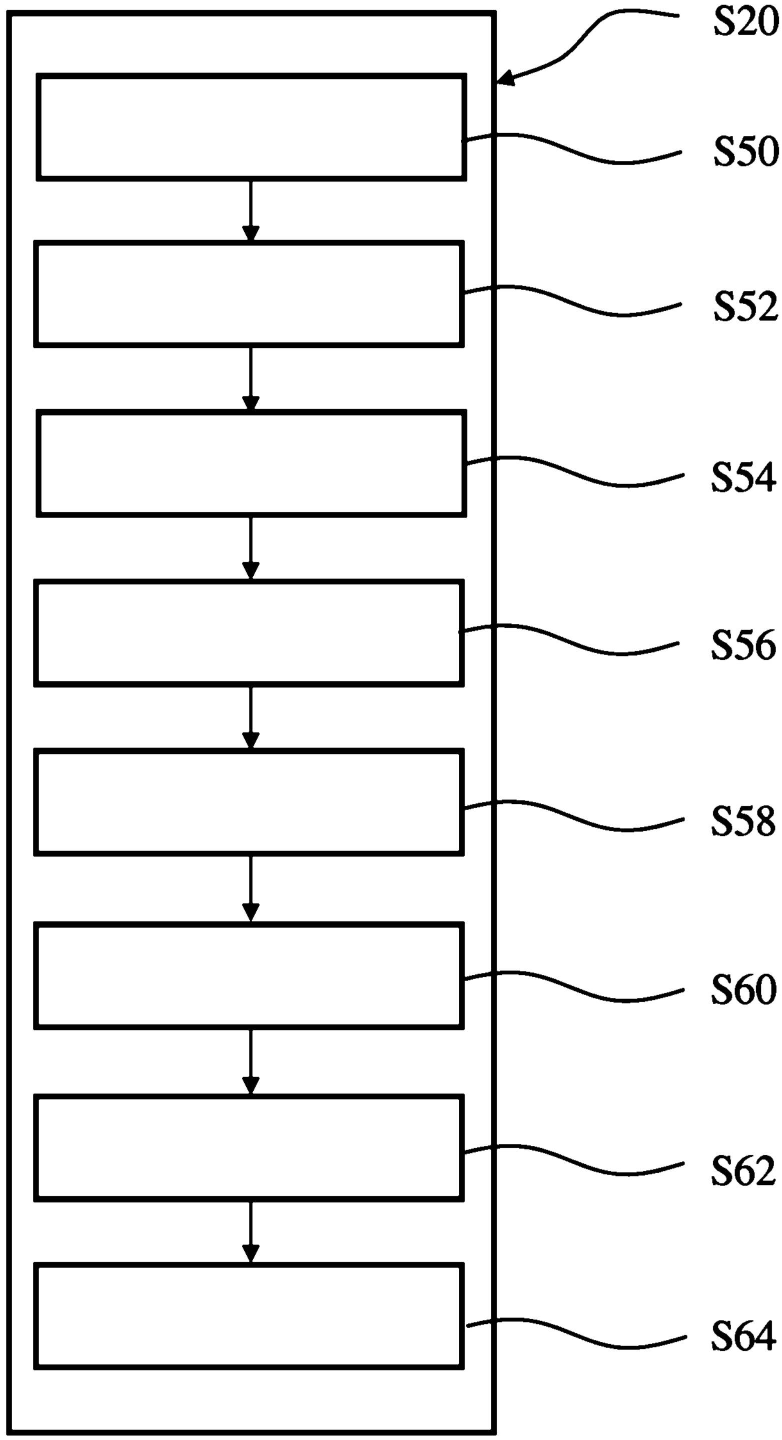

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2692941 A1
- DE 3007572 C2
- US 6103148 A
- JP 2008191186 A
- EP 0955147 A1
- EP 0857993 A2
- WO 2004019243 A1
- EP 2028527 B1
- US 6948816 B
- DE 19538274 A1
- WO 2005065886 A1
- US 3134208 A
- US 4089102 A
- DE 3924078 A1
- DE 2531134 A1
- JP 3121763 A


### In der Beschreibung aufgeführte Nicht-Patentliteratur


- **HEINZ DIEPES ; ROLF BLENDOWSKE.** Optik und Technik der Brille. Optische Fachveröffentlichung GmbH, 2002, 560
- **SHAMIR.** *Shamir Quick Reference Guide,* 06. Dezember 2013, 1-5